# EUROPEAN PATENT APPLICATION

(11) **EP 4 632 546 A1**
(43) Date of publication of application: **15.10.2025**
(21) Application number: 25168970.9
(22) Date of filing: 07.04.2025
(51) Int. Cl.: G06F 3/04817, G06F 3/0482, G06F 3/04883, G06F 3/04886

(54) **DYNAMICALLY GENERATED CONTENT USER INTERFACES**

(30) Priority: 08.04.2024 US 202463631243 P; 13.05.2024 US 202463646715 P; 06.06.2024 US 202463657062 P; 12.07.2024 US 202463670659 P; 28.02.2025 US 202519067765
(71) Applicant: Apple Inc., Cupertino, CA 95014 (US)
(72) Inventor: ZUMBRUNNEN, Adrian, Cupertino, 95014 (US); BAUER, German W., Cupertino, 95014 (US); EDWARDS, Dylan R., Cupertino, 95014 (US); GARCIA III, Robert, Cupertino, 95014 (US); LEMAY, Stephen O., Cupertino, 95014 (US); MANZARI, Johnnie B., Cupertino, 95014 (US); PAUL, Grant R., Cupertino, 95014 (US); VINNAKOTA, Vidya, Cupertino, 95014 (US)
(74) Representative: Barton, Russell Glen

(57) **Abstract**

The present disclosure generally relates to devices and user interfaces for generating content and/or providing dynamically generated content.

## Description

### CROSS-REFERENCE TO RELATED APPLICATION

This application relates to U.S. Provisional Patent Application Serial No. 63/631,243, entitled "DYNAMICALLY GENERATED CONTENT USER INTERFACES," filed on April 8, 2024, and to U.S. Provisional Patent Application Serial No. 63/646,715, entitled "DYNAMICALLY GENERATED CONTENT USER INTERFACES," filed on May 13, 2024. The contents of each of which are hereby incorporated by reference in their entirety.

### FIELD

The present disclosure relates generally to computer user interfaces, and more specifically to techniques and user interfaces for generating content and/or providing dynamically generated content.

### BACKGROUND

Electronic devices can display various types of content and can be used to generate new content.

### BRIEF SUMMARY

Some techniques for generating content and/or providing dynamically generated content using electronic devices, however, are generally cumbersome and inefficient. For example, some existing techniques use a complex and time-consuming user interface, which may include multiple key presses or keystrokes. Existing techniques require more time than necessary, wasting user time and device energy. This latter consideration is particularly important in battery-operated devices.

Accordingly, the present technique provides electronic devices with faster, more efficient methods and interfaces for generating content and/or providing dynamically generated content. Such methods and interfaces optionally complement or replace other methods for generating content and/or providing dynamically generated content. Such methods and interfaces reduce the cognitive burden on a user and produce a more efficient human-machine interface. For battery-operated computing devices, such methods and interfaces conserve power and increase the time between battery charges.

In accordance with some embodiments, a method is described. The method is performed at a computer system that is in communication with one or more display generation components and one or more input devices. The method comprises: receiving, via the one or more input devices, a first user input; and in response to receiving the first user input: in accordance with a determination that generative emoji criteria are not met, displaying, via the one or more display generation components, a first set of preexisting emojis selected from a set of preexisting emojis based on the first user input; and in accordance with a determination that the generative emoji criteria are met, displaying, via the one or more display generation components, a first set of dynamically generated emojis that are generated in response to the first user input.

In accordance with some embodiments, a non-transitory computer-readable storage medium is described. The non-transitory computer-readable storage medium stores one or more programs configured to be executed by one or more processors of a computer system that is in communication with one or more display generation components and one or more input devices. The one or more programs include instructions for: receiving, via the one or more input devices, a first user input; and in response to receiving the first user input: in accordance with a determination that generative emoji criteria are not met, displaying, via the one or more display generation components, a first set of preexisting emojis selected from a set of preexisting emojis based on the first user input; and in accordance with a determination that the generative emoji criteria are met, displaying, via the one or more display generation components, a first set of dynamically generated emojis that are generated in response to the first user input.

In accordance with some embodiments, a transitory computer-readable storage medium is described. The transitory computer-readable storage medium stores one or more programs configured to be executed by one or more processors of a computer system that is in communication with one or more display generation components and one or more input devices. The one or more programs include instructions for: receiving, via the one or more input devices, a first user input; and in response to receiving the first user input: in accordance with a determination that generative emoji criteria are not met, displaying, via the one or more display generation components, a first set of preexisting emojis selected from a set of preexisting emojis based on the first user input; and in accordance with a determination that the generative emoji criteria are met, displaying, via the one or more display generation components, a first set of dynamically generated emojis that are generated in response to the first user input.

In accordance with some embodiments, a computer system is described. The computer system is configured to communicate with one or more display generation components and one or more input devices, and comprises: one or more processors; and memory storing one or more programs configured to be executed by the one or more processors, the one or more programs including instructions for: receiving, via the one or more input devices, a first user input; and in response to receiving the first user input: in accordance with a determination that generative emoji criteria are not met, displaying, via the one or more display generation components, a first set of preexisting emojis selected from a set of preexisting emojis based on the first user input; and in accordance with a determination that the generative emoji criteria are met, displaying, via the one or more display generation components, a first set of dynamically generated emojis that are generated in response to the first user input.

In accordance with some embodiments, a computer system is described. The computer system is configured to communicate with one or more display generation components and one or more input devices, and comprises: means for receiving, via the one or more input devices, a first user input; and means for, in response to receiving the first user input: in accordance with a determination that generative emoji criteria are not met, displaying, via the one or more display generation components, a first set of preexisting emojis selected from a set of preexisting emojis based on the first user input; and in accordance with a determination that the generative emoji criteria are met, displaying, via the one or more display generation components, a first set of dynamically generated emojis that are generated in response to the first user input.

In accordance with some embodiments, a computer program product is described. The computer program product comprises one or more programs configured to be executed by one or more processors of a computer system that is in communication with one or more display generation components and one or more input devices. The one or more programs include instructions for: receiving, via the one or more input devices, a first user input; and in response to receiving the first user input: in accordance with a determination that generative emoji criteria are not met, displaying, via the one or more display generation components, a first set of preexisting emojis selected from a set of preexisting emojis based on the first user input; and in accordance with a determination that the generative emoji criteria are met, displaying, via the one or more display generation components, a first set of dynamically generated emojis that are generated in response to the first user input.

In accordance with some embodiments, a method is described. The method is performed at a computer system that is in communication with one or more display generation components and one or more input devices. The method comprises: receiving, via the one or more input devices, a first user input; in response to receiving the first user input, displaying, via the one or more display generation components, a first set of dynamically generated emojis that are generated in response to the first user input, including a first dynamically generated emoji that is generated in response to the first user input; while displaying the first set of dynamically generated emojis including the first dynamically generated emoji, receiving, via the one or more input devices, a second user input corresponding to selection of the first dynamically generated emoji; in response to receiving the second user input corresponding to selection of the first dynamically generated emoji, causing the first dynamically generated emoji to be added to an emoji selection user interface that comprises a plurality of emojis for selection by a user; subsequent to receiving the second user input corresponding to selection of the first dynamically generated emoji, receiving, via the one or more input devices, a third user input corresponding to a user request to display the emoji selection user interface; and in response to receiving the third user input, displaying, via the one or more display generation components, the emoji selection user interface, wherein: the emoji selection user interface displays a plurality of non-dynamically generated emojis that were saved to the computer system and displayed in the emoji selection user interface prior to receiving the second user input in a first region of the emoji selection user interface, including a first preexisting emoji and a second preexisting emoji different from the first preexisting emoji; and the emoji selection user interface displays one or more dynamically generated emojis, including the first dynamically generated emoji, in a second region of the emoji selection user interface different from the first region, wherein the first dynamically generated emoji is displayed in the second region of the emoji selection user interface based on the second user input.

In accordance with some embodiments, a non-transitory computer-readable storage medium is described. The non-transitory computer-readable storage medium stores one or more programs configured to be executed by one or more processors of a computer system that is in communication with one or more display generation components and one or more input devices. The one or more programs include instructions for: receiving, via the one or more input devices, a first user input; in response to receiving the first user input, displaying, via the one or more display generation components, a first set of dynamically generated emojis that are generated in response to the first user input, including a first dynamically generated emoji that is generated in response to the first user input; while displaying the first set of dynamically generated emojis including the first dynamically generated emoji, receiving, via the one or more input devices, a second user input corresponding to selection of the first dynamically generated emoji; in response to receiving the second user input corresponding to selection of the first dynamically generated emoji, causing the first dynamically generated emoji to be added to an emoji selection user interface that comprises a plurality of emojis for selection by a user; subsequent to receiving the second user input corresponding to selection of the first dynamically generated emoji, receiving, via the one or more input devices, a third user input corresponding to a user request to display the emoji selection user interface; and in response to receiving the third user input, displaying, via the one or more display generation components, the emoji selection user interface, wherein: the emoji selection user interface displays a plurality of non-dynamically generated emojis that were saved to the computer system and displayed in the emoji selection user interface prior to receiving the second user input in a first region of the emoji selection user interface, including a first preexisting emoji and a second preexisting emoji different from the first preexisting emoji; and the emoji selection user interface displays one or more dynamically generated emojis, including the first dynamically generated emoji, in a second region of the emoji selection user interface different from the first region, wherein the first dynamically generated emoji is displayed in the second region of the emoji selection user interface based on the second user input.

In accordance with some embodiments, a transitory computer-readable storage medium is described. The transitory computer-readable storage medium stores one or more programs configured to be executed by one or more processors of a computer system that is in communication with one or more display generation components and one or more input devices. The one or more programs include instructions for: receiving, via the one or more input devices, a first user input; in response to receiving the first user input, displaying, via the one or more display generation components, a first set of dynamically generated emojis that are generated in response to the first user input, including a first dynamically generated emoji that is generated in response to the first user input; while displaying the first set of dynamically generated emojis including the first dynamically generated emoji, receiving, via the one or more input devices, a second user input corresponding to selection of the first dynamically generated emoji; in response to receiving the second user input corresponding to selection of the first dynamically generated emoji, causing the first dynamically generated emoji to be added to an emoji selection user interface that comprises a plurality of emojis for selection by a user; subsequent to receiving the second user input corresponding to selection of the first dynamically generated emoji, receiving, via the one or more input devices, a third user input corresponding to a user request to display the emoji selection user interface; and in response to receiving the third user input, displaying, via the one or more display generation components, the emoji selection user interface, wherein: the emoji selection user interface displays a plurality of non-dynamically generated emojis that were saved to the computer system and displayed in the emoji selection user interface prior to receiving the second user input in a first region of the emoji selection user interface, including a first preexisting emoji and a second preexisting emoji different from the first preexisting emoji; and the emoji selection user interface displays one or more dynamically generated emojis, including the first dynamically generated emoji, in a second region of the emoji selection user interface different from the first region, wherein the first dynamically generated emoji is displayed in the second region of the emoji selection user interface based on the second user input.

In accordance with some embodiments, a computer system is described. The computer system is configured to communicate with one or more display generation components and one or more input devices, and comprises: one or more processors; and memory storing one or more programs configured to be executed by the one or more processors, the one or more programs including instructions for: receiving, via the one or more input devices, a first user input; in response to receiving the first user input, displaying, via the one or more display generation components, a first set of dynamically generated emojis that are generated in response to the first user input, including a first dynamically generated emoji that is generated in response to the first user input; while displaying the first set of dynamically generated emojis including the first dynamically generated emoji, receiving, via the one or more input devices, a second user input corresponding to selection of the first dynamically generated emoji; in response to receiving the second user input corresponding to selection of the first dynamically generated emoji, causing the first dynamically generated emoji to be added to an emoji selection user interface that comprises a plurality of emojis for selection by a user; subsequent to receiving the second user input corresponding to selection of the first dynamically generated emoji, receiving, via the one or more input devices, a third user input corresponding to a user request to display the emoji selection user interface; and in response to receiving the third user input, displaying, via the one or more display generation components, the emoji selection user interface, wherein: the emoji selection user interface displays a plurality of non-dynamically generated emojis that were saved to the computer system and displayed in the emoji selection user interface prior to receiving the second user input in a first region of the emoji selection user interface, including a first preexisting emoji and a second preexisting emoji different from the first preexisting emoji; and the emoji selection user interface displays one or more dynamically generated emojis, including the first dynamically generated emoji, in a second region of the emoji selection user interface different from the first region, wherein the first dynamically generated emoji is displayed in the second region of the emoji selection user interface based on the second user input.

In accordance with some embodiments, a computer system is described. The computer system is configured to communicate with one or more display generation components and one or more input devices, and comprises: means for receiving, via the one or more input devices, a first user input; means for, in response to receiving the first user input, displaying, via the one or more display generation components, a first set of dynamically generated emojis that are generated in response to the first user input, including a first dynamically generated emoji that is generated in response to the first user input; means for, while displaying the first set of dynamically generated emojis including the first dynamically generated emoji, receiving, via the one or more input devices, a second user input corresponding to selection of the first dynamically generated emoji; means for, in response to receiving the second user input corresponding to selection of the first dynamically generated emoji, causing the first dynamically generated emoji to be added to an emoji selection user interface that comprises a plurality of emojis for selection by a user; means for, subsequent to receiving the second user input corresponding to selection of the first dynamically generated emoji, receiving, via the one or more input devices, a third user input corresponding to a user request to display the emoji selection user interface; and means for, in response to receiving the third user input, displaying, via the one or more display generation components, the emoji selection user interface, wherein: the emoji selection user interface displays a plurality of non-dynamically generated emojis that were saved to the computer system and displayed in the emoji selection user interface prior to receiving the second user input in a first region of the emoji selection user interface, including a first preexisting emoji and a second preexisting emoji different from the first preexisting emoji; and the emoji selection user interface displays one or more dynamically generated emojis, including the first dynamically generated emoji, in a second region of the emoji selection user interface different from the first region, wherein the first dynamically generated emoji is displayed in the second region of the emoji selection user interface based on the second user input.

In accordance with some embodiments, a computer program product is described. The computer program product comprises one or more programs configured to be executed by one or more processors of a computer system that is in communication with one or more display generation components and one or more input devices. The one or more programs include instructions for: receiving, via the one or more input devices, a first user input; in response to receiving the first user input, displaying, via the one or more display generation components, a first set of dynamically generated emojis that are generated in response to the first user input, including a first dynamically generated emoji that is generated in response to the first user input; while displaying the first set of dynamically generated emojis including the first dynamically generated emoji, receiving, via the one or more input devices, a second user input corresponding to selection of the first dynamically generated emoji; in response to receiving the second user input corresponding to selection of the first dynamically generated emoji, causing the first dynamically generated emoji to be added to an emoji selection user interface that comprises a plurality of emojis for selection by a user; subsequent to receiving the second user input corresponding to selection of the first dynamically generated emoji, receiving, via the one or more input devices, a third user input corresponding to a user request to display the emoji selection user interface; and in response to receiving the third user input, displaying, via the one or more display generation components, the emoji selection user interface, wherein: the emoji selection user interface displays a plurality of non-dynamically generated emojis that were saved to the computer system and displayed in the emoji selection user interface prior to receiving the second user input in a first region of the emoji selection user interface, including a first preexisting emoji and a second preexisting emoji different from the first preexisting emoji; and the emoji selection user interface displays one or more dynamically generated emojis, including the first dynamically generated emoji, in a second region of the emoji selection user interface different from the first region, wherein the first dynamically generated emoji is displayed in the second region of the emoji selection user interface based on the second user input.

In accordance with some embodiments, a method is described. The method is performed at a computer system that is in communication with one or more display generation components and one or more input devices. The method comprises: receiving, via the one or more input devices, a first user input, wherein the first user input includes a first description and identification of a first person; and in response to receiving the first user input: in accordance with a determination that first criteria are met, displaying, via the one or more display generation components, a first dynamically generated emoji that is generated in response to the first user input and based on the first description and the identification of the first person.

In accordance with some embodiments, a non-transitory computer-readable storage medium is described. The non-transitory computer-readable storage medium stores one or more programs configured to be executed by one or more processors of a computer system that is in communication with one or more display generation components and one or more input devices. The one or more programs include instructions for: receiving, via the one or more input devices, a first user input, wherein the first user input includes a first description and identification of a first person; and in response to receiving the first user input: in accordance with a determination that first criteria are met, displaying, via the one or more display generation components, a first dynamically generated emoji that is generated in response to the first user input and based on the first description and the identification of the first person.

In accordance with some embodiments, a transitory computer-readable storage medium is described. The transitory computer-readable storage medium stores one or more programs configured to be executed by one or more processors of a computer system that is in communication with one or more display generation components and one or more input devices. The one or more programs include instructions for: receiving, via the one or more input devices, a first user input, wherein the first user input includes a first description and identification of a first person; and in response to receiving the first user input: in accordance with a determination that first criteria are met, displaying, via the one or more display generation components, a first dynamically generated emoji that is generated in response to the first user input and based on the first description and the identification of the first person.

In accordance with some embodiments, a computer system is described. The computer system is configured to communicate with one or more display generation components and one or more input devices, and comprises: one or more processors; and memory storing one or more programs configured to be executed by the one or more processors, the one or more programs including instructions for: receiving, via the one or more input devices, a first user input, wherein the first user input includes a first description and identification of a first person; and in response to receiving the first user input: in accordance with a determination that first criteria are met, displaying, via the one or more display generation components, a first dynamically generated emoji that is generated in response to the first user input and based on the first description and the identification of the first person.

In accordance with some embodiments, a computer system is described. The computer system is configured to communicate with one or more display generation components and one or more input devices, and comprises: means for receiving, via the one or more input devices, a first user input, wherein the first user input includes a first description and identification of a first person; and means for, in response to receiving the first user input: in accordance with a determination that first criteria are met, displaying, via the one or more display generation components, a first dynamically generated emoji that is generated in response to the first user input and based on the first description and the identification of the first person.

In accordance with some embodiments, a computer program product is described. The computer program product comprises one or more programs configured to be executed by one or more processors of a computer system that is in communication with one or more display generation components and one or more input devices. The one or more programs include instructions for: receiving, via the one or more input devices, a first user input, wherein the first user input includes a first description and identification of a first person; and in response to receiving the first user input: in accordance with a determination that first criteria are met, displaying, via the one or more display generation components, a first dynamically generated emoji that is generated in response to the first user input and based on the first description and the identification of the first person.

In accordance with some embodiments, a method is described. The method is performed at a computer system that is in communication with one or more display generation components and one or more input devices. The method comprises: receiving, via the one or more input devices, a first user input; and in response to receiving the first user input: in accordance with a determination that generative emoji criteria are not met, displaying, via the one or more display generation components, a first set of preexisting emojis selected from a set of preexisting emojis based on the first user input; and in accordance with a determination that the generative emoji criteria are met, outputting a first prompt prompting a user of the computer system to generate one or more dynamically generated emojis that are generated based on the first user input.

In accordance with some embodiments, a non-transitory computer-readable storage medium is described. The non-transitory computer-readable storage medium stores one or more programs configured to be executed by one or more processors of a computer system that is in communication with one or more display generation components and one or more input devices. The one or more programs include instructions for: receiving, via the one or more input devices, a first user input; and in response to receiving the first user input: in accordance with a determination that generative emoji criteria are not met, displaying, via the one or more display generation components, a first set of preexisting emojis selected from a set of preexisting emojis based on the first user input; and in accordance with a determination that the generative emoji criteria are met, outputting a first prompt prompting a user of the computer system to generate one or more dynamically generated emojis that are generated based on the first user input.

In accordance with some embodiments, a transitory computer-readable storage medium is described. The transitory computer-readable storage medium stores one or more programs configured to be executed by one or more processors of a computer system that is in communication with one or more display generation components and one or more input devices. The one or more programs include instructions for: receiving, via the one or more input devices, a first user input; and in response to receiving the first user input: in accordance with a determination that generative emoji criteria are not met, displaying, via the one or more display generation components, a first set of preexisting emojis selected from a set of preexisting emojis based on the first user input; and in accordance with a determination that the generative emoji criteria are met, outputting a first prompt prompting a user of the computer system to generate one or more dynamically generated emojis that are generated based on the first user input.

In accordance with some embodiments, a computer system is described. The computer system is configured to communicate with one or more display generation components and one or more input devices, and comprises: one or more processors; and memory storing one or more programs configured to be executed by the one or more processors, the one or more programs including instructions for: receiving, via the one or more input devices, a first user input; and in response to receiving the first user input: in accordance with a determination that generative emoji criteria are not met, displaying, via the one or more display generation components, a first set of preexisting emojis selected from a set of preexisting emojis based on the first user input; and in accordance with a determination that the generative emoji criteria are met, outputting a first prompt prompting a user of the computer system to generate one or more dynamically generated emojis that are generated based on the first user input.

In accordance with some embodiments, a computer system is described. The computer system is configured to communicate with one or more display generation components and one or more input devices, and comprises: means for receiving, via the one or more input devices, a first user input; and means for, in response to receiving the first user input: in accordance with a determination that generative emoji criteria are not met, displaying, via the one or more display generation components, a first set of preexisting emojis selected from a set of preexisting emojis based on the first user input; and in accordance with a determination that the generative emoji criteria are met, outputting a first prompt prompting a user of the computer system to generate one or more dynamically generated emojis that are generated based on the first user input.

In accordance with some embodiments, a computer program product is described. The computer program product comprises one or more programs configured to be executed by one or more processors of a computer system that is in communication with one or more display generation components and one or more input devices. The one or more programs include instructions for: receiving, via the one or more input devices, a first user input; and in response to receiving the first user input: in accordance with a determination that generative emoji criteria are not met, displaying, via the one or more display generation components, a first set of preexisting emojis selected from a set of preexisting emojis based on the first user input; and in accordance with a determination that the generative emoji criteria are met, outputting a first prompt prompting a user of the computer system to generate one or more dynamically generated emojis that are generated based on the first user input.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

Thus, devices are provided with faster, more efficient methods and interfaces for generating content, thereby increasing the effectiveness, efficiency, and user satisfaction with such devices. Such methods and interfaces may complement or replace other methods for generating content.

### DESCRIPTION OF THE FIGURES

For a better understanding of the various described embodiments, reference should be made to the Description of Embodiments below, in conjunction with the following drawings in which like reference numerals refer to corresponding parts throughout the figures.
FIG. 1A is a block diagram illustrating a portable multifunction device with a touch-sensitive display in accordance with some embodiments.
FIG. 1B is a block diagram illustrating exemplary components for event handling in accordance with some embodiments.
FIG. 2 illustrates a portable multifunction device having a touch screen in accordance with some embodiments.
FIG. 3A is a block diagram of an exemplary multifunction device with a display and a touch-sensitive surface in accordance with some embodiments.
FIGS. 3B-3G illustrate the use of Application Programming Interfaces (APIs) to perform operations.
FIG. 4A illustrates an exemplary user interface for a menu of applications on a portable multifunction device in accordance with some embodiments.
FIG. 4B illustrates an exemplary user interface for a multifunction device with a touch-sensitive surface that is separate from the display in accordance with some embodiments.
FIG. 5A illustrates a personal electronic device in accordance with some embodiments.
FIG. 5B is a block diagram illustrating a personal electronic device in accordance with some embodiments.
FIG. 5C illustrates exemplary foundation system 550 including foundation model 560, according to some embodiments.
FIGS. 6A-6AR illustrate exemplary devices and user interfaces for generating content and/or providing dynamically generated content, in accordance with some embodiments.
FIG. 7 is a flow diagram illustrating methods of providing dynamically generated content, in accordance with some embodiments.
FIG. 8 is a flow diagram illustrating methods of providing dynamically generated content, in accordance with some embodiments.
FIG. 9 is a flow diagram illustrating methods of providing dynamically generated content, in accordance with some embodiments.
FIGS. 10A-10R illustrate exemplary devices and user interfaces for generating content and/or providing dynamically generated content, in accordance with some embodiments.
FIG. 11 is a flow diagram illustrating methods of providing dynamically generated content, in accordance with some embodiments.

### DESCRIPTION OF EMBODIMENTS

The following description sets forth exemplary methods, parameters, and the like. It should be recognized, however, that such description is not intended as a limitation on the scope of the present disclosure but is instead provided as a description of exemplary embodiments.

There is a need for electronic devices that provide efficient methods and interfaces for generating content and/or providing generative content. Such techniques can reduce the cognitive burden on a user who is attempting to generate content and/or is looking for generative content, thereby enhancing productivity. Further, such techniques can reduce processor and battery power otherwise wasted on redundant user inputs.

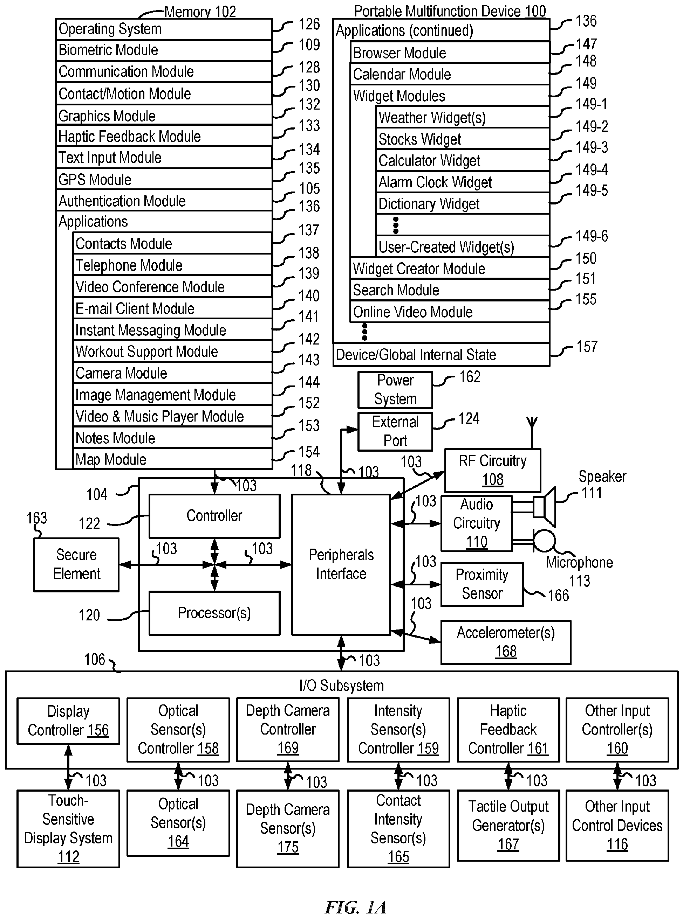

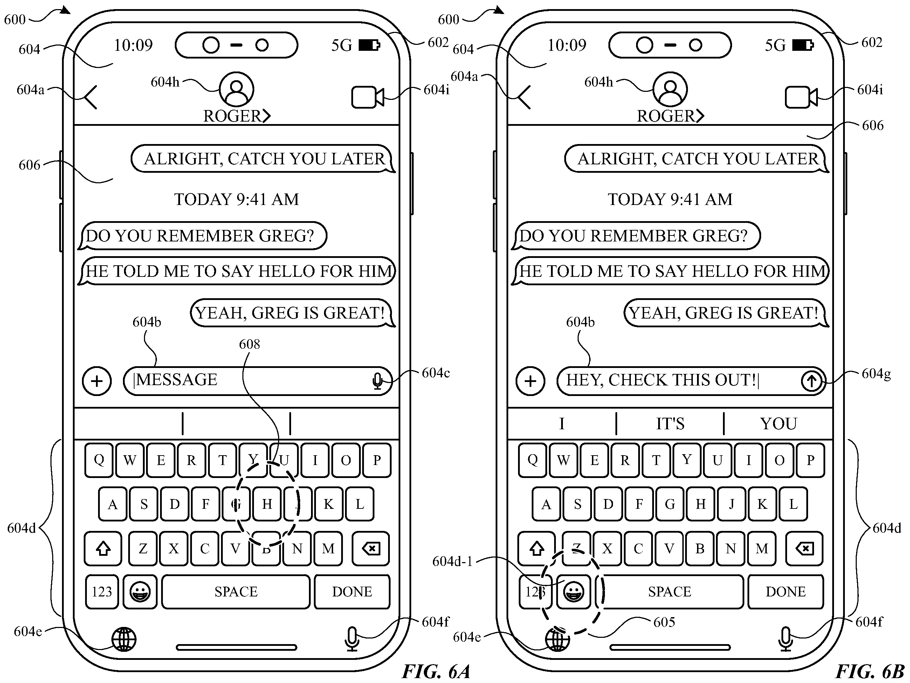

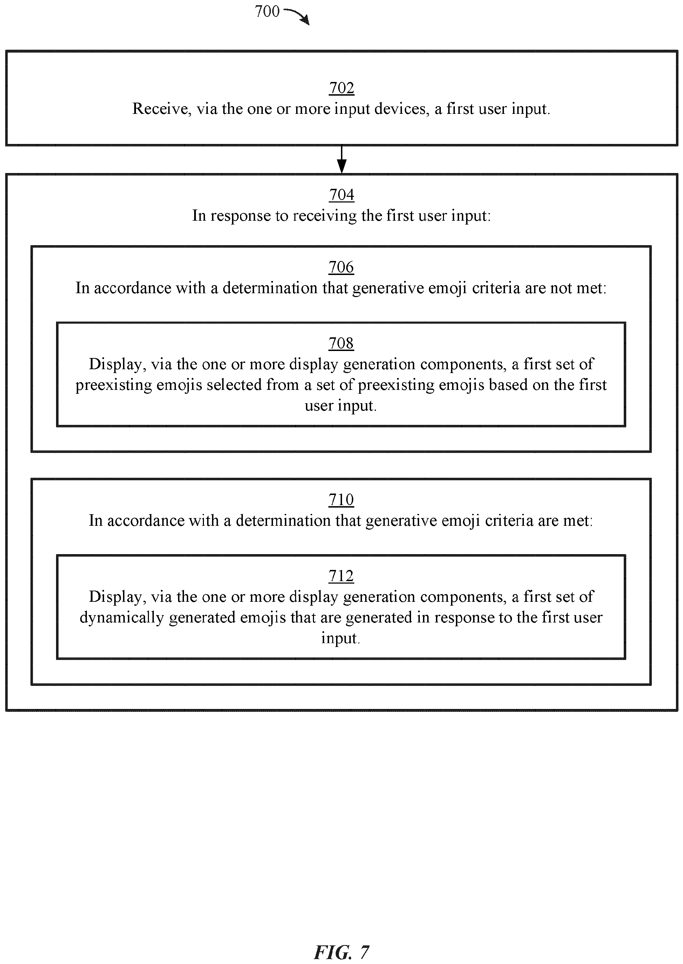

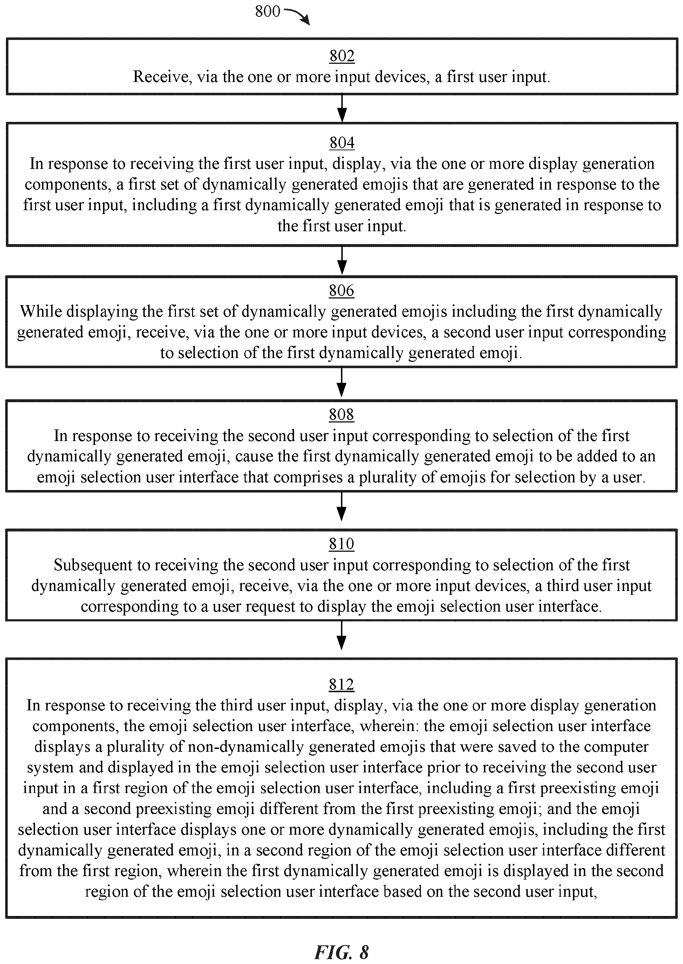

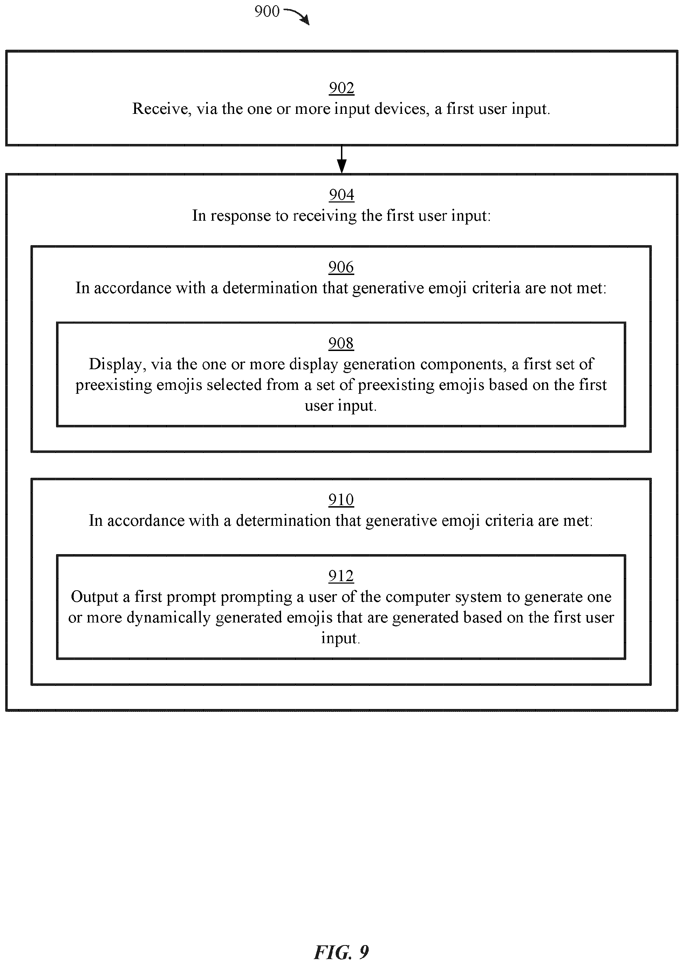

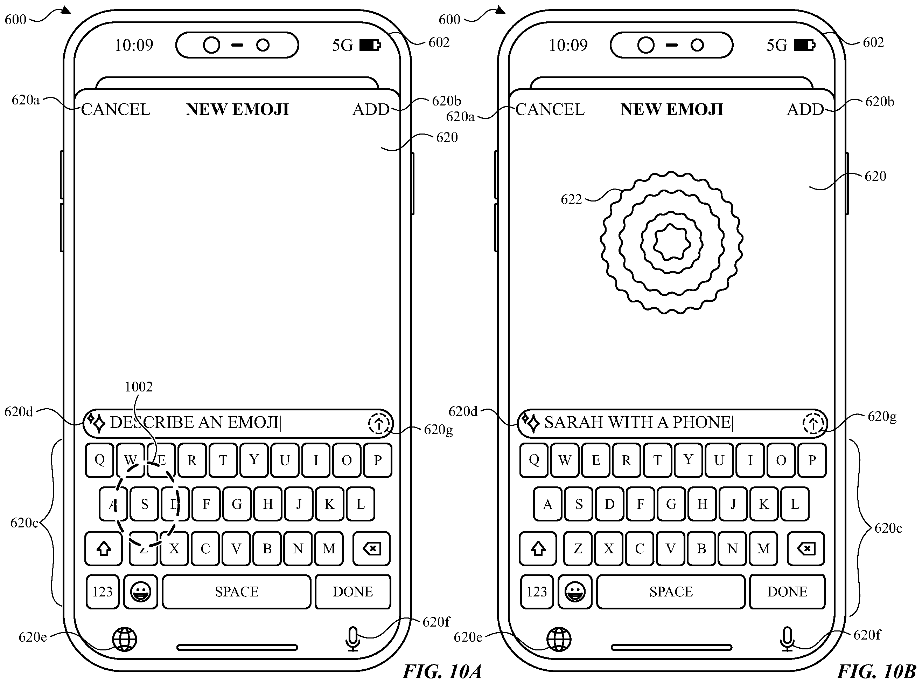

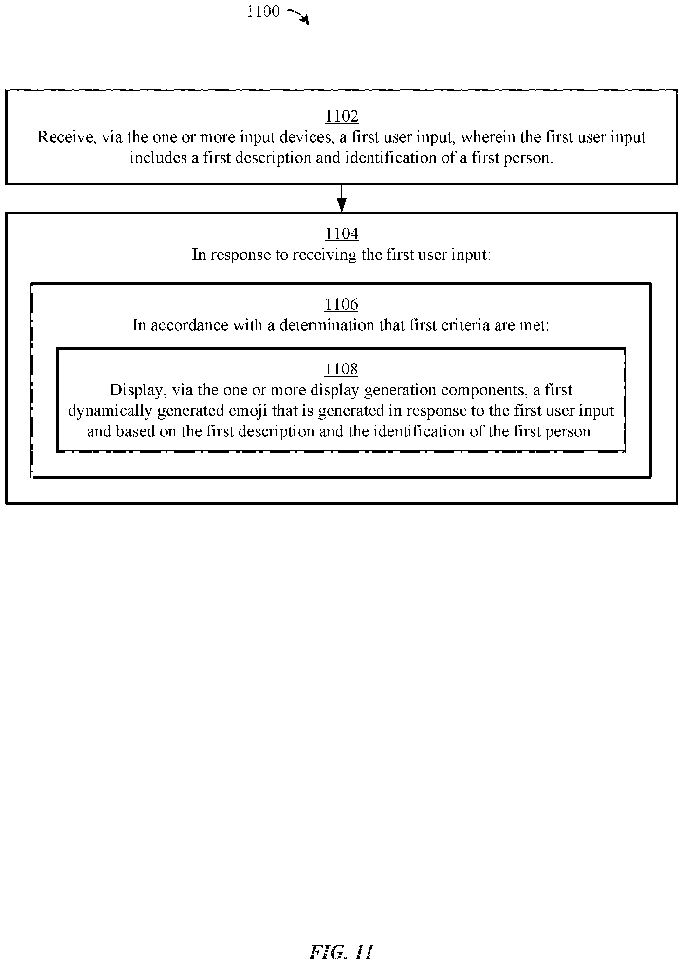

Below, FIGS. 1A-1B, 2, 3A-3G, 4A-4B, and 5A-5B provide a description of exemplary devices for performing the techniques for generating content and/or providing dynamically generated content. FIGS. 6A-6AR illustrate exemplary user interfaces for generating content and/or providing dynamically generated content. FIG. 7 is a flow diagram illustrating methods of providing dynamically generated content in accordance with some embodiments. FIG. 8 is a flow diagram illustrating methods of providing dynamically generated content in accordance with some embodiments. FIG. 9 is a flow diagram illustrating methods of providing dynamically generated content in accordance with some embodiments. The user interfaces in FIGS. 6A-6AR are used to illustrate the processes described below, including the processes in FIG. 7, FIG. 8, and FIG. 9. FIGS. 10A-10R illustrate exemplary user interfaces for generating content and/or providing dynamically generated content. FIG. 11 is a flow diagram illustrating methods of providing dynamically generated content in accordance with some embodiments. The user interfaces in FIGS. 10A-10R are used to illustrate the processes described below, including the processes in FIG. 11.

The processes described below enhance the operability of the devices and make the user-device interfaces more efficient (e.g., by helping the user to provide proper inputs and reducing user mistakes when operating/interacting with the device) through various techniques, including by providing improved visual feedback to the user, reducing the number of inputs needed to perform an operation, providing additional control options without cluttering the user interface with additional displayed controls, performing an operation when a set of conditions has been met without requiring further user input, and/or additional techniques. These techniques also reduce power usage and improve battery life of the device by enabling the user to use the device more quickly and efficiently.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer readable storage medium can repeat the steps of a method as many times as are needed to ensure that all of the contingent steps have been performed.

Although the following description uses terms "first," "second," etc. to describe various elements, these elements should not be limited by the terms. In some embodiments, these terms are used to distinguish one element from another. For example, a first touch could be termed a second touch, and, similarly, a second touch could be termed a first touch, without departing from the scope of the various described embodiments. In some embodiments, the first touch and the second touch are two separate references to the same touch. In some embodiments, the first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad). In some embodiments, the electronic device is a computer system that is in communication (e.g., via wireless communication, via wired communication) with a display generation component (e.g., a display device such as a head-mounted display (HMD), a display, a projector, a touch-sensitive display, or other device or component that presents visual content to a user, for example on or in the display generation component itself or produced from the display generation component and visible elsewhere). The display generation component is configured to provide visual output, such as display via a CRT display, display via an LED display, or display via image projection. In some embodiments, the display generation component is integrated with the computer system. In some embodiments, the display generation component is separate from the computer system. As used herein, "displaying" content includes causing to display the content (e.g., video data rendered or decoded by display controller 156) by transmitting, via a wired or wireless connection, data (e.g., image data or video data) to an integrated or external display generation component to visually produce the content.

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

Attention is now directed toward embodiments of portable devices with touch-sensitive displays. FIG. 1A is a block diagram illustrating portable multifunction device 100 with touch-sensitive display system 112 in accordance with some embodiments. Touch-sensitive display 112 is sometimes called a "touch screen" for convenience and is sometimes known as or called a "touch-sensitive display system." Device 100 includes memory 102 (which optionally includes one or more computer-readable storage mediums), memory controller 122, one or more processing units (CPUs) 120, peripherals interface 118, RF circuitry 108, audio circuitry 110, speaker 111, microphone 113, input/output (I/O) subsystem 106, other input control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in FIG. 1A are implemented in hardware, software, or a combination of both hardware and software, including one or more signal processing and/or application-specific integrated circuits.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs (such as computer programs (e.g., including instructions)) and/or sets of instructions stored in memory 102 to perform various functions for device 100 and to process data. In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

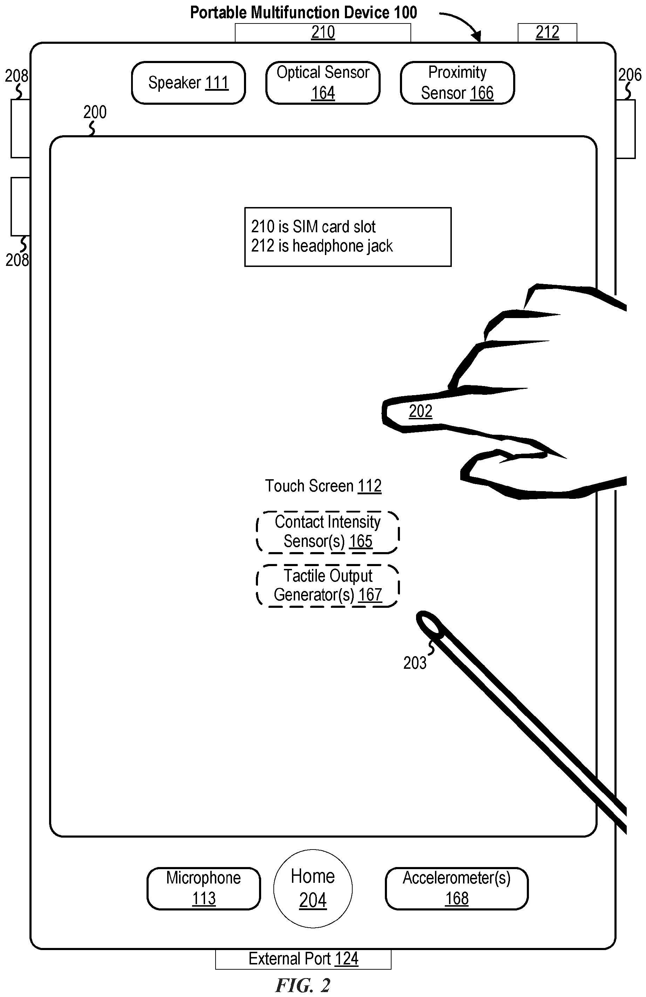

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, FIG. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, depth camera controller 169, intensity sensor controller 159, haptic feedback controller 161, and one or more input controllers 160 for other input or control devices. The one or more input controllers 160 receive/send electrical signals from/to other input control devices 116. The other input control devices 116 optionally include physical buttons (e.g., push buttons, rocker buttons, etc.), dials, slider switches, joysticks, click wheels, and so forth. In some embodiments, input controller(s) 160 are, optionally, coupled to any (or none) of the following: a keyboard, an infrared port, a USB port, and a pointer device such as a mouse. The one or more buttons (e.g., 208, FIG. 2) optionally include an up/down button for volume control of speaker 111 and/or microphone 113. The one or more buttons optionally include a push button (e.g., 206, FIG. 2). In some embodiments, the electronic device is a computer system that is in communication (e.g., via wireless communication, via wired communication) with one or more input devices. In some embodiments, the one or more input devices include a touch-sensitive surface (e.g., a trackpad, as part of a touch-sensitive display). In some embodiments, the one or more input devices include one or more camera sensors (e.g., one or more optical sensors 164 and/or one or more depth camera sensors 175), such as for tracking a user's gestures (e.g., hand gestures and/or air gestures) as input. In some embodiments, the one or more input devices are integrated with the computer system. In some embodiments, the one or more input devices are separate from the computer system. In some embodiments, an air gesture is a gesture that is detected without the user touching an input element that is part of the device (or independently of an input element that is a part of the device) and is based on detected motion of a portion of the user's body through the air including motion of the user's body relative to an absolute reference (e.g., an angle of the user's arm relative to the ground or a distance of the user's hand relative to the ground), relative to another portion of the user's body (e.g., movement of a hand of the user relative to a shoulder of the user, movement of one hand of the user relative to another hand of the user, and/or movement of a finger of the user relative to another finger or portion of a hand of the user), and/or absolute motion of a portion of the user's body (e.g., a tap gesture that includes movement of a hand in a predetermined pose by a predetermined amount and/or speed, or a shake gesture that includes a predetermined speed or amount of rotation of a portion of the user's body).

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849, which is hereby incorporated by reference in its entirety. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output optionally corresponds to user-interface objects.

Touch screen 112 has a touch-sensitive surface, sensor, or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages, or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1, each of which is hereby incorporated by reference in its entirety. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006. All of these applications are incorporated by reference herein in their entirety.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes secure element 163 for securely storing information. In some embodiments, secure element 163 is a hardware component (e.g., a secure microcontroller chip) configured to securely store data or an algorithm. In some embodiments, secure element 163 provides (e.g., releases) secure information (e.g., payment information (e.g., an account number and/or a transaction-specific dynamic security code), identification information (e.g., credentials of a state-approved digital identification), and/or authentication information (e.g., data generated using a cryptography engine and/or by performing asymmetric cryptography operations)). In some embodiments, secure element 163 provides (or releases) the secure information in response to device 100 receiving authorization, such as a user authentication (e.g., fingerprint authentication; passcode authentication; detecting double-press of a hardware button when device 100 is in an unlocked state, and optionally, while device 100 has been continuously on a user's wrist since device 100 was unlocked by providing authentication credentials to device 100, where the continuous presence of device 100 on the user's wrist is determined by periodically checking that the device is in contact with the user's skin). For example, device 100 detects a fingerprint at a fingerprint sensor (e.g., a fingerprint sensor integrated into a button) of device 100. Device 100 determines whether the detected fingerprint is consistent with an enrolled fingerprint. In accordance with a determination that the fingerprint is consistent with the enrolled fingerprint, secure element 163 provides (e.g., releases) the secure information. In accordance with a determination that the fingerprint is not consistent with the enrolled fingerprint, secure element 163 forgoes providing (e.g., releasing) the secure information.

Device 100 optionally also includes one or more optical sensors 164. FIG. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more depth camera sensors 175. FIG. 1A shows a depth camera sensor coupled to depth camera controller 169 in I/O subsystem 106. Depth camera sensor 175 receives data from the environment to create a three dimensional model of an object (e.g., a face) within a scene from a viewpoint (e.g., a depth camera sensor). In some embodiments, in conjunction with imaging module 143 (also called a camera module), depth camera sensor 175 is optionally used to determine a depth map of different portions of an image captured by the imaging module 143. In some embodiments, a depth camera sensor is located on the front of device 100 so that the user's image with depth information is, optionally, obtained for video conferencing while the user views the other video conference participants on the touch screen display and to capture selfies with depth map data. In some embodiments, the depth camera sensor 175 is located on the back of device, or on the back and the front of the device 100. In some embodiments, the position of depth camera sensor 175 can be changed by the user (e.g., by rotating the lens and the sensor in the device housing) so that a depth camera sensor 175 is used along with the touch screen display for both video conferencing and still and/or video image acquisition.

Device 100 optionally also includes one or more contact intensity sensors 165. FIG. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112, which is located on the front of device 100.

Device 100 optionally also includes one or more proximity sensors 166. FIG. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals," which are hereby incorporated by reference in their entirety. In some embodiments, the proximity sensor turns off and disables touch screen 112 when the multifunction device is placed near the user's ear (e.g., when the user is making a phone call).

Device 100 optionally also includes one or more tactile output generators 167. FIG. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112, which is located on the front of device 100.

Device 100 optionally also includes one or more accelerometers 168. FIG. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer," both of which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer and a GPS (or GLONASS or other global navigation system) receiver for obtaining information concerning the location and orientation (e.g., portrait or landscape) of device 100.

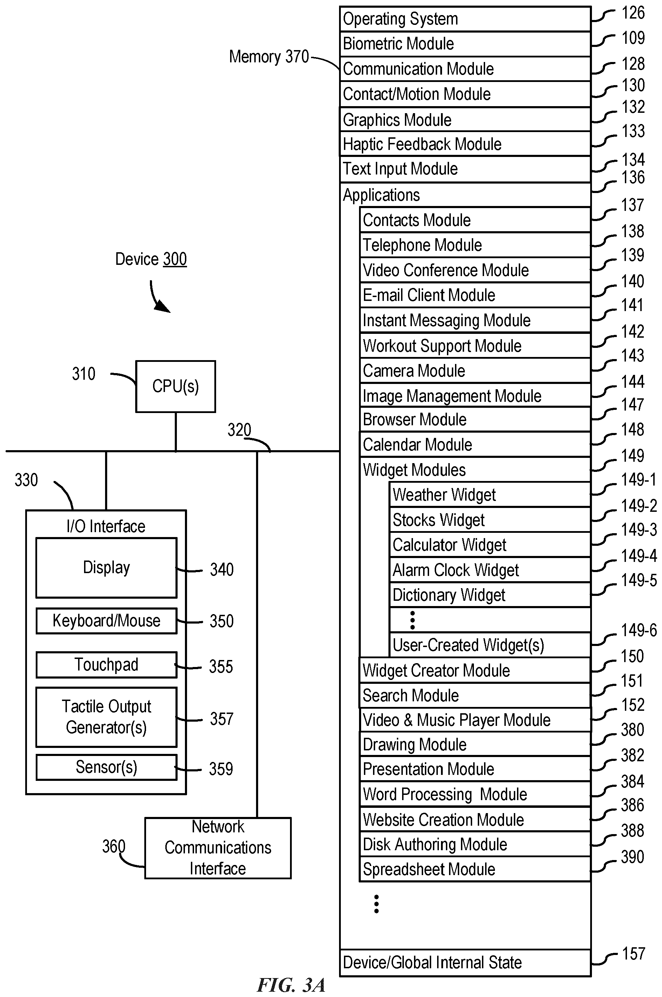

In some embodiments, the software components stored in memory 102 include operating system 126, biometric module 109, communication module (or set of instructions) 128, contact/motion module (or set of instructions) 130, graphics module (or set of instructions) 132, text input module (or set of instructions) 134, Global Positioning System (GPS) module (or set of instructions) 135, authentication module 105, and applications (or sets of instructions) 136. Furthermore, in some embodiments, memory 102 (FIG. 1A) or 370 (FIG. 3A) stores device/global internal state 157, as shown in FIGS. 1A and 3A. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Biometric module 109 optionally stores information about one or more enrolled biometric features (e.g., fingerprint feature information, facial recognition feature information, eye and/or iris feature information) for use to verify whether received biometric information matches the enrolled biometric features. In some embodiments, the information stored about the one or more enrolled biometric features includes data that enables the comparison between the stored information and received biometric information without including enough information to reproduce the enrolled biometric features. In some embodiments, biometric module 109 stores the information about the enrolled biometric features in association with a user account of device 100. In some embodiments, biometric module 109 compares the received biometric information to an enrolled biometric feature to determine whether the received biometric information matches the enrolled biometric feature.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast, or other visual property) of graphics that are displayed. As used herein, the term "graphics" includes any object that can be displayed to a user, including, without limitation, text, web pages, icons (such as user-interface objects including soft keys), digital images, videos, animations, and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts module 137, e-mail client module 140, IM module 141, browser module 147, and any other application that needs text input).

GPS module 135 determines the location of the device and provides this information for use in various applications (e.g., to telephone module 138 for use in location-based dialing; to camera module 143 as picture/video metadata; and to applications that provide location-based services such as weather widgets, local yellow page widgets, and map/navigation widgets).

Authentication module 105 determines whether a requested operation (e.g., requested by an application of applications 136) is authorized to be performed. In some embodiments, authentication module 105 receives for an operation to be perform that optionally requires authentication. Authentication module 105 determines whether the operation is authorized to be performed, such as based on a series of factors, including the lock status of device 100, the location of device 100, whether a security delay has elapsed, whether received biometric information matches enrolled biometric features, and/or other factors. Once authentication module 105 determines that the operation is authorized to be performed, authentication module 105 triggers performance of the operation.

Applications 136 optionally include the following modules (or sets of instructions), or a subset or superset thereof:
- Contacts module 137 (sometimes called an address book or contact list);
- Telephone module 138;
- Video conference module 139;
- E-mail client module 140;
- Instant messaging (IM) module 141;
- Workout support module 142;
- Camera module 143 for still and/or video images;
- Image management module 144;
- Video player module;
- Music player module;
- Browser module 147;
- Calendar module 148;
- Widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- Widget creator module 150 for making user-created widgets 149-6;
- Search module 151;
- Video and music player module 152, which merges video player module and music player module;
- Notes module 153;
- Map module 154; and/or
- Online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone module 138, video conference module 139, e-mail client module 140, or IM module 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to-do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to-do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007, the contents of which are hereby incorporated by reference in their entirety.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs (such as computer programs (e.g., including instructions)), procedures, or modules, and thus various subsets of these modules are, optionally, combined or otherwise rearranged in various embodiments. For example, video player module is, optionally, combined with music player module into a single module (e.g., video and music player module 152, FIG. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

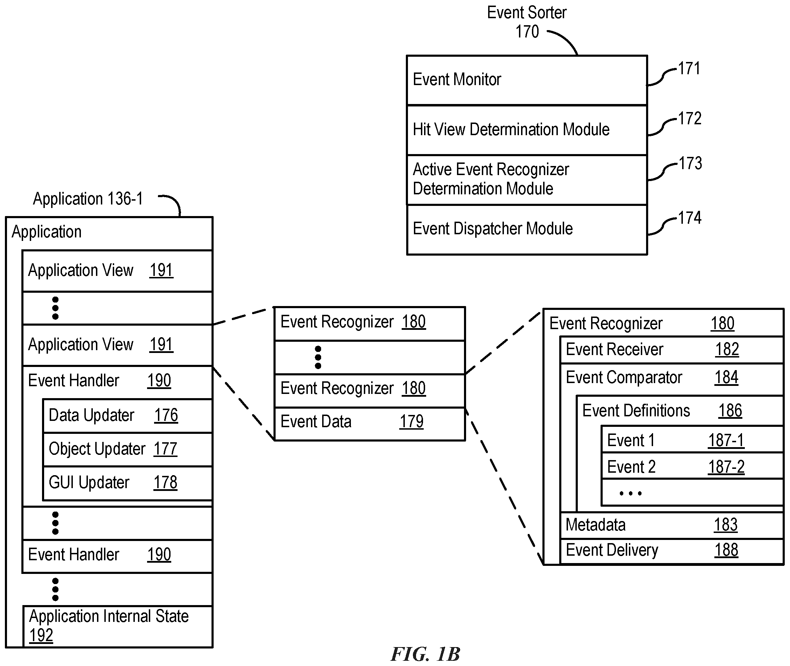

FIG. 1B is a block diagram illustrating exemplary components for event handling in accordance with some embodiments. In some embodiments, memory 102 (FIG. 1A) or 370 (FIG. 3A) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (e.g., 187-1 and/or 187-2) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definitions 186 include a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 2 illustrates a portable multifunction device 100 having a touch screen 112 in accordance with some embodiments. The touch screen optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also include one or more physical buttons, such as "home" or menu button 204. As described previously, menu button 204 is, optionally, used to navigate to any application 136 in a set of applications that are, optionally, executed on device 100. Alternatively, in some embodiments, the menu button is implemented as a soft key in a GUI displayed on touch screen 112.

In some embodiments, device 100 includes touch screen 112, menu button 204, push button 206 for powering the device on/off and locking the device, volume adjustment button(s) 208, subscriber identity module (SIM) card slot 210, headset jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

FIG. 3A is a block diagram of an exemplary multifunction device with a display and a touch-sensitive surface in accordance with some embodiments. Device 300 need not be portable. In some embodiments, device 300 is a laptop computer, a desktop computer, a tablet computer, a multimedia player device, a navigation device, an educational device (such as a child's learning toy), a gaming system, or a control device (e.g., a home or industrial controller). Device 300 typically includes one or more processing units (CPUs) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to FIG. 1A), sensors 359 (e.g., optical, acceleration, proximity, touch-sensitive, and/or contact intensity sensors similar to contact intensity sensor(s) 165 described above with reference to FIG. 1A). Memory 370 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable multifunction device 100 (FIG. 1A), or a subset thereof. Furthermore, memory 370 optionally stores additional programs, modules, and data structures not present in memory 102 of portable multifunction device 100. For example, memory 370 of device 300 optionally stores drawing module 380, presentation module 382, word processing module 384, website creation module 386, disk authoring module 388, and/or spreadsheet module 390, while memory 102 of portable multifunction device 100 (FIG. 1A) optionally does not store these modules.

Each of the above-identified elements in FIG. 3A is, optionally, stored in one or more of the previously mentioned memory devices. Each of the above-identified modules corresponds to a set of instructions for performing a function described above. The above-identified modules or computer programs (e.g., sets of instructions or including instructions) need not be implemented as separate software programs (such as computer programs (e.g., including instructions)), procedures, or modules, and thus various subsets of these modules are, optionally, combined or otherwise rearranged in various embodiments. In some embodiments, memory 370 optionally stores a subset of the modules and data structures identified above. Furthermore, memory 370 optionally stores additional modules and data structures not described above.

Implementations within the scope of the present disclosure can be partially or entirely realized using a tangible computer-readable storage medium (or multiple tangible computer-readable storage media of one or more types) encoding one or more computer-readable instructions. It should be recognized that computer-readable instructions can be organized in any format, including applications, widgets, processes, software, and/or components.

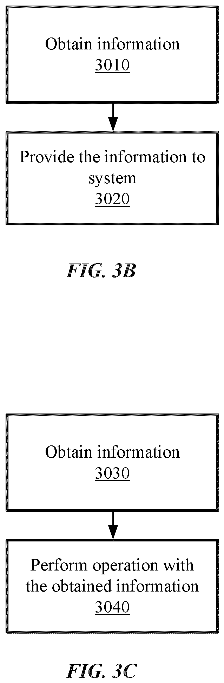

Implementations within the scope of the present disclosure include a computer-readable storage medium that encodes instructions organized as an application (e.g., application 3160) that, when executed by one or more processing units, control an electronic device (e.g., device 3150) to perform the method of FIG. 3B, the method of FIG. 3C, and/or one or more other processes and/or methods described herein.

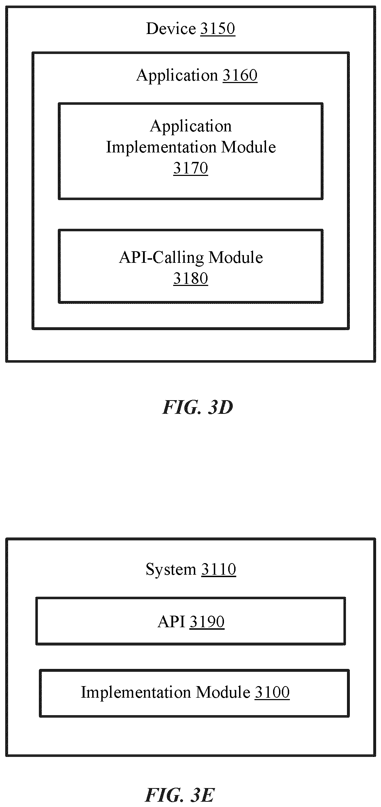

It should be recognized that application 3160 (shown in FIG. 3D) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, application 3160 is an application that is pre-installed on device 3150 at purchase (e.g., a first-party application). In some embodiments, application 3160 is an application that is provided to device 3150 via an operating system update file (e.g., a first-party application or a second-party application). In some embodiments, application 3160 is an application that is provided via an application store. In some embodiments, the application store can be an application store that is pre-installed on device 3150 at purchase (e.g., a first-party application store). In some embodiments, the application store is a third-party application store (e.g., an application store that is provided by another application store, downloaded via a network, and/or read from a storage device).

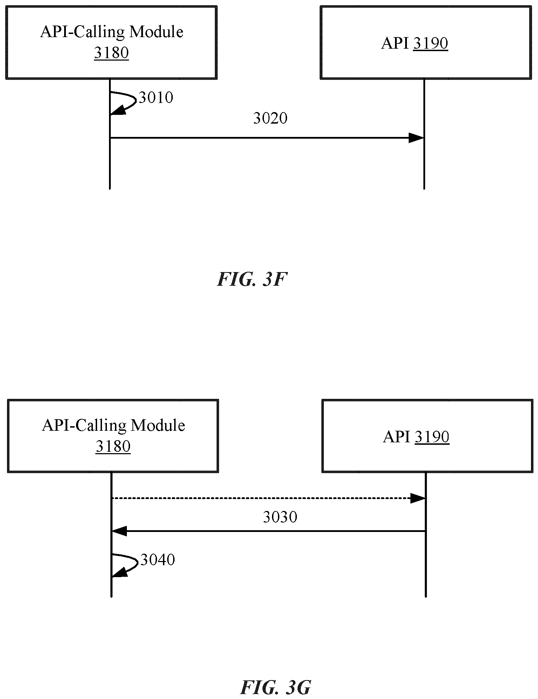

Referring to FIG. 3B and FIG. 3F, application 3160 obtains information (e.g., 3010). In some embodiments, at 3010, information is obtained from at least one hardware component of device 3150. In some embodiments, at 3010, information is obtained from at least one software module of device 3150. In some embodiments, at 3010, information is obtained from at least one hardware component external to device 3150 (e.g., a peripheral device, an accessory device, and/or a server). In some embodiments, the information obtained at 3010 includes positional information, time information, notification information, user information, environment information, electronic device state information, weather information, media information, historical information, event information, hardware information, and/or motion information. In some embodiments, in response to and/or after obtaining the information at 3010, application 3160 provides the information to a system (e.g., 3020).

In some embodiments, the system (e.g., 3110 shown in FIG. 3E) is an operating system hosted on device 3150. In some embodiments, the system (e.g., 3110 shown in FIG. 3E) is an external device (e.g., a server, a peripheral device, an accessory, and/or a personal computing device) that includes an operating system.

Referring to FIG. 3C and FIG. 3G, application 3160 obtains information (e.g., 3030). In some embodiments, the information obtained at 3030 includes positional information, time information, notification information, user information, environment information electronic device state information, weather information, media information, historical information, event information, hardware information, and/or motion information. In response to and/or after obtaining the information at 3030, application 3160 performs an operation with the information (e.g., 3040). In some embodiments, the operation performed at 3040 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 3110 based on the information.

In some embodiments, one or more steps of the method of FIG. 3B and/or the method of FIG. 3C is performed in response to a trigger. In some embodiments, the trigger includes detection of an event, a notification received from system 3110, a user input, and/or a response to a call to an API provided by system 3110.

In some embodiments, the instructions of application 3160, when executed, control device 3150 to perform the method of FIG. 3B and/or the method of FIG. 3C by calling an application programming interface (API) (e.g., API 3190) provided by system 3110. In some embodiments, application 3160 performs at least a portion of the method of FIG. 3B and/or the method of FIG. 3C without calling API 3190.

In some embodiments, one or more steps of the method of FIG. 3B and/or the method of FIG. 3C includes calling an API (e.g., API 3190) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 3D, device 3150 is illustrated. In some embodiments, device 3150 is a personal computing device, a smart phone, a smart watch, a fitness tracker, a head mounted display (HMD) device, a media device, a communal device, a speaker, a television, and/or a tablet. As illustrated in FIG. 3D, device 3150 includes application 3160 and an operating system (e.g., system 3110 shown in FIG. 3E). Application 3160 includes application implementation module 3170 and API-calling module 3180. System 3110 includes API 3190 and implementation module 3100. It should be recognized that device 3150, application 3160, and/or system 3110 can include more, fewer, and/or different components than illustrated in FIGS. 3D and 3E.

In some embodiments, application implementation module 3170 includes a set of one or more instructions corresponding to one or more operations performed by application 3160. For example, when application 3160 is a messaging application, application implementation module 3170 can include operations to receive and send messages. In some embodiments, application implementation module 3170 communicates with API-calling module 3180 to communicate with system 3110 via API 3190 (shown in FIG. 3E).

In some embodiments, API 3190 is a software module (e.g., a collection of computer-readable instructions) that provides an interface that allows a different module (e.g., API-calling module 3180) to access and/or use one or more functions, methods, procedures, data structures, classes, and/or other services provided by implementation module 3100 of system 3110. For example, API-calling module 3180 can access a feature of implementation module 3100 through one or more API calls or invocations (e.g., embodied by a function or a method call) exposed by API 3190 (e.g., a software and/or hardware module that can receive API calls, respond to API calls, and/or send API calls) and can pass data and/or control information using one or more parameters via the API calls or invocations. In some embodiments, API 3190 allows application 3160 to use a service provided by a Software Development Kit (SDK) library. In some embodiments, application 3160 incorporates a call to a function or method provided by the SDK library and provided by API 3190 or uses data types or objects defined in the SDK library and provided by API 3190. In some embodiments, API-calling module 3180 makes an API call via API 3190 to access and use a feature of implementation module 3100 that is specified by API 3190. In such embodiments, implementation module 3100 can return a value via API 3190 to API-calling module 3180 in response to the API call. The value can report to application 3160 the capabilities or state of a hardware component of device 3150, including those related to aspects such as input capabilities and state, output capabilities and state, processing capability, power state, storage capacity and state, and/or communications capability. In some embodiments, API 3190 is implemented in part by firmware, microcode, or other low level logic that executes in part on the hardware component.

In some embodiments, API 3190 allows a developer of API-calling module 3180 (which can be a third-party developer) to leverage a feature provided by implementation module 3100. In such embodiments, there can be one or more API-calling modules (e.g., including API-calling module 3180) that communicate with implementation module 3100. In some embodiments, API 3190 allows multiple API-calling modules written in different programming languages to communicate with implementation module 3100 (e.g., API 3190 can include features for translating calls and returns between implementation module 3100 and API-calling module 3180) while API 3190 is implemented in terms of a specific programming language. In some embodiments, API-calling module 3180 calls APIs from different providers such as a set of APIs from an OS provider, another set of APIs from a plug-in provider, and/or another set of APIs from another provider (e.g., the provider of a software library) or creator of the another set of APIs.

Examples of API 3190 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, photos API, camera API, and/or image processing API. In some embodiments, the sensor API is an API for accessing data associated with a sensor of device 3150. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor, and/or biometric sensor.

In some embodiments, implementation module 3100 is a system (e.g., operating system and/or server system) software module (e.g., a collection of computer-readable instructions) that is constructed to perform an operation in response to receiving an API call via API 3190. In some embodiments, implementation module 3100 is constructed to provide an API response (via API 3190) as a result of processing an API call. By way of example, implementation module 3100 and API-calling module 3180 can each be any one of an operating system, a library, a device driver, an API, an application program, or other module. It should be understood that implementation module 3100 and API-calling module 3180 can be the same or different type of module from each other. In some embodiments, implementation module 3100 is embodied at least in part in firmware, microcode, or hardware logic.

In some embodiments, implementation module 3100 returns a value through API 3190 in response to an API call from API-calling module 3180. While API 3190 defines the syntax and result of an API call (e.g., how to invoke the API call and what the API call does), API 3190 might not reveal how implementation module 3100 accomplishes the function specified by the API call. Various API calls are transferred via the one or more application programming interfaces between API-calling module 3180 and implementation module 3100. Transferring the API calls can include issuing, initiating, invoking, calling, receiving, returning, and/or responding to the function calls or messages. In other words, transferring can describe actions by either of API-calling module 3180 or implementation module 3100. In some embodiments, a function call or other invocation of API 3190 sends and/or receives one or more parameters through a parameter list or other structure.

In some embodiments, implementation module 3100 provides more than one API, each providing a different view of or with different aspects of functionality implemented by implementation module 3100. For example, one API of implementation module 3100 can provide a first set of functions and can be exposed to third-party developers, and another API of implementation module 3100 can be hidden (e.g., not exposed) and provide a subset of the first set of functions and also provide another set of functions, such as testing or debugging functions which are not in the first set of functions. In some embodiments, implementation module 3100 calls one or more other components via an underlying API and thus is both an API-calling module and an implementation module. It should be recognized that implementation module 3100 can include additional functions, methods, classes, data structures, and/or other features that are not specified through API 3190 and are not available to API-calling module 3180. It should also be recognized that API-calling module 3180 can be on the same system as implementation module 3100 or can be located remotely and access implementation module 3100 using API 3190 over a network. In some embodiments, implementation module 3100, API 3190, and/or API-calling module 3180 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

An application programming interface (API) is an interface between a first software process and a second software process that specifies a format for communication between the first software process and the second software process. Limited APIs (e.g., private APIs or partner APIs) are APIs that are accessible to a limited set of software processes (e.g., only software processes within an operating system or only software processes that are approved to access the limited APIs). Public APIs that are accessible to a wider set of software processes. Some APIs enable software processes to communicate about or set a state of one or more input devices (e.g., one or more touch sensors, proximity sensors, visual sensors, motion/orientation sensors, pressure sensors, intensity sensors, sound sensors, wireless proximity sensors, biometric sensors, buttons, switches, rotatable elements, and/or external controllers). Some APIs enable software processes to communicate about and/or set a state of one or more output generation components (e.g., one or more audio output generation components, one or more display generation components, and/or one or more tactile output generation components). Some APIs enable particular capabilities (e.g., scrolling, handwriting, text entry, image editing, and/or image creation) to be accessed, performed, and/or used by a software process (e.g., generating outputs for use by a software process based on input from the software process). Some APIs enable content from a software process to be inserted into a template and displayed in a user interface that has a layout and/or behaviors that are specified by the template.

Many software platforms include a set of frameworks that provides the core objects and core behaviors that a software developer needs to build software applications that can be used on the software platform. Software developers use these objects to display content onscreen, to interact with that content, and to manage interactions with the software platform. Software applications rely on the set of frameworks for their basic behavior, and the set of frameworks provides many ways for the software developer to customize the behavior of the application to match the specific needs of the software application. Many of these core objects and core behaviors are accessed via an API. An API will typically specify a format for communication between software processes, including specifying and grouping available variables, functions, and protocols. An API call (sometimes referred to as an API request) will typically be sent from a sending software process to a receiving software process as a way to accomplish one or more of the following: the sending software process requesting information from the receiving software process (e.g., for the sending software process to take action on), the sending software process providing information to the receiving software process (e.g., for the receiving software process to take action on), the sending software process requesting action by the receiving software process, or the sending software process providing information to the receiving software process about action taken by the sending software process. Interaction with a device (e.g., using a user interface) will in some circumstances include the transfer and/or receipt of one or more API calls (e.g., multiple API calls) between multiple different software processes (e.g., different portions of an operating system, an application and an operating system, or different applications) via one or more APIs (e.g., via multiple different APIs). For example, when an input is detected the direct sensor data is frequently processed into one or more input events that are provided (e.g., via an API) to a receiving software process that makes some determination based on the input events, and then sends (e.g., via an API) information to a software process to perform an operation (e.g., change a device state and/or user interface) based on the determination. While a determination and an operation performed in response could be made by the same software process, alternatively the determination could be made in a first software process and relayed (e.g., via an API) to a second software process, that is different from the first software process, that causes the operation to be performed by the second software process. Alternatively, the second software process could relay instructions (e.g., via an API) to a third software process that is different from the first software process and/or the second software process to perform the operation. It should be understood that some or all user interactions with a computer system could involve one or more API calls within a step of interacting with the computer system (e.g., between different software components of the computer system or between a software component of the computer system and a software component of one or more remote computer systems). It should be understood that some or all user interactions with a computer system could involve one or more API calls between steps of interacting with the computer system (e.g., between different software components of the computer system or between a software component of the computer system and a software component of one or more remote computer systems).

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

In some embodiments, the application is an application that is pre-installed on the first computer system at purchase (e.g., a first-party application). In some embodiments, the application is an application that is provided to the first computer system via an operating system update file (e.g., a first-party application). In some embodiments, the application is an application that is provided via an application store. In some embodiments, the application store is pre-installed on the first computer system at purchase (e.g., a first-party application store) and allows download of one or more applications. In some embodiments, the application store is a third-party application store (e.g., an application store that is provided by another device, downloaded via a network, and/or read from a storage device). In some embodiments, the application is a third-party application (e.g., an app that is provided by an application store, downloaded via a network, and/or read from a storage device). In some embodiments, the application controls the first computer system to perform methods 700, 800, 900, and/or 1100 (FIGS. 7, 8, 9, and/or 11) by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, a photos API, a camera API, and/or an image processing API.

In some embodiments, at least one API is a software module (e.g., a collection of computer-readable instructions) that provides an interface that allows a different module (e.g., API-calling module 3180) to access and use one or more functions, methods, procedures, data structures, classes, and/or other services provided by an implementation module of the system process. The API can define one or more parameters that are passed between the API-calling module and the implementation module. In some embodiments, API 3190 defines a first API call that can be provided by API-calling module 3180. The implementation module is a system software module (e.g., a collection of computer-readable instructions) that is constructed to perform an operation in response to receiving an API call via the API. In some embodiments, the implementation module is constructed to provide an API response (via the API) as a result of processing an API call. In some embodiments, the implementation module is included in the device (e.g., 3150) that runs the application. In some embodiments, the implementation module is included in an electronic device that is separate from the device that runs the application.

Attention is now directed towards embodiments of user interfaces that are, optionally, implemented on, for example, portable multifunction device 100.

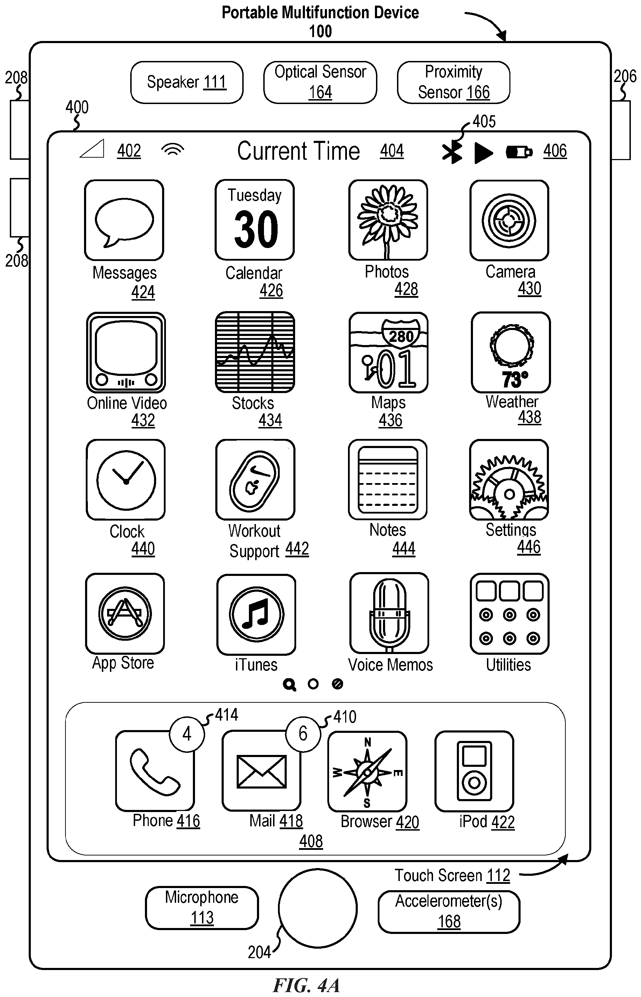

FIG. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   o Icon 416 for telephone module 138, labeled "Phone," which optionally includes an indicator 414 of the number of missed calls or voicemail messages;
   o Icon 418 for e-mail client module 140, labeled "Mail," which optionally includes an indicator 410 of the number of unread e-mails;
   o Icon 420 for browser module 147, labeled "Browser;" and
   o Icon 422 for video and music player module 152, also referred to as iPod (trademark of Apple Inc.) module 152, labeled "iPod;" and
- Icons for other applications, such as:
   o Icon 424 for IM module 141, labeled "Messages;"
   o Icon 426 for calendar module 148, labeled "Calendar;"
   o Icon 428 for image management module 144, labeled "Photos;"
   o Icon 430 for camera module 143, labeled "Camera;"
   o Icon 432 for online video module 155, labeled "Online Video;"
   o Icon 434 for stocks widget 149-2, labeled "Stocks;"
   o Icon 436 for map module 154, labeled "Maps;"
   o Icon 438 for weather widget 149-1, labeled "Weather;"
   o Icon 440 for alarm clock widget 149-4, labeled "Clock;"
   o Icon 442 for workout support module 142, labeled "Workout Support;"
   o Icon 444 for notes module 153, labeled "Notes;" and
   o Icon 446 for a settings application or module, labeled "Settings," which provides access to settings for device 100 and its various applications 136.

It should be noted that the icon labels illustrated in FIG. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

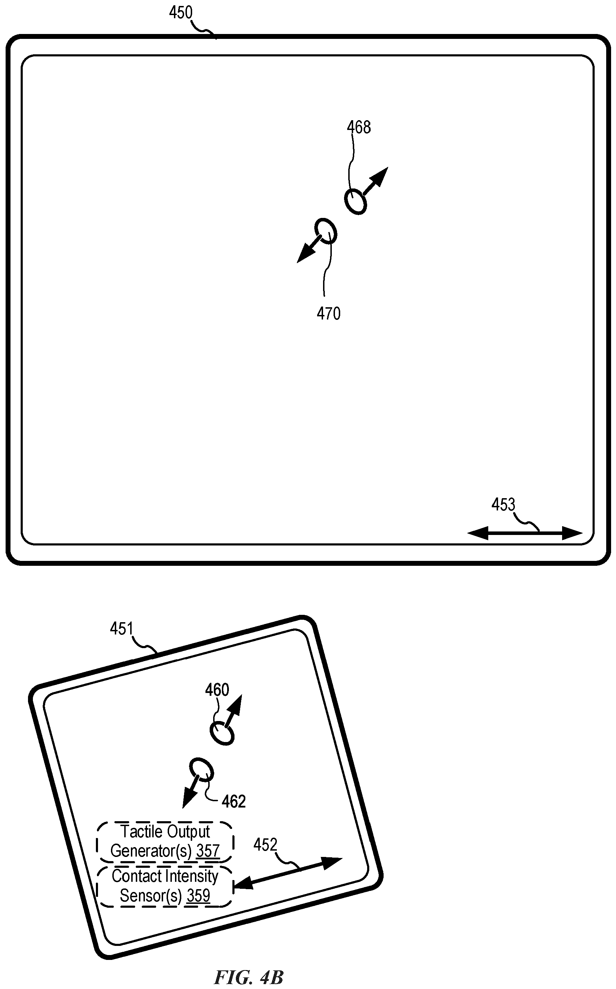

FIG. 4B illustrates an exemplary user interface on a device (e.g., device 300, FIG. 3A) with a touch-sensitive surface 451 (e.g., a tablet or touchpad 355, FIG. 3A) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in FIG. 4B. In some embodiments, the touch-sensitive surface (e.g., 451 in FIG. 4B) has a primary axis (e.g., 452 in FIG. 4B) that corresponds to a primary axis (e.g., 453 in FIG. 4B) on the display (e.g., 450). In accordance with these embodiments, the device detects contacts (e.g., 460 and 462 in FIG. 4B) with the touch-sensitive surface 451 at locations that correspond to respective locations on the display (e.g., in FIG. 4B, 460 corresponds to 468 and 462 corresponds to 470). In this way, user inputs (e.g., contacts 460 and 462, and movements thereof) detected by the device on the touch-sensitive surface (e.g., 451 in FIG. 4B) are used by the device to manipulate the user interface on the display (e.g., 450 in FIG. 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

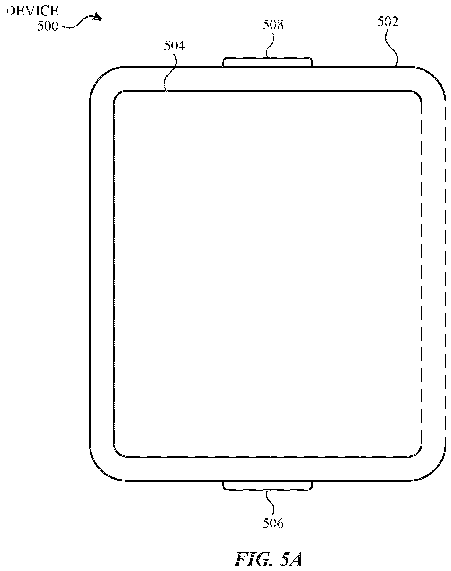

FIG. 5A illustrates exemplary personal electronic device 500. Device 500 includes body 502. In some embodiments, device 500 can include some or all of the features described with respect to devices 100 and 300 (e.g., FIGS. 1A-4B). In some embodiments, device 500 has touch-sensitive display screen 504, hereafter touch screen 504. Alternatively, or in addition to touch screen 504, device 500 has a display and a touch-sensitive surface. As with devices 100 and 300, in some embodiments, touch screen 504 (or the touch-sensitive surface) optionally includes one or more intensity sensors for detecting intensity of contacts (e.g., touches) being applied. The one or more intensity sensors of touch screen 504 (or the touch-sensitive surface) can provide output data that represents the intensity of touches. The user interface of device 500 can respond to touches based on their intensity, meaning that touches of different intensities can invoke different user interface operations on device 500.

Exemplary techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, published as WIPO Publication No. WO/2013/169849, and International Patent Application Serial No. PCT/US2013/069483, titled "Device, Method, and Graphical User Interface for Transitioning Between Touch Input to Display Output Relationships," filed November 11, 2013, published as WIPO Publication No. WO/2014/105276, each of which is hereby incorporated by reference in their entirety.

In some embodiments, device 500 has one or more input mechanisms 506 and 508. Input mechanisms 506 and 508, if included, can be physical. Examples of physical input mechanisms include push buttons and rotatable mechanisms. In some embodiments, device 500 has one or more attachment mechanisms. Such attachment mechanisms, if included, can permit attachment of device 500 with, for example, hats, eyewear, earrings, necklaces, shirts, jackets, bracelets, watch straps, chains, trousers, belts, shoes, purses, backpacks, and so forth. These attachment mechanisms permit device 500 to be worn by a user.

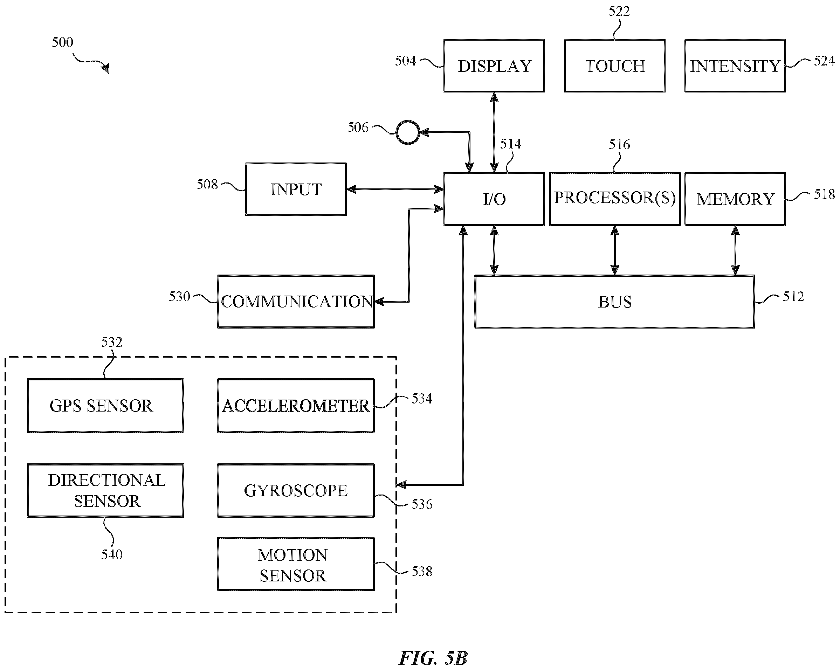

FIG. 5B depicts exemplary personal electronic device 500. In some embodiments, device 500 can include some or all of the components described with respect to FIGS. 1A, 1B, and 3A. Device 500 has bus 512 that operatively couples I/O section 514 with one or more computer processors 516 and memory 518. I/O section 514 can be connected to display screen 504, which can have touch-sensitive component 522 and, optionally, intensity sensor 524 (e.g., contact intensity sensor). In addition, I/O section 514 can be connected with communication unit 530 for receiving application and operating system data, using Wi-Fi, Bluetooth, near field communication (NFC), cellular, and/or other wireless communication techniques. Device 500 can include input mechanisms 506 and/or 508. Input mechanism 506 is, optionally, a rotatable input device or a depressible and rotatable input device, for example. Input mechanism 508 is, optionally, a button, in some examples.

Input mechanism 508 is, optionally, a microphone, in some examples. Personal electronic device 500 optionally includes various sensors, such as GPS sensor 532, accelerometer 534, directional sensor 540 (e.g., compass), gyroscope 536, motion sensor 538, and/or a combination thereof, all of which can be operatively connected to I/O section 514.

Memory 518 of personal electronic device 500 can include one or more non-transitory computer-readable storage mediums, for storing computer-executable instructions, which, when executed by one or more computer processors 516, for example, can cause the computer processors to perform the techniques described below, including processes 700, 800, 900, and 1100 (FIGS. 7, 8, 9, and 11). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray technologies, as well as persistent solid-state memory such as flash, solid-state drives, and the like. Personal electronic device 500 is not limited to the components and configuration of FIG. 5B, but can include other or additional components in multiple configurations.

As used here, the term "affordance" refers to a user-interactive graphical user interface object that is, optionally, displayed on the display screen of devices 100, 300, and/or 500 (FIGS. 1A, 3A, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in FIG. 3A or touch-sensitive surface 451 in FIG. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in FIG. 1A or touch screen 112 in FIG. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

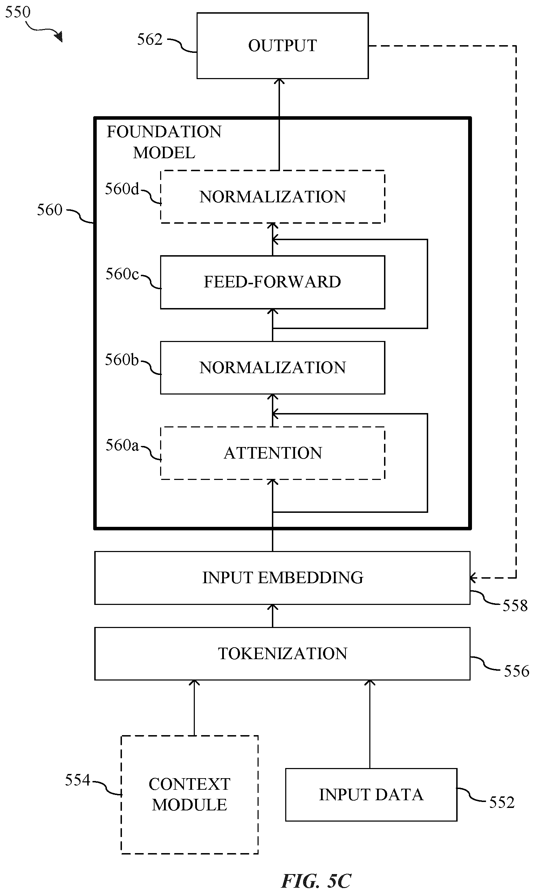

FIG. 5C illustrates exemplary foundation system 550 including foundation model 560, according to some embodiments. In some embodiments, the blocks of foundation system 550 are combined, the order of the blocks is changed, and/or blocks of foundation system 550 are removed.

Foundation system 550 includes tokenization module 556, input embedding module 558, and foundation model 560 which use input data 552 and, optionally, context module 552 to train foundation model 560 to process input data 552 to determine output 562.

In some embodiments, various components of device 100, 300, 500, 600, 650, and/or 670 and/or software applications installed on device 100, 300, 500, 600, 650, and/or 670 include and/or are implemented using generative artificial intelligence (AI) such as foundation model 560. In some examples, foundation model 560 includes a subset of machine learning models that are trained to generate text, images, and/or other media based on sets of training data that include large amounts of a particular type of data. Foundation model 560 is then integrated into the components of device 100, 300, 500, 600, 650, and/or 670 (or otherwise made available to device 100, 300, 500, 600, 650, and/or 670, and/or software applications installed on device 100, 300, 500, 600, 650, and/or 670 via an API) to provide text, images, and/or other media that device 100, 300, and/or 500 uses to determine tasks, perform tasks, and/or provide the outputs of tasks.

Foundation models are generally trained using large sets of unlabeled data first and then later adapted to a specific task within the architecture of device 100, 300, 500, 600, 650, and/or 670 and/or operating system 126. Thus, a specific task or type of output is not encoded into the foundation models, rather the trained foundation model emerges based on the self-supervised training using the unlabeled data. The trained foundation model is then adapted to a variety of tasks based on the needs of device 100, 300, 500, 600, 650, and/or 670and/or operating system 126 to efficiently perform tasks for a user.

Generative AI models, such as foundation model 560, are trained on large quantities of data with self-supervised or semi-supervised learning to be adapted to a specific downstream task. For example, foundation model 560 is trained with large sets of different images and corresponding text or metadata to determine the description of newly captured image data as output 562. These descriptions can then be used by device 100, 300, 500, 600, 650, and/or 670to determine user intent, tasks, and/or other information that can be used to perform tasks. For example, generative AI models such as Midjourney and DALL-E are trained on large sets of images and are able to convert text to a generated image.

Large language models (LLM) are a type of foundation model that provide text output after being trained on large sets of input text data. As with other foundation models, LLM's can be trained in a self-supervised manner and thus the output of different LLM's trained on the same large set of input text can be different. These LLM's can then be adapted for use with device 100, 300, 500, 600, 650, and/or 670 to specific types of text. Thus, in some examples, the LLM is trained to determine a summary of text provided to the LLM as an input while in other examples, the LLM is trained to predict text based on the set of input text. Thus, the LLM can efficiently process large amounts of input text to provide the digital assistant with text that can be used to determine and/or perform tasks. For example, ChatGPT, Copilot, and LLaMA are exemplary large language models that process large amounts of input text and generates text that can be used by a digital assistant, a software application, and/or an operating system.

In some examples, the LLM may be trained in a semi-supervised manner and/or provided human feedback to refine the output of the LLM. In this way, the LLM may be adapted to provide the specific output required for a particular task of device 100, 300, and/or 500, such as a summary of large amounts of text or a task for device 100, 300, 500, 600, 650, and/or 670 to perform. Further, the input provided to the LLM can be adapted such that the LLM processes data as or more efficiently than device 100, 300, 500, 600, 650, and/or 670 could without the use of the LLM.

Once foundation model 560 (e.g., a LLM) has been fully trained, foundation model 560 can process input data 552 as discussed below to determine output 562 which may be used to further train foundation model 560 or can be processed by device 100, 300, and/or 500 to perform a task and/or provide an output to the user.

Specifically, input data 552 is received and provided to tokenization module 556 which converts input data 552 into a token and/or a series of tokens which can be processed by input embedding module 558 into a format that is understood by foundation model 560. Tokenization module 556 converts input data into a series of characters that has a specific semantic meaning to foundation model 560.

In some examples, tokenization module 556 tokenizes contextual data from context module 554 to add further information to input data 552 for processing by foundation model 560. For example, context module 554 can provide information related to input data 552 such as a location that input data 552 was received, a time that input data 552 was received, other data that was received contemporaneously with input data 552, and/or other contextual information that relates to input data 552. Tokenization module 556 can then tokenize this contextual data with input data 552 to be provided to foundation model 560.

After input data 552 has been tokenized, input data 552 is provided to input embedding module 558 to convert the tokens to a vector representation that can be processed by foundation model 560. In some examples, the vector representation includes information provided by context module 554. In some examples, the vector representation includes information determined from output 562. Accordingly, input embedding module 558 converts the various data provided as an input into a format that foundation model 560 can parse and process.

For example, when foundation model 560 is a large language model (LLM) tokenization module 556 converts input data 552 into text which is then converted into a vector representation by input embedding module 558 that can be processed by foundation model 560 to determine a response to input data 552 as output 562 or to determine a summary of input data 552 as output 562. As another example, when foundation model 560 is a model that has been trained to determine descriptions of images, input data 552 of images can be tokenized into characters and then converted into a vector representation by input embedding module 558 that is processed by foundation model 560 to determine a description of the images as output 562.

Foundation model 560 processes the received vector representation using a series of layers including, in some embodiments, attention layer 560a, normalization layer 560b, feed-forward layer 560c, and/or normalization layer 560d. In some examples, foundation model 560 includes additional layers similar to theses layers to further process the vector representation. Accordingly, foundation model 560 can be customized based on the specific task that foundation model 560 has been trained to perform. Each of the layers of foundation model 560 perform a specific task to process the vector representation into output 562.

Attention layer 560a provides access to all portions of the vector representation at the same time, increasing the speed at which the vector representation can be processed and ensuring that the data is processed equally across the portions of the vector representation. Normalization layer 560b and normalization layer 560d scale the data that is being processed by foundation model 560 up or down based on the needs of the other layers of foundation model 560. This allows foundation model 560 to manipulate the data during processing as needed. Feed-forward layer 560c assigns weights to the data that is being processed and provides the data for further processing within foundation model 560. These layers work together to process the vector representation provided to foundation model 560 to determine the appropriate output 562.

For example, as discussed above, when foundation model 560 is a large language model (LLM) foundation model 560 processes input text to determine a summary and/or further follow-up text as output 562. As another example, as discussed above, when foundation model 560 is a model trained to determine descriptions of images, foundation model 560 processes input images to determine a description of the image and/or tasks that can be performed based on the content of the images as output 562.

In some examples, output 562 is further processed by device 100, 300, 500, 600, 650, and/or 670, operating system 126, and/or a software application installed on device 100, 300, 500, 600, 650, and/or 670 to provide an output or execute a task. For example, when output 562 is a sentence describing a task that device 100, 300, 500, 600, 650, and/or 670 has performed, device 100, 300, 500, 600, 650, and/or 670 can use the text to create a visual or audio output to be provided to a user. As another example, when output 562 is text that includes a function and a parameter for the function, device 100, 300, 500, 600, 650, and/or 670 can perform a function call to execute the function with the provided parameter.

In some examples, device 100, 300, 500, 600, 650, and/or 670 includes multiple generative AI (e.g., foundation) models that work together to process data in an efficient manner. In some examples, components of device 100, 300, 500, 600, 650, and/or 670 may be replaced with generative AI (e.g., foundation) models trained to perform the same function as the component. In some examples, these generative AI models are more efficient than traditional components and/or provide more flexible processing and/or outputs for device 100, 300, 500, 600, 650, and/or 670 to utilize.

As described herein, content is automatically generated by one or more computers in response to a request to generate the content. The automatically-generated content is optionally generated on-device (e.g., generated at least in part by a computer system at which a request to generate the content is received) and/or generated off-device (e.g., generated at least in part by one or more nearby computers that are available via a local network or one or more computers that are available via the internet). This automatically-generated content optionally includes visual content (e.g., images, graphics, and/or video), audio content, and/or text content.

In some embodiments, novel automatically-generated content that is generated via one or more artificial intelligence (AI) processes is referred to as generative content (e.g., generative images, generative graphics, generative video, generative audio, and/or generative text). Generative content is typically generated by an AI process based on a prompt that is provided to the AI process. An AI process typically uses one or more AI models to generate an output based on an input. An AI process optionally includes one or more pre-processing steps to adjust the input before it is used by the AI model to generate an output (e.g., adjustment to a user-provided prompt, creation of a system-generated prompt, and/or AI model selection). An AI process optionally includes one or more post-processing steps to adjust the output by the AI model (e.g., passing AI model output to a different AI model, upscaling, downscaling, cropping, formatting, and/or adding or removing metadata) before the output of the AI model used for other purposes such as being provided to a different software process for further processing or being presented (e.g., visually or audibly) to a user. An AI process that generates generative content is sometimes referred to as a generative AI process.

A prompt for generating generative content can include one or more of: one or more words (e.g., a natural language prompt that is written or spoken), one or more images, one or more drawings, and/or one or more videos. AI processes can include machine learning models including neural networks. Neural networks can include transformer-based deep neural networks such as large language models (LLMs). Generative pre-trained transformer models are a type of LLM that can be effective at generating novel generative content based on a prompt. Some AI processes use a prompt that includes text to generate either different generative text, generative audio content, and/or generative visual content. Some AI processes use a prompt that includes visual content and/or an audio content to generate generative text (e.g., a transcription of audio and/or a description of the visual content). Some multi-modal AI processes use a prompt that includes multiple types of content (e.g., text, images, audio, video, and/or other sensor data) to generate generative content. A prompt sometimes also includes values for one or more parameters indicating an importance of various parts of the prompt. Some prompts include a structured set of instructions that can be understood by an AI process that include phrasing, a specified style, relevant context (e.g., starting point content and/or one or more examples), and/or a role for the AI process.

Generative content is generally based on the prompt but is not deterministically selected from pre-generated content and is, instead, generated using the prompt as a starting point. In some embodiments, pre-existing content (e.g., audio, text, and/or visual content) is used as part of the prompt for creating generative content (e.g., the pre-existing content is used as a starting point for creating the generative content). For example, a prompt could request that a block of text be summarized or rewritten in a different tone, and the output would be generative text that is summarized or written in the different tone. Similarly a prompt could request that visual content be modified to include or exclude content specified by a prompt (e.g., removing an identified feature in the visual content, adding a feature to the visual content that is described in a prompt, changing a visual style of the visual content, and/or creating additional visual elements outside of a spatial or temporal boundary of the visual content that are based on the visual content). In some embodiments, a random or pseudo-random seed is used as part of the prompt for creating generative content (e.g., the random or pseud-random seed content is used as a starting point for creating the generative content). For example when generating an image from a diffusion model, a random noise pattern is iteratively denoised based on the prompt to generate an image that is based on the prompt. While specific types of AI processes have been described herein, it should be understood that a variety of different AI processes could be used to generate generative content based on a prompt.

Attention is now directed towards embodiments of user interfaces ("UI") and associated processes that are implemented on an electronic device, such as portable multifunction device 100, device 300, or device 500.

FIGS. 6A-6AR illustrate exemplary user interfaces for generating content and/or providing dynamically generated content, in accordance with some embodiments. The user interfaces in these figures are used to illustrate the processes described below, including the processes in FIG. 7, FIG. 8, and FIG. 9.

FIG. 6A illustrates computer system 600, which is a smart phone with touch-sensitive display 602. In some embodiments, computer system 600 is an electronic device, such as device 100, 300, and/or 500. Although the depicted embodiments show an example in which computer system 600 is a smart phone, in other embodiments, computer system 600 is a different type of computer system (e.g., a tablet, a laptop computer, a desktop computer, a wearable device, and/or a headset). At FIG. 6A, computer system 600 displays messaging user interface 604. Messaging user interface 604 corresponds to a messaging session between a user of computer system 600 and one or more other users. Participant indication 604h identifies the one or more other users that are participating in the messaging session (e.g., a user named "Roger"). Messaging user interface 604 includes message region 606, which displays one or more messages that have been transmitted into the messaging session by the user of the computer system and the one or more other users. Messages transmitted by the user of the computer system are displayed on a right side of message region 606, and messages transmitted by the other users of the computer system are displayed on a left side of message region 606. Messaging user interface 604 also includes option 604a, text field 604b, option 604c, keyboard 604d, option 604e, option 604f, option 604i, and message region 606. Option 604a, when selected, causes computer system 600 to cease display of messaging user interface 604. Text field 604b displays text entered by the user (e.g., via keyboard 604d and/or via spoken input) and to be transmitted into the messaging session. Option 604c and option 604f, when selected, each cause computer system 600 to receive audio input (e.g., spoken input) and to convert the audio input into text to be displayed within text field 604b. Option 604e, when selected, causes computer system 600 to initiates a process for replacing English-language keyboard 604d with a different keyboard. Option 604i, when selected, causes computer system 600 to initiate a process for starting a video conference and/or a video call with the other users participating in the messaging session. At FIG. 6A, computer system 600 detects user input 608 (e.g., one or more user inputs interacting with keyboard 604d).

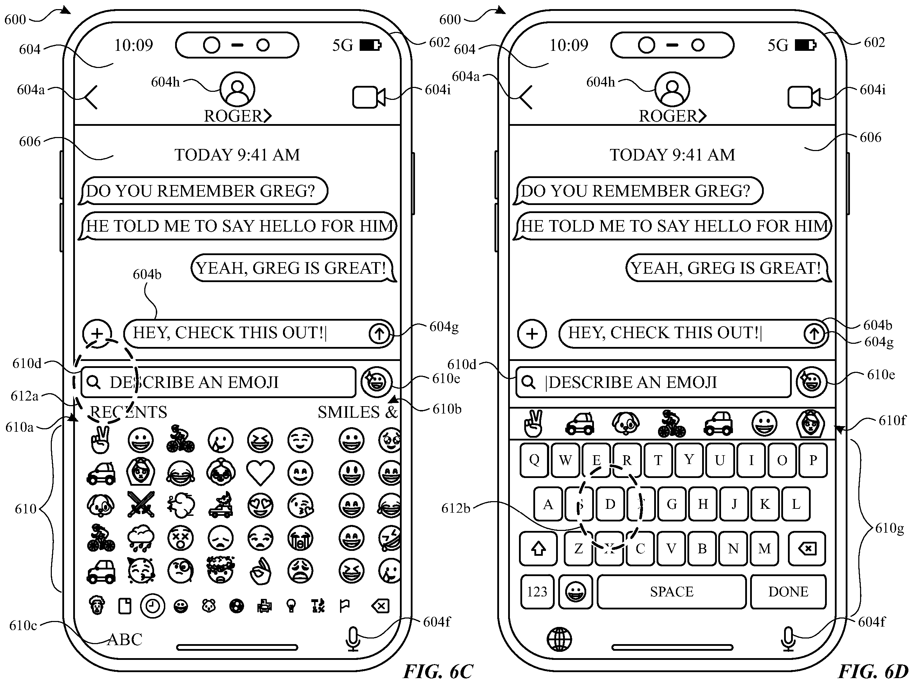

At FIG. 6B, in response to user input 608, computer system 600 displays user-entered text within text field 604b. Additionally, at FIG. 6B, in response to user input 608 (e.g., based on text being entered into text field 604b), replaces display of option 604c with option 604g. Option 604g, when selected, causes computer system 600 to transmit the text shown in text field 604b into the messaging session and causes the transmitted text to be displayed within message region 606. At FIG. 6B, computer system 600 detects user input 605 corresponding to selection of key 604d-1 within keyboard 604d. In some embodiments, key 604d-1 is a keyboard emoji key that, when selected, causes computer system 600 to display an emoji keyboard, as will be described in greater detail below. At FIG. 6C, in response to user input 605, computer system 600 ceases display of keyboard 604d and displays emoji keyboard 610, text field 610d, emoji generation option 610e, and option 610c. Emoji keyboard 610 includes a plurality of emojis that, when selected by a user, cause the selected emoji to be inserted in line within text entry field 604b. The emojis in emoji keyboard 610 are arranged into various categories and/or sections. For example, in FIG. 6C, emoji keyboard 610 includes a "Recents" section 610a that displays one or more emojis that have recently been selected and/or used by the user of computer system 600. Emoji keyboard 610 also includes "Smiles and People" section 610b that displays a plurality of emojis that fit into the category "Smiles and People." In some embodiments, section 610a is a dynamic section that changes based on user selection and/or use of emojis, while section 610b is a static section that persistently displays the same set of emojis. Option 610c, when selected, causes computer system 600 to replace display of emoji keyboard 610 with keyboard 604d. Text field 610d allows a user to enter text to search for relevant emojis, as will be described and demonstrated in greater detail below. Emoji generation option 610e, when selected, causes computer system 600 to display an emoji generation user interface, as will be described and demonstrated in greater detail below. At FIG. 6C, computer system 600 detects user input 612a, which is a selection input (e.g., a tap input) corresponding to text field 610d.

At FIG. 6D, in response to user input 612a, computer system 600 ceases display of emoji keyboard 610, and displays text keyboard 610g, as well as emoji suggestion region 610f. In some embodiments, a user can interact with text keyboard 610g to enter text into text field 610d in order to search for emojis that are responsive to the entered search terms. Emoji suggestion region 610f displays one or more suggested emojis (e.g., based on recent emojis the user has selected and/or based on text entered into text field 610d). At FIG. 6D, computer system 600 detects user input 612b, which includes one or more user inputs interacting with text keyboard 610g.

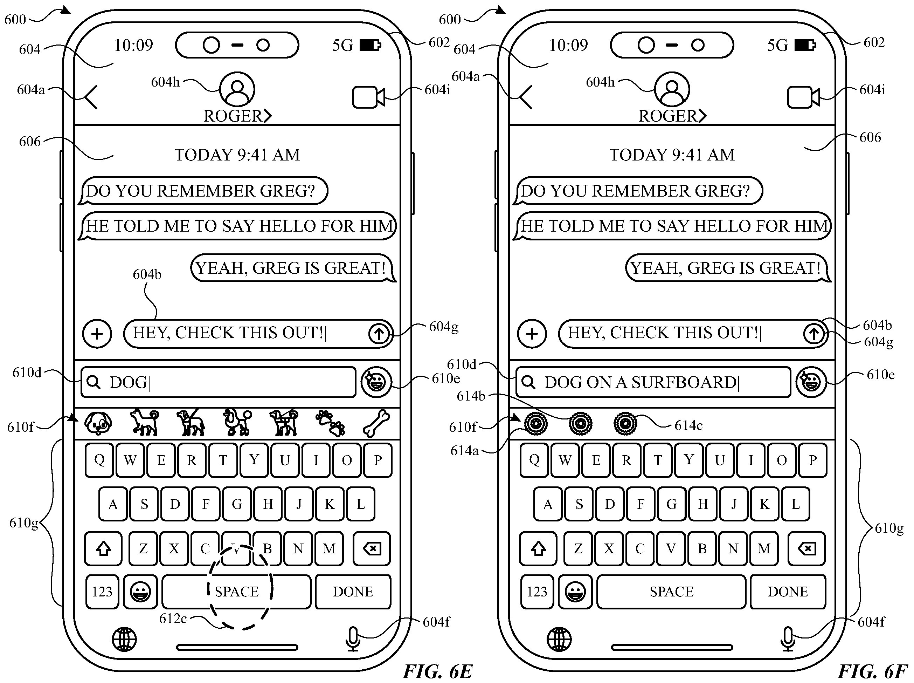

At FIG. 6E, in response to user input 612b, computer system 600 displays the text "dog" within text field 610d. At FIG. 6E, computer system 600 determines that there are one or more pre-existing emojis that are responsive to the search term "dog," and displays at least a subset of those pre-existing emojis within emoji suggestion region 610f. At FIG. 6E, computer system 600 detects user input 612c, which includes one or more user inputs interacting with text keyboard 610g.

At FIG. 6F, in response to user input 612c, computer system 600 displays additional text within text field 610d such that text field 610d now includes the text "dog on a surfboard." At FIG. 6F, computer system 600 determines that there are no pre-existing emojis that are responsive to the search prompt "dog on a surfboard." Based on this determination, computer system 600 initiates a process for dynamically generating one or more new emojis (e.g., emojis that are not currently stored on computer system 600 and/or that are not currently available on computer system 600) based on the entered search prompt. In some embodiments, computer system 600 generates the new emojis based on the entered search prompt. In some embodiments, computer system 600 transmits a request to one or more external computer systems to generate the new emojis based on the entered search prompt. In some embodiments, the new emojis are generated based on the entered search prompt using one or more artificial intelligence (AI) processes (e.g., foundation model 560), such as one or more generative AI processes. In some embodiments, the one or more AI processes (e.g., one or more machine learning models) (e.g., foundation model 560) are trained based on a training set that includes at least some of the set of preexisting emojis in emoji keyboard 610. In some embodiments, by training the one or more processes based on a training set that includes preexisting emojis from emoji keyboard 610, the one or more AI processes are trained to generate new emojis that are graphically similar to the preexisting emojis and/or that include visual elements of the preexisting emojis. At FIG. 6F, computer system 600 displays three placeholders 614a, 614b, 614c within emoji suggestion region 610f to indicate that one or more new emojis are being generated based on the user-entered search prompt.

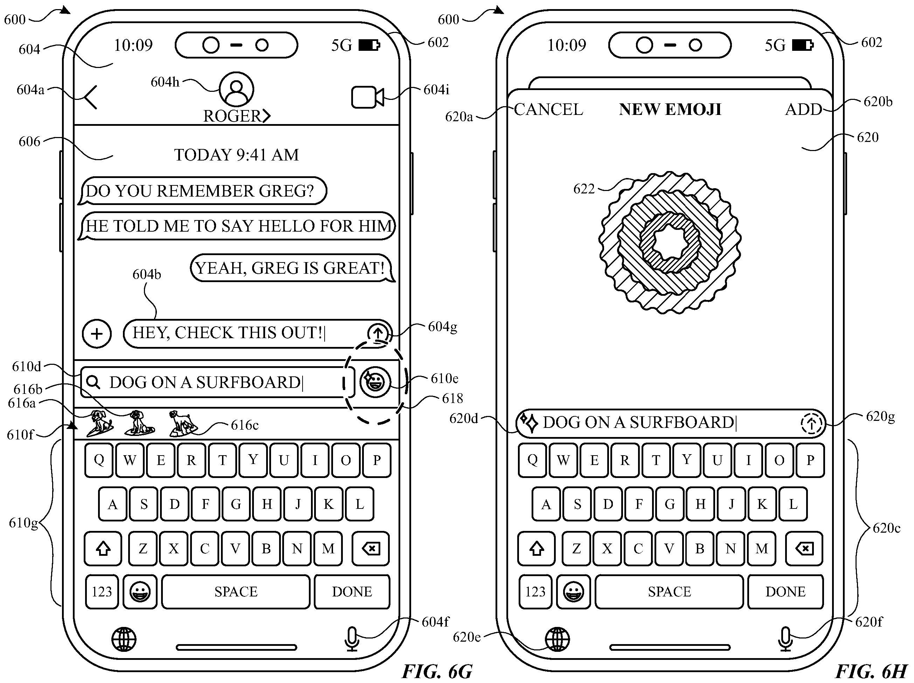

At FIG. 6G, new emojis 616a, 616b, 616c that are responsive to the user-entered search prompt and/or that are generated based on the user-entered search prompt have been successfully generated (e.g., by computer system 600 and/or one or more external computer systems) and are displayed by computer system 600 within emoji suggestion region 610f. In some embodiments, new emojis 616a, 616b, 616c, when selected, cause computer system 600 to insert the selected emoji in line in text field 604b (e.g., for potential transmission into the message session). At FIG. 6G, computer system 600 detects user input 618, which is a selection input (e.g., a tap input) corresponding to selection of emoji generation option 610e.

At FIG. 6H, in response to user input 618, computer system 600 displays emoji generation user interface 620. Emoji generation user interface 620 includes option 620a, option 620b, keyboard 620c, text field 620d, option 620e, and option 620f. Option 620a, when selected, causes computer system 600 to cease display of emoji generation user interface 620 and re-display messaging user interface 604. Emoji generation user interface 620 displays one or more dynamically generated emojis that are generated based on the user-entered search prompt, as will be described in greater detail below. Option 620b, when selected, causes computer system 600 to add one or more of the dynamically generated emojis in line into text field 604b (e.g., for potential transmission into the message session). Keyboard 620c can be used by a user to enter text into text field 620d. Option 620g, when selected, causes computer system 600 to initiate generation of new emojis based on the text that is displayed within text field 620d. Option 620e, when selected, causes computer system 600 to replace English-language keyboard 620c with a different keyboard. Option 620f, when selected, causes computer system 600 to receive audio input (e.g., spoken input) to enter text into text field 620d.

At FIG. 6H, text field 620d is pre-filled with the text "dog on a surfboard" based on user selection of emoji generation option 610e when the search prompt "dog on a surfboard" was displayed within text field 610d. Additionally, at FIG. 6H, computer system 600 has initiated generation of one or more emojis based on the user-entered search prompt. Computer system 600 displays placeholder 622 within emoji generation user interface 620 indicating that one or more emojis are being generated based on the user-entered search prompt.

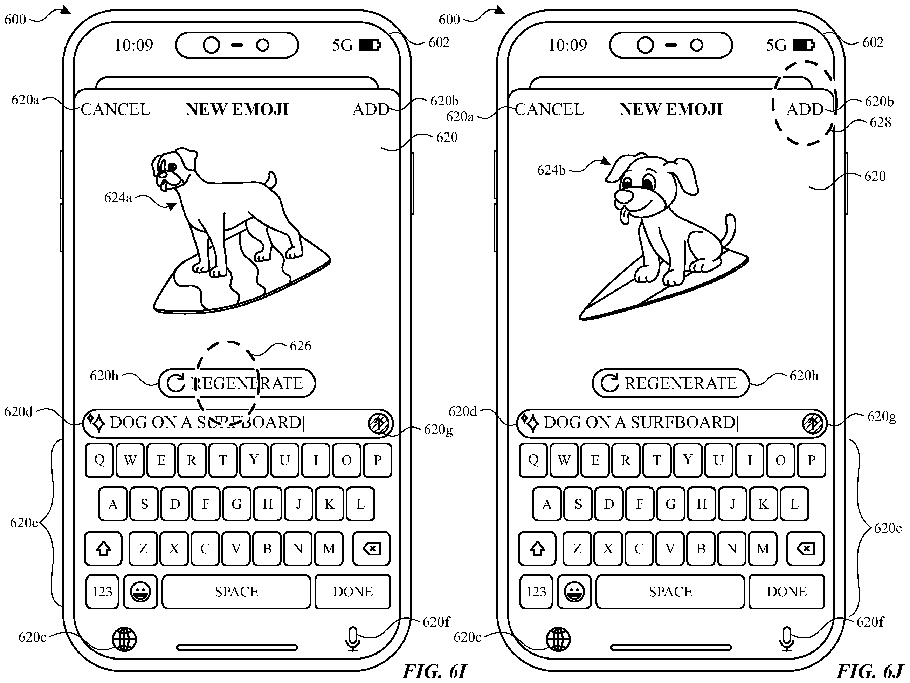

At FIG. 6I, new emoji 624a has been generated based on the user-provided search prompt, and is displayed within emoji generation user interface 620. Additionally, computer system 600 now displays regenerate option 620h within user interface 620. Regeneration option 620h, when selected, causes computer system 600 to initiate generation of one or more additional emojis based on the user-entered search prompt. At FIG. 6I, computer system 600 detects user input 626 (e.g., a tap input) corresponding to selection of regenerate option 620h.

At FIG. 6J, in response to user input 626, computer system 600 ceases display of emoji 624a, and displays emoji 624b, which was generated (e.g., by computer system 600 and/or one or more external computer systems) based on the user-entered search prompt. At FIG. 6J, while displaying emoji 624b within emoji generation user interface 620, computer system 600 detects user input 628 (e.g., a tap input) corresponding to selection of option 620b.

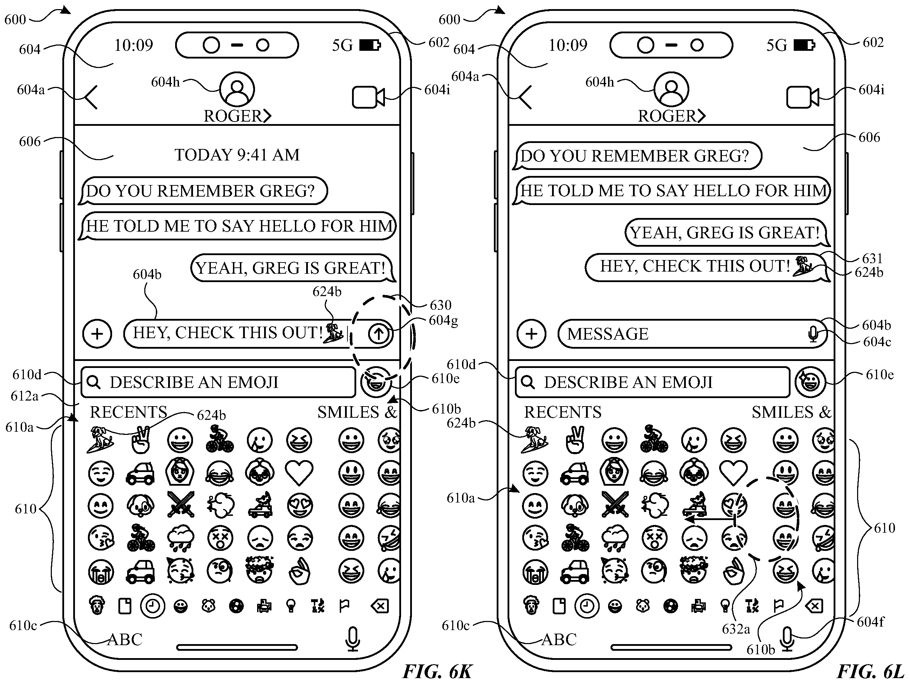

At FIG. 6K, in response to user input 628, computer system 600 ceases display of emoji generation user interface 620, and displays emoji 624b within text field 604b in line with the previously-entered text "Hey, check this out!" Additionally, in response to user input 628, computer system 600 displays emoji 624b within recents section 610a of emoji keyboard 610. In some embodiments, when a dynamically generated emoji (e.g., an emoji that is newly generated based on a user-entered search prompt) is selected by a user, used by a user, entered into text field 604b, and/or transmitted into a messaging session, the dynamically generated emoji is stored on computer system 600 and/or added to emoji keyboard 610 for future access and/or future use by the user. Accordingly, in some embodiments, recents section 610a of emoji keyboard 610 includes one or more preexisting emojis that the user has used and/or selected, as well as one or more dynamically generated emojis that the user has used and that were previously dynamically generated based on a user-provided search prompt. At FIG. 6K, computer system 600 detects user input 630 (e.g., a tap input) corresponding to selection of option 604g.

At FIG. 6L, in response to user input 630, computer system 600 transmits the content entered in text field 604b, including emoji 624b, into the messaging session, and the new message 631 that includes emoji 624b is displayed within message region 606.

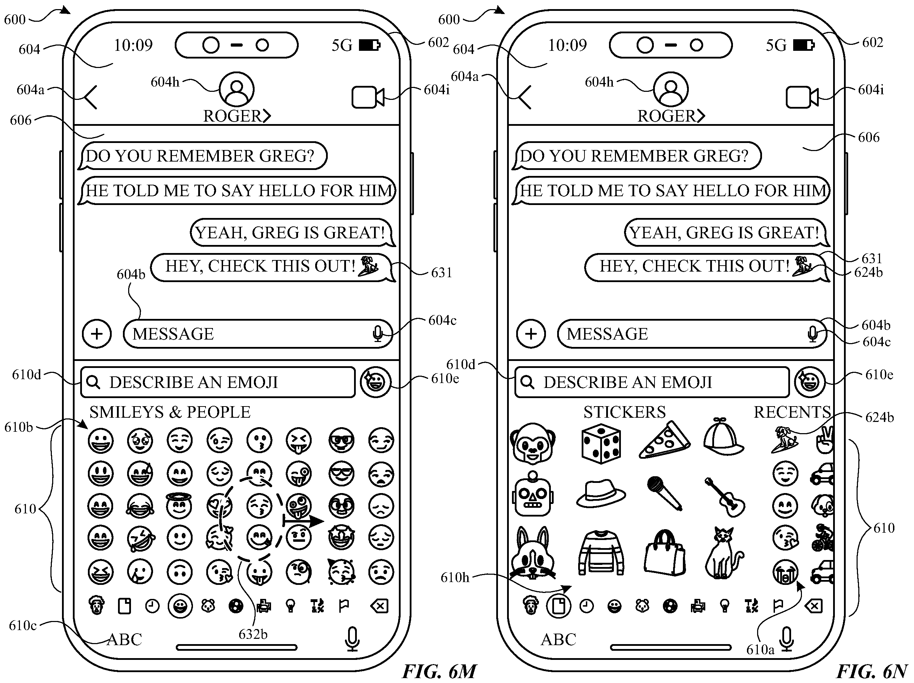

At FIG. 6L, computer system 600 detects user input 632a (e.g., a swipe left input within emoji keyboard 610). At FIG. 6M, in response to user input 632a, computer system 600 displays leftward scrolling of emoji keyboard 610 to reveal additional pre-existing emojis that are in section 610b. At FIG. 6M, computer system 600 detects user input 632b (e.g., a swipe right input within emoji keyboard 610). At FIG. 6N, in response to user input 632b, computer system 600 displays rightward scrolling of emoji keyboard 610 to reveal section 610h (e.g., a stickers section) that is positioned to the left of section 610a in emoji keyboard 610.

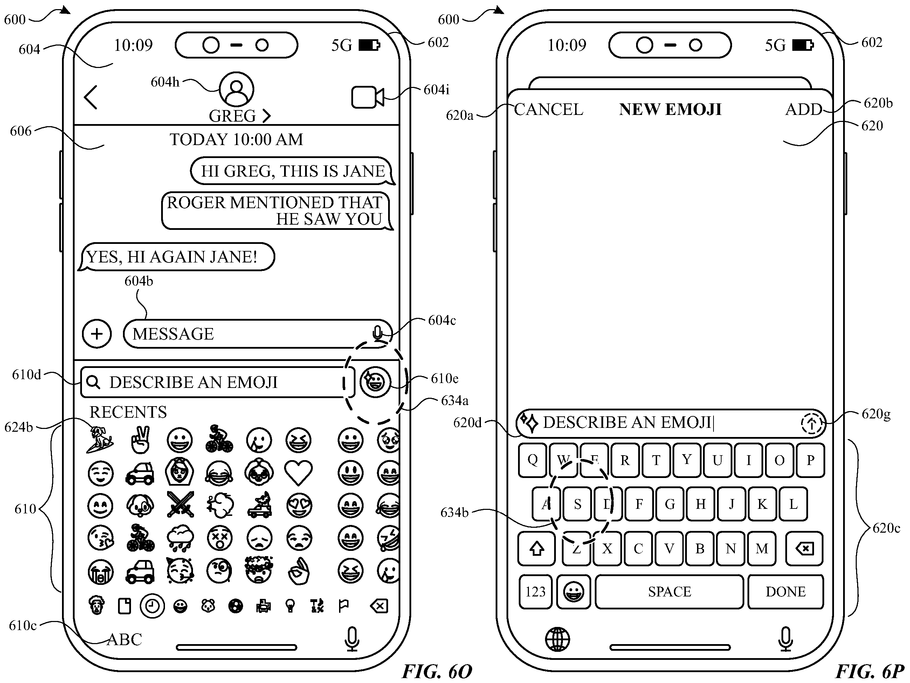

At FIG. 6O, computer system 600 displays messaging user interface 604 for a different messaging session between the user of computer system 600 and another person named Greg. At FIG. 6O, computer system 600 detects user input 634a (e.g., a tap input) corresponding to selection of emoji generation option 610e while no text has been entered into text field 610d. At FIG. 6P, in response to user input 634a, computer system 600 displays emoji generation user interface 620. However, in FIG. 6P, because text was not previously provided and/or entered by the user, text field 620d is displayed without text, and generation of emojis has not yet been initiated by computer system 600 (e.g., placeholder 622 is not displayed within emoji generation user interface 620). At FIG. 6P, computer system 600 detects user input 634b, which includes one or more user inputs interacting with keyboard 620c.

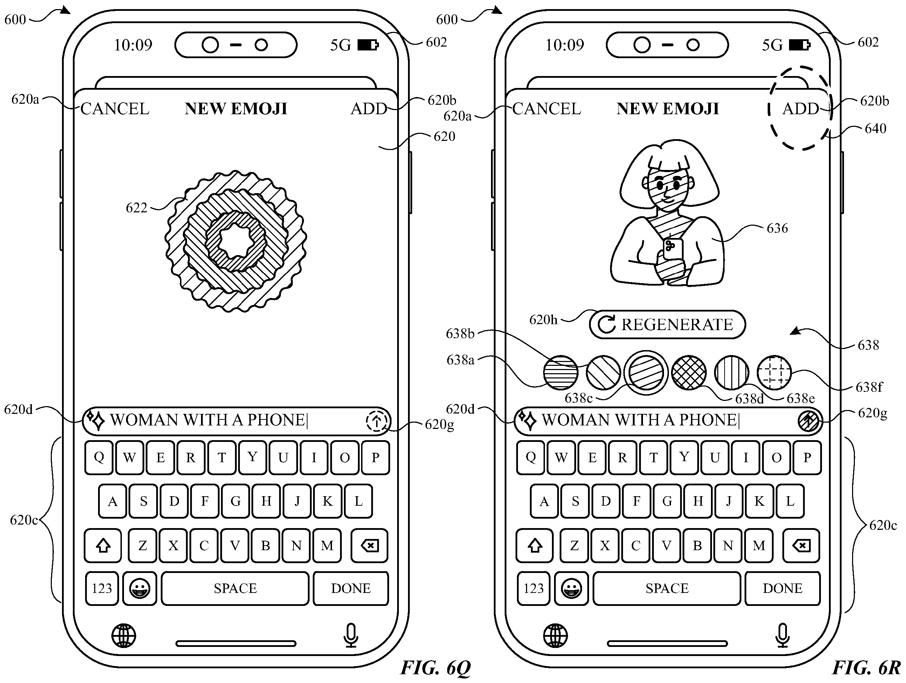

At FIG. 6Q, in response to user input 634b, computer system 600 displays, within text field 620d, user-entered text "woman with a phone." At FIG. 6Q, in response to user input 634b, computer system 600 initiates generation of one or more new emojis based on the user-entered text, and display placeholder 622 indicating that one or more emojis are being generated based on the user-entered text. At FIG. 6R, new emoji 636 has been generated based on the user-entered text, and computer system 600 displays emoji 636 within emoji generation user interface 620. As discussed above, in some embodiments, the emoji 636 is generated based on the entered search prompt using one or more artificial intelligence (AI) processes (e.g., foundation model 560), such as one or more generative AI processes. In some embodiments, the one or more AI processes (e.g., one or more machine learning models) are trained based on a training set that includes at least some of the set of preexisting emojis in emoji keyboard 610. In some embodiments, by training the one or more processes based on a training set that includes preexisting emojis from emoji keyboard 610, the one or more AI processes are trained to generate new emojis that are graphically similar to the preexisting emojis and/or that include visual elements of the preexisting emojis. In some embodiments, when a generated emoji depicts a particular concept, the generated emoji is displayed with one or more options for modifying the generated emoji. For example, at FIG. 6R, based on a determination that emoji 636 depicts a person, emoji 636 is displayed with skin tone picker 638, which includes skin tone options 638a-638f. Each skin tone option 638a-638f corresponds to a different skin tone, and selection of a respective skin tone option 638a-638f causes computer system 600 to modify emoji 636 using the selected skin tone. At FIG. 6R, computer system 600 detects user input 640 corresponding to selection of option 620b.

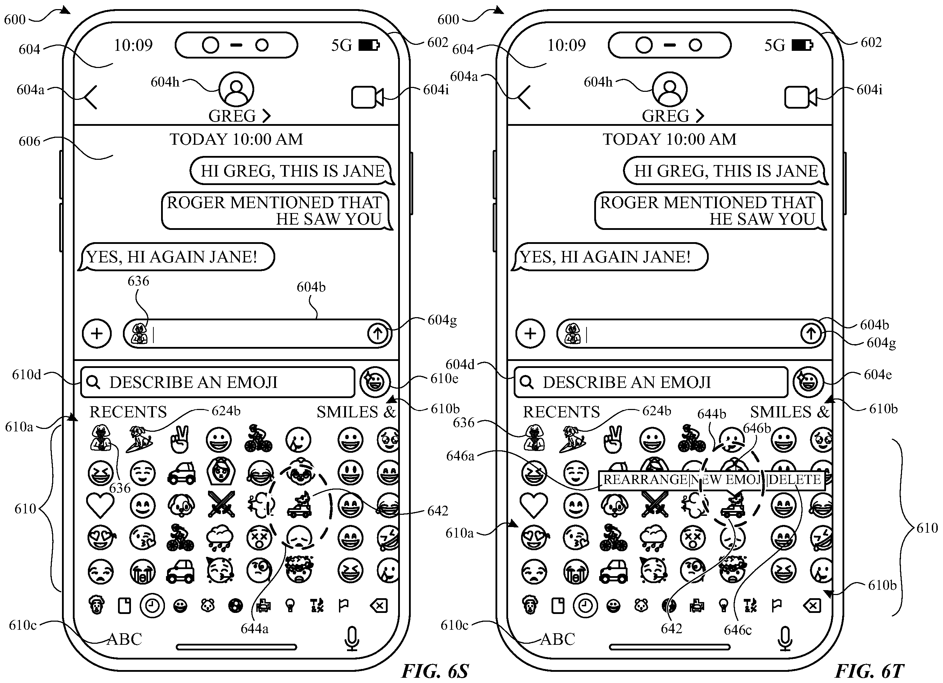

At FIG. 6S, in response to user input 640, computer system 600 ceases display of emoji generation user interface 620, and displays emoji 636 added to text field 636. Additionally, in response to user input 640, computer system 600 displays emoji 636 added to section 610a of emoji keyboard 610.

At FIG. 6S, computer system 600 detects user input 644a corresponding to selection of emoji 642 within emoji keyboard 610. In some embodiments, user input 644a comprises a long press input on emoji 642 (e.g., a continuous contact that lasts for greater than a threshold duration of time). Additionally, in the depicted scenario, emoji 642 is an emoji that was previously generated based on a user-provided text prompt. At FIG. 6T, in response to user input 644a, computer system 600 displays options 646a, 646b, 646c for emoji 642. Option 646a, when selected, causes computer system 600 to initiate a process for moving emoji 642 within emoji keyboard 610 (e.g., within section 610a) (e.g., based on user input and/or based on a user drag input). Option 646b, when selected, causes computer system 600 to display emoji generation user interface 620 to generate a new, revised version of emoji 642. Option 646c, when selected, causes computer system 600 to delete emoji 642 from emoji keyboard 610 and/or section 610a. At FIG. 6T, computer system 600 detects user input 644b (e.g., a tap input) corresponding to selection of option 646b.

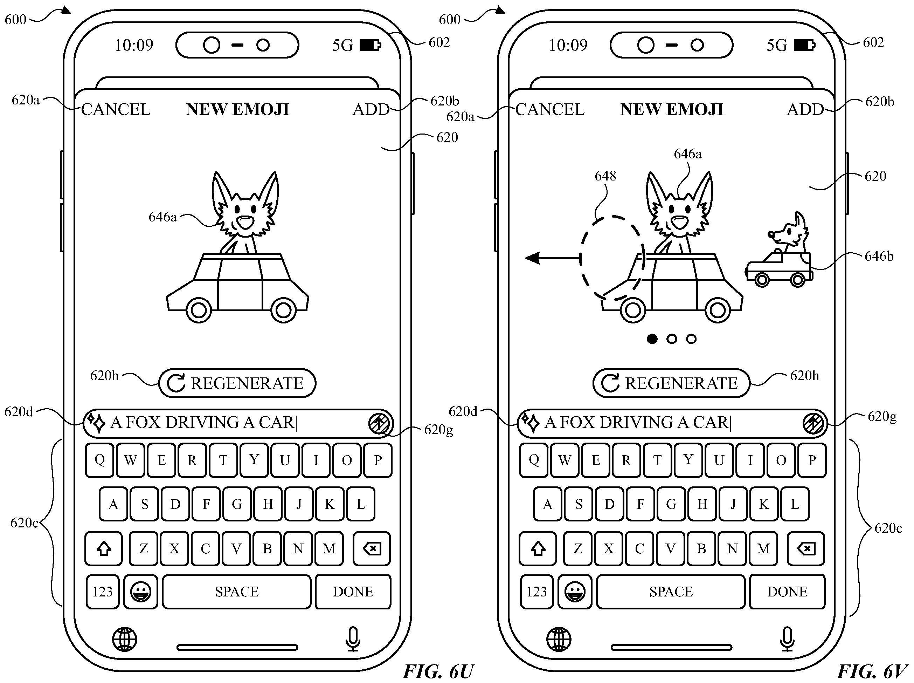

At FIG. 6U, in response to user input 644b, computer system 600 displays emoji generation user interface 620. At FIG. 6U, text field 620d in emoji generation user interface 620 is pre-filled with a text prompt that was used to generate emoji 642 when it was initially generated. Furthermore, in FIG. 6U, emoji generation user interface 620 displays a newly generated emoji 646a that is generated based on the text prompt shown in text field 620d. In some embodiments, new variations and/or new versions of emojis that are generated based on the same text prompt differ from one another, at least in part, based on the non-deterministic and/or pseudo-random manner in which generative AI processes generate new emojis.

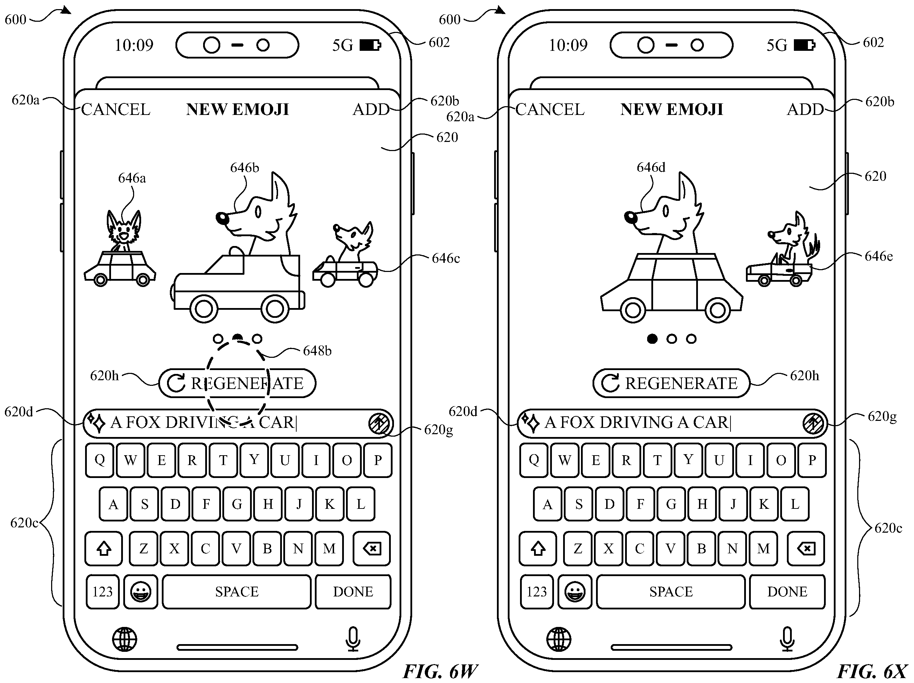

While the depicted embodiments have shown embodiments in which emoji generation user interface 620 displays only a single emoji, in other embodiments, emoji generation user interface 620 displays multiple emojis that are generated based on the user-provided text prompt. FIG. 6V depicts an embodiment in which emoji generation user interface 620 displays multiple emojis 646a, 646b that are generated based on the user-provided text prompt shown in text field 620d. At FIG. 6V, emoji 646a is in a center position of emoji generation user interface 620 to indicate that emoji 646a is a currently selected emoji (e.g., selection of option 620b would result in emoji 646a being selected and added to text field 604b rather than emoji 646b). At FIG. 6V, computer system 600 detects user input 648, which is a swipe left input within emoji generation user interface 620. At FIG. 6W, in response to user input 648, computer system 600 displays scrolling of emoji 646a and emoji 646b to the left so that emoji 646b is moved into the center position of emoji generation user interface 620. Additionally, in response to user input 648, computer system 600 displays additional emoji 646c that has been generated based on the user-provided text prompt. At FIG. 6W, computer system 600 detects user input 648b (e.g., a tap input) corresponding to selection of option 620h. At FIG. 6X, in response to user input 648b, computer system 600 ceases display of emojis 646a, 646b, 646c, and initiates generation of three new emojis based on the user-entered text prompt shown in text field 620d. At FIG. 6X, in response to user input 648b, computer system 600 displays, within emoji generation user interface 620, new emojis 646d, 646e that have been generated based on the user-provided text prompt shown in text field 620d.

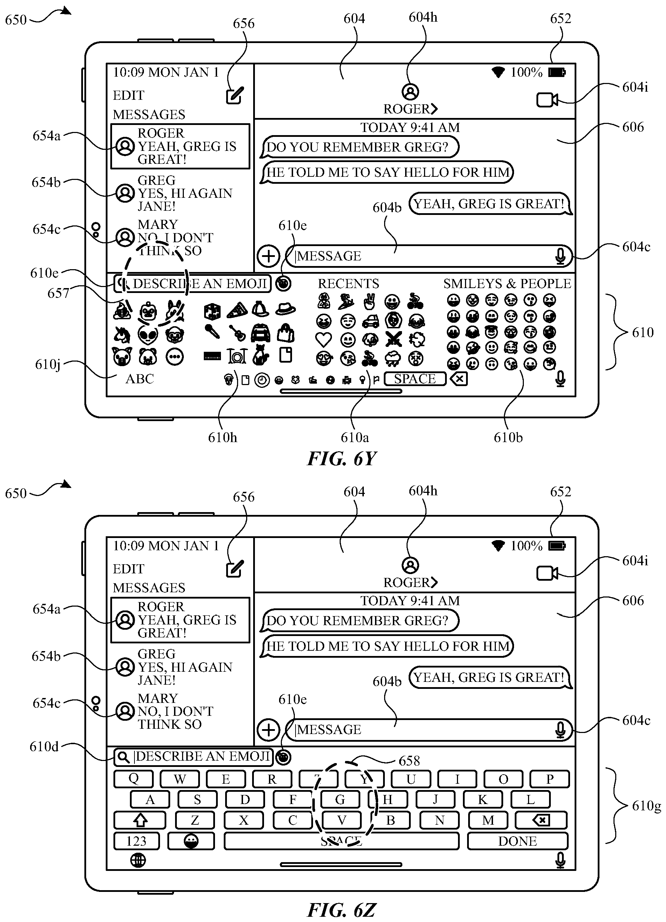

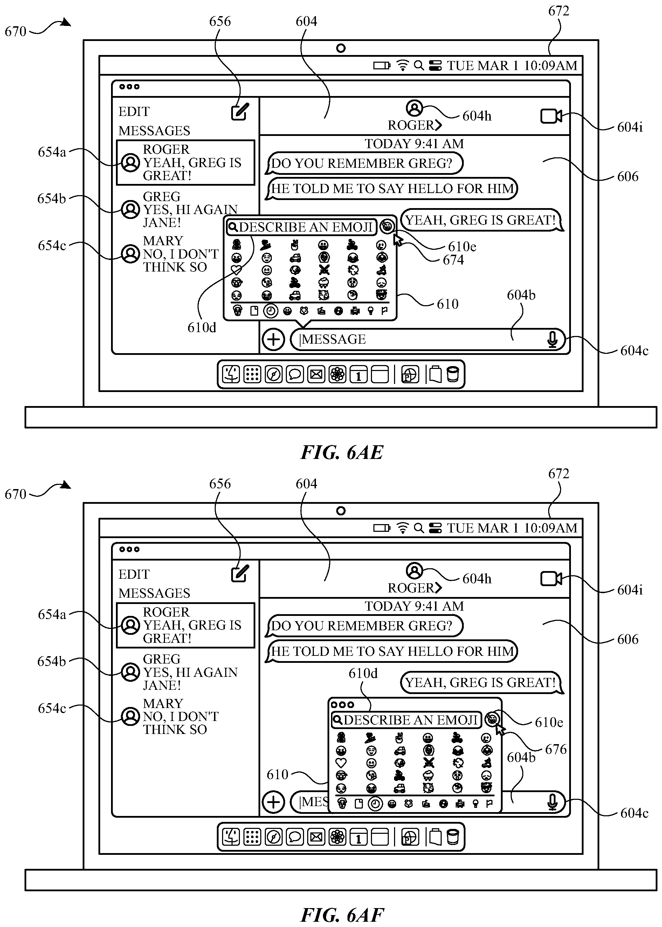

FIGS. 6Y-6AD depict the above-described user interfaces (e.g., including message user interface 620, emoji keyboard 610, and/or emoji generation user interface 620) displayed on a different computer system, computer system 650, according to various embodiments. FIGS. 6AE-6AI depict the above-described user interfaces (e.g., including message user interface 620, emoji keyboard 610, and/or emoji generation user interface 620) displayed on a third type of computer system, computer system 670, according to various embodiments.

FIG. 6Y illustrates computer system 650, which is a tablet that includes touch-sensitive display 652. At FIG. 6Y, computer system 650 displays messaging user interface 604 includes text field 604b, option 604c, participant information 604h, option 604i, emoji keyboard 610, text field 610e, emoji generation option 610e, and message region 606. Various features and/or characteristics of these components have been described above with reference to FIGS. 6A-6X. In FIG. 6Y, messaging user interface 604 also includes new message option 656, and message session representations 654a-654c. New message option 656, when selected, causes computer system 600 to initiate a process for creating and/or transmitting a new message to an external computer system. Message session representation 654a is representative of a first message session (e.g., between a user of the computer system and a person named Roger) and, when selected, causes display of messaging user interface 604 with message information corresponding to the messaging session between the user and Roger (e.g., as shown in FIG. 6Y). Message session representation 654b is representative of a second message session (e.g., between a user of the computer system and a person named Greg) and, when selected, causes display of messaging user interface 604 with message information corresponding to the messaging session between the user and Greg. Message session representation 654c is representative of a third message session (e.g., between a user of the computer system and a person named Mary) and, when selected, causes display of messaging user interface 604 with message information corresponding to the messaging session between the user and Mary. At FIG. 6Y, computer system 650 detects user input 657 (e.g., a tap input) corresponding to selection of text field 610e.

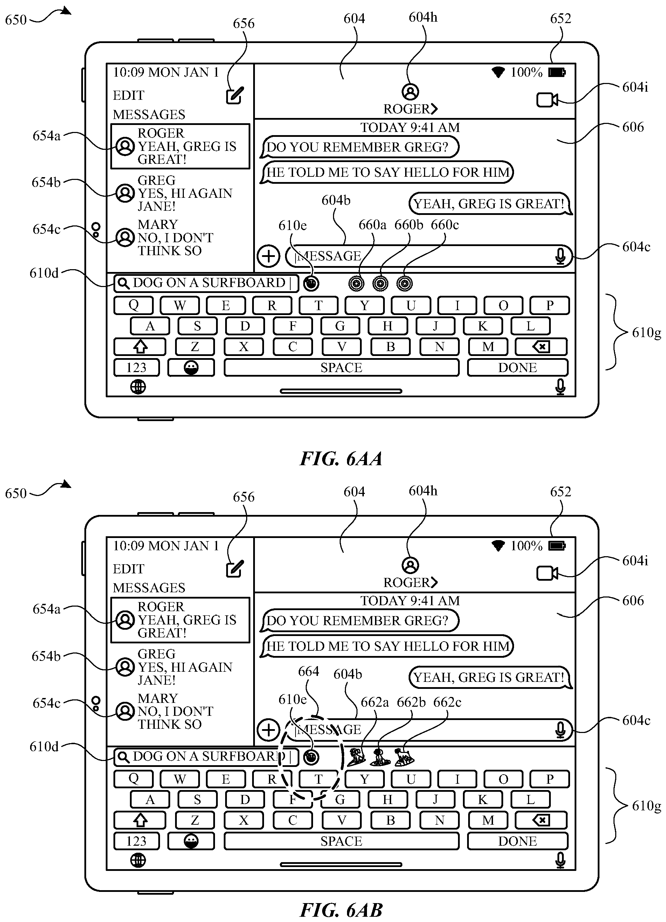

At FIG. 6Z, in response to user input 657, computer system 650 replaces display of emoji keyboard 610 with keyboard 610g. At FIG. 6Z, computer system 650 detects user input 658, which includes one or more user inputs interacting with keyboard 610g. At FIG. 6AA, in response to user input 658, computer system 650 displays user-entered text in text field 610d. Additionally, based on a determination that there are no preexisting and/or currently available emojis that are responsive to the user-entered search prompt, computer system 650 initiates generation of one or more emojis that are responsive to the user-entered search prompt. At FIG. 6AA, computer system 650 displays placeholders 660a-660c to indicate that three emojis are being generated based on the user-entered text.

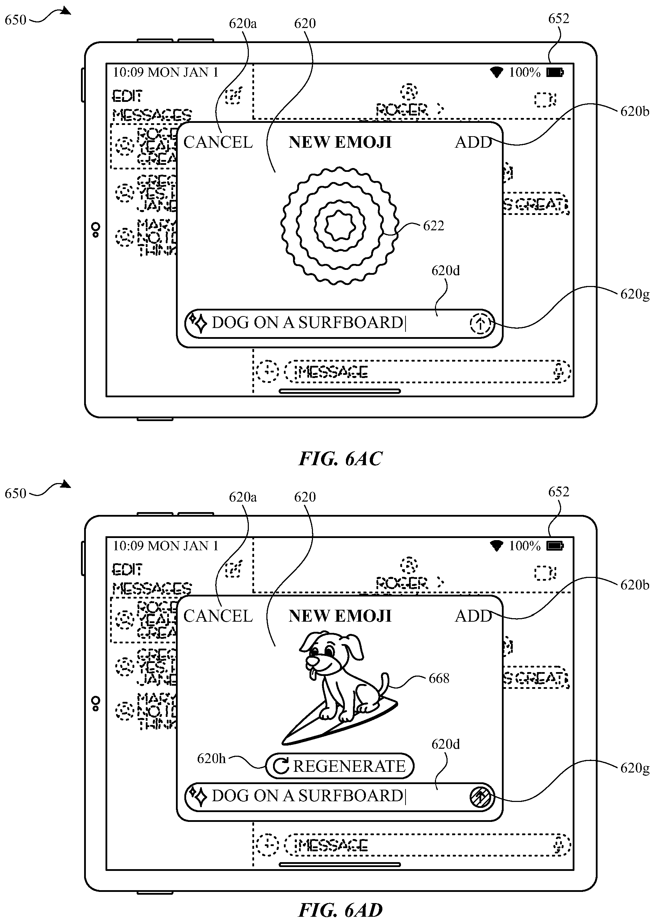

At FIG. 6AB, emojis 662a-662c have been generated based on the user-entered text, and are displayed by computer system 650. At FIG. 6AB, computer system 650 detects user input 664 (e.g., a tap input) corresponding to selection of emoji generation option 610e. At FIG. 6AC, in response to user input 664, computer system 600 displays emoji generation user interface 620. Based on a determination that text field 610d contained user-entered text when the user selected emoji generation option 610e, text field 620d in emoji generation user interface 620 is pre-filled with the user-entered text, and computer system 650 displays placeholder 622 to indicate that computer system 650 has initiated generation of new emojis based on the user-entered text. At FIG. 6AD, emoji 668 has been generated based on the user-entered text, and is displayed within emoji generation user interface 620.

FIG. 6AE illustrates computer system 670, which is a laptop computer that includes display 672, a hardware mouse and/or hardware mouse pad (not pictured), and a hardware keyboard (not pictured). At FIG. 6AE, computer system 670 displays messaging user interface 604 includes text field 604b, option 604c, participant information 604h, option 604i, emoji keyboard 610, text field 610e, emoji generation option 610e, message region 606, new message option 656, and message session representations 654a-654c. Various features and/or characteristics of these components have been described above with reference to FIGS. 6A-6AD. At FIG. 6AE, computer system 670 detects user input 674, which is a mouse drag input on emoji keyboard 610. At FIG. 6AF, in response to user input 674, computer system 670 displays movement of emoji keyboard 610 downwards and to the right. At FIG. 6AF, computer system 670 detects user input 676, which is a mouse click input corresponding to selection of emoji generation option 610e.

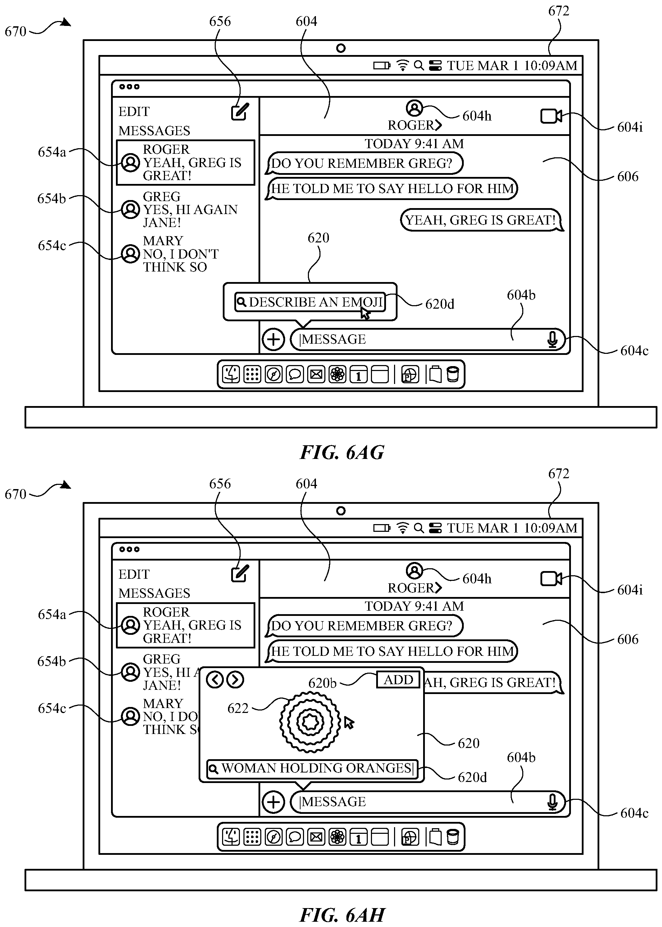

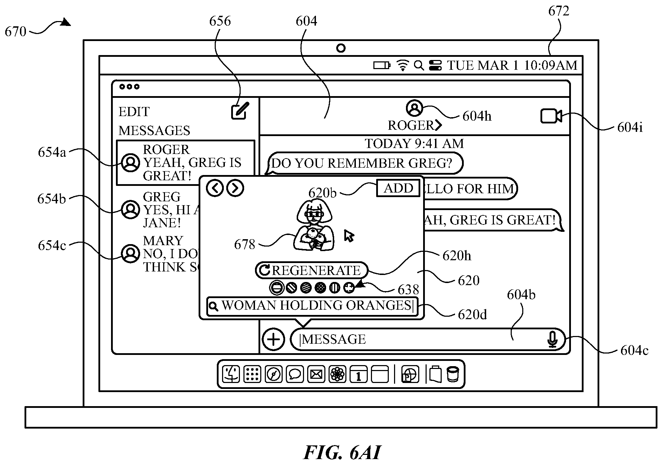

At FIG. 6AG, in response to user input 676, computer system 670 ceases display of emoji keyboard 610 and displays emoji generation user interface 620. Based on text field 610d not containing user-entered text when emoji generation option 610e was selected, text field 620d in emoji generation user interface 620 is also displayed without user-entered text, and computer system 670 has not yet initiated generation of a new emoji. At FIG. 6AH, computer system 670 has received user input via the hardware keyboard entering text "Woman holding oranges" into text field 620d. In response to the user input, computer system 670 displays the user entered text within text field 620d, initiates generation of a new emoji based on the user-entered text, and displays placeholder 622 within emoji generation user interface 620. At FIG. 6AI, emoji 678 has been generated based on the user-entered text and is displayed within emoji generation user interface 620. Furthermore, based on a determination that emoji 678 depicts a person, computer system 670 displays skin tone picker 638 within emoji generation user interface 620.

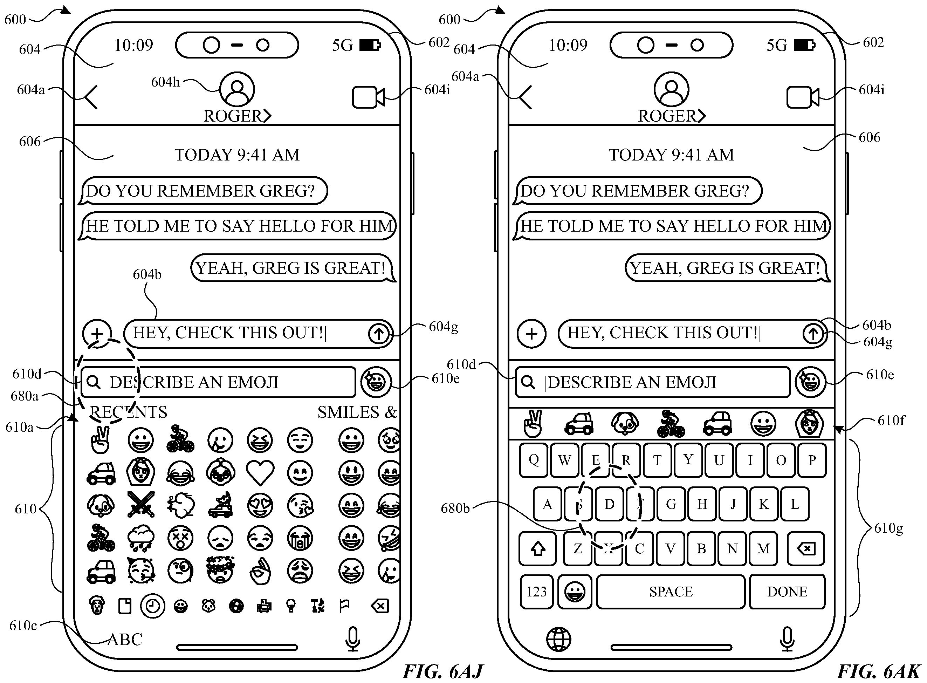

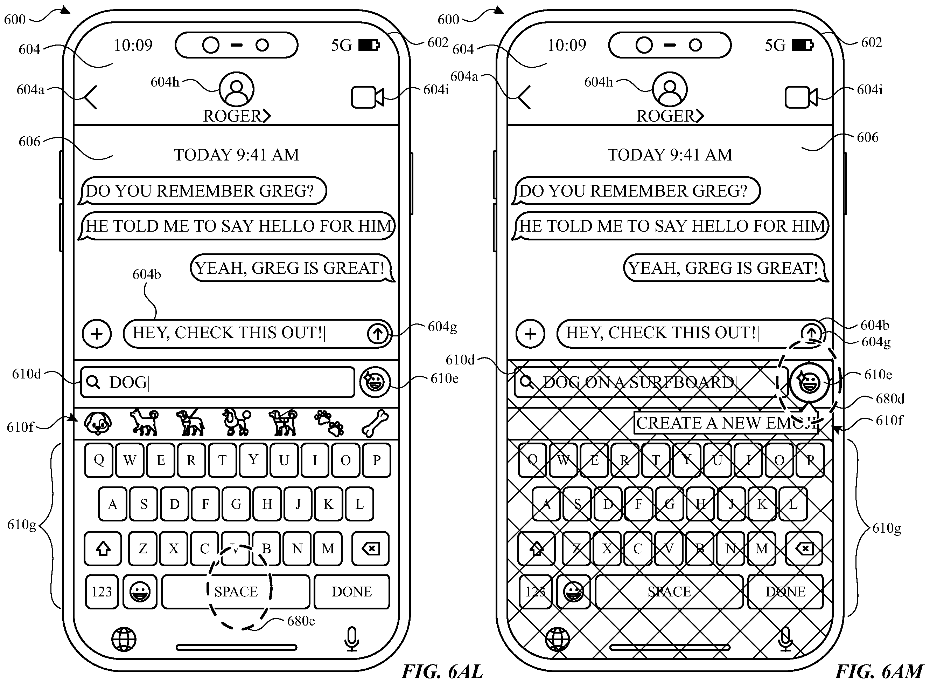

In some of the embodiments described above, when a user enters text into text field 610d, and there are no preexisting emojis that are responsive to the user-entered text, computer system 600 initiates generations of one or more new emojis based on the user-entered text and displays new emojis within messaging user interface 604 (e.g., in emoji suggestion region 610f) without ever displaying emoji generation user interface 620. FIGS. 6AJ-6AR depict an embodiment in which, rather than displaying new emojis within emoji suggestion region 610f, a user is required to open emoji generation user interface 620 in order to generate new emojis based on user-entered text. Requiring a user to open emoji generation user interface 620 to generate new emojis conserves computing resources by preventing and/or avoiding scenarios in which computing resources are used to automatically generate new emojis within messaging user interface 604 and/or emoji keyboard 610 even if a user was not interested in generating a new emoji. Requiring that the user open emoji generation user interface 620 to generate a new emoji ensures that the user provides user input confirming that the user wishes to generate a new emoji before computing resources are used to generate new emojis. At FIG. 6AJ, computer system 600 displays messaging user interface 604 with emoji keyboard 610. At FIG. 6AJ, computer system 600 detects user input 680a, corresponding to selection of text field 610d. At FIG. 6AK, in response to user input 680a, computer system 600 replaces display of emoji keyboard 610 with keyboard 610g. At FIG. 6AK, computer system 600 detects user input 680b, which includes one or more user inputs interacting with keyboard 610g. At FIG. 6AL, in response to user input 680b, computer system 600 displays the text "dog" within text field 610d. Additionally, based on user entry of the term "dog" into text field 610d, computer system 600 displays one or more preexisting emojis that are responsive to the term "dog" within emoji suggestions region 610f.

At FIG. 6AL, computer system 600 detects user input 680c, which includes one or more user inputs interacting with keyboard 610g. At FIG. 6AM, in response to user input 680c, computer system 600 displays text "dog on a surfboard" within text region 610d. At FIG. 6AM, based on a determination that there are no preexisting emojis (e.g., within emoji keyboard 610 and/or on computer system 600) that are responsive to the user-entered text, computer system 600 does not display any emojis within emoji suggestion region 610f. Furthermore, based on the determination that there are no preexisting emojis that are responsive to the user-entered text, computer system 600 displays a visual animation that directs the user to emoji generation option 610e. For example, in some embodiments, computer system 600 displays dimming, blurring, and/or other visual deemphasis of displayed components outside of emoji generation option 610e, thereby highlighting and/or visually emphasizing emoji generation option 610e. At FIG. 6AM, computer system 600 detects user input 680d (e.g., a tap input) corresponding to selection of emoji generation option 610e.

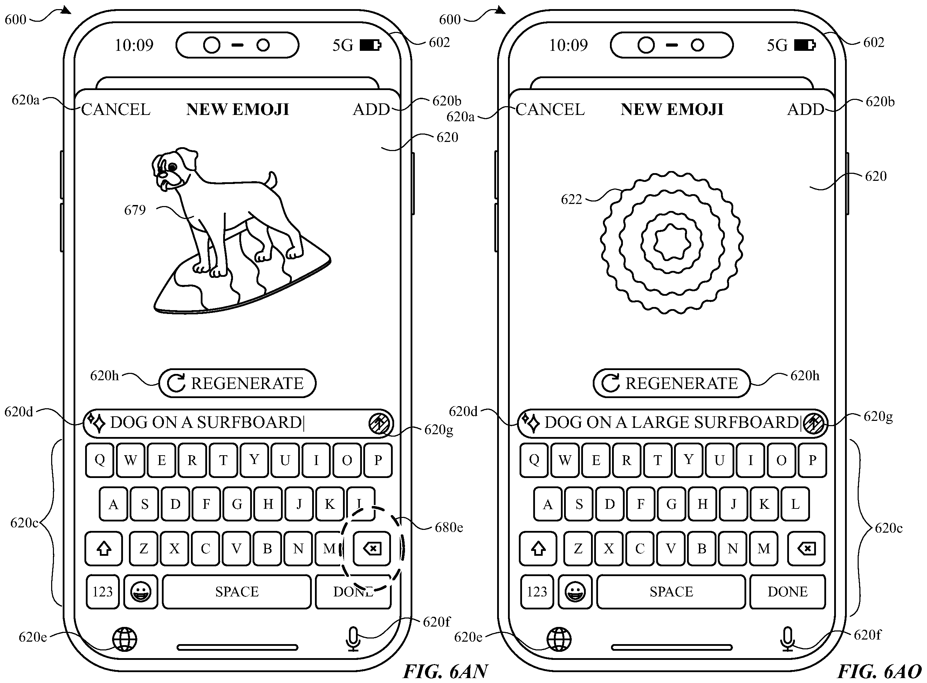

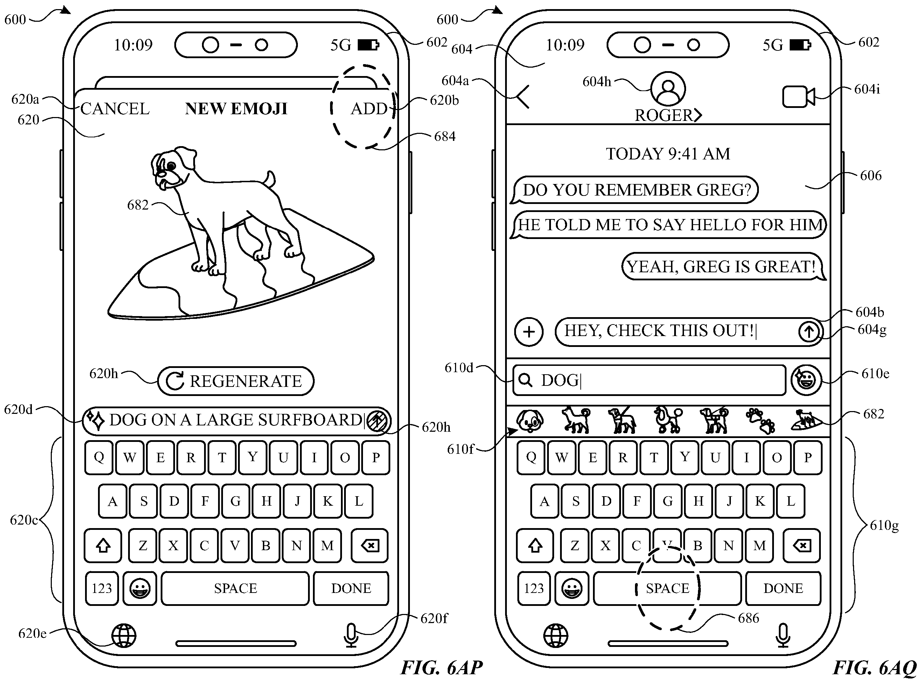

At FIG. 6AN, in response to user input 680d, computer system 600 displays emoji generation user interface 620 with the user-entered text pre-filled into text field 620d. Furthermore, in FIG. 6AN, emoji 679 has been generated based on the user-entered text and is displayed within emoji generation user interface 620. At FIG. 6AN, computer system 600 detects user input 680e, which includes one or more user inputs interacting with keyboard 620c. At FIG. 6AO, in response to user input 680e, computer system 600 displays additional text in text field 620d such that the user-entered text now ready "dog on a large surfboard." Additionally, in response to user input 680e, computer system 600 initiates generation of a new emoji based on the revised user-entered text, and displays placeholder 622 indicating that a new emoji is being generated. At FIG. 6AP, in response to user input 680e, computer system 600 displays emoji 682, which was generated based on the revised user-entered text. At FIG. 6AP, while displaying emoji 682, computer system 600 detects user input 684 (e.g., a tap input) corresponding to selection of option 620b. As discussed above, in some embodiments, in response to user input 684, computer system 600 adds emoji 682 to text field 604b in messaging user interface 604 and also adds emoji 682 to emoji keyboard 610.

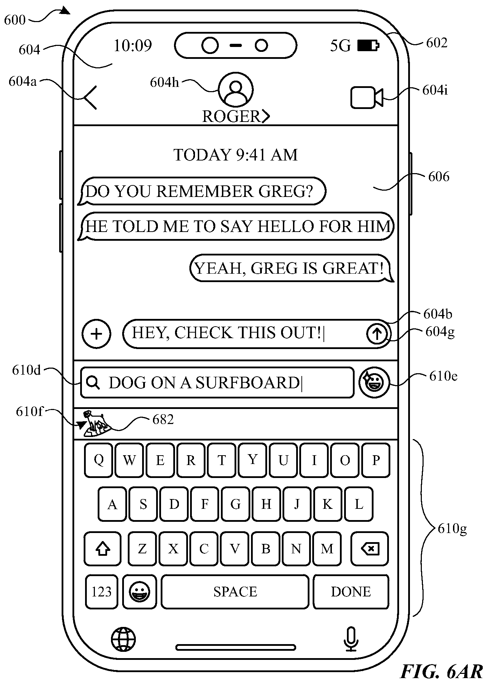

FIG. 6AQ depicts an example scenario that occurs subsequent to user input 684 in FIG. 6AP. At FIG. 6AQ, computer system 600 displays messaging user interface 604. In FIG. 6AQ, the user has entered the search term "dog" into text field 610d. In response to the user entering the term "dog" into text field 610d, computer system 600 displays preexisting emojis that are responsive to the term "dog" within emoji suggestion region 610f. The preexisting emojis that are responsive to the term "dog" now include emoji 682 based on user input 684 causing computer system 600 to store and/or save emoji 682. At FIG. 6AQ, computer system 600 detects user input 686, which includes one or more inputs interacting with keyboard 610g. At FIG. 6AR, in response to user input 686, computer system 600 displays text "dog on a surfboard" within text field 610d. Previously, in FIG. 6AM, the search prompt "dog on a surfboard" did not yield any results, and computer system 600 displayed an animation directing the user to emoji generation option 610f. However, in FIG. 6AR, based on user input 686 in FIG. 6AQ, emoji 682 is now saved to computer system 600 and is displayed as a result that is responsive to the search text "dog on a surfboard."

FIG. 7 is a flow diagram illustrating a method for providing dynamically generated content using a computer system in accordance with some embodiments. Method 700 is performed at a computer system (e.g., 100, 300, 500, 600, 650, and/or 670) (e.g., a smart phone, a smart watch, a tablet, a laptop, a desktop, a wearable device, wrist-worn device, and/or head-mounted device) that is in communication with one or more display generation components (e.g., 602) (e.g., a display, a touch-sensitive display, and/or a display controller) and one or more input devices (e.g., 602) (e.g., a touch-sensitive surface, a touch-sensitive display, a button, a rotatable input mechanism, a depressible and rotatable input mechanism, a camera, an accelerometer, and/or an inertial measurement unit (IMU)). Some operations in method 700 are, optionally, combined, the orders of some operations are, optionally, changed, and some operations are, optionally, omitted.

As described below, method 700 provides an intuitive way for providing dynamically generated content. The method reduces the cognitive burden on a user for accessing dynamically generated content, thereby creating a more efficient human-machine interface. For battery-operated computing devices, enabling a user to access dynamically generated content faster and more efficiently conserves power and increases the time between battery charges.

The computer system receives (702), via the one or more input devices, a first user input (e.g., 612b and/or 612c) (e.g., one or more inputs) (e.g., one or more touch inputs, one or more gesture inputs, one or more air gesture inputs, one or more spoken inputs, and/or one or more hardware inputs) (e.g., a user input inputting text and/or specifying one or more terms). In response to receiving the first user input (704): in accordance with a determination that generative emoji criteria are not met (e.g., in accordance with a determination that the first user input does not meet generative emoji criteria and/or in accordance with a determination that generative emoji criteria are not met after and/or when the first user input is received) (706), the computer system displays (708), via the one or more display generation components, a first set of preexisting emojis (e.g., one or more emojis) (e.g., a first set of images; and/or a first set of visual objects) selected from a set of preexisting emojis (e.g., 610f in FIG. 6E) (e.g., emojis that were saved on the computer system prior to receiving the first user input; emojis that are saved and/or accessible in an emoji keyboard; and/or emojis that were generated prior to receiving the first user input) (e.g., in some embodiments, without displaying one or more dynamically generated emojis (e.g., automatically-generated emojis, generative emojis, automatically-generated visual content, and/or generative visual content); and/or without displaying any dynamically generated emojis (e.g., automatically-generated emojis, generative emojis, automatically-generated visual content, and/or generative visual content) that were generated in response to the first user input) based on the first user input (e.g., in response to the first user input; based on one or more terms specified by the first user input; and/or in response to one or more terms specified by the first user input); and in accordance with a determination that the generative emoji criteria are met (e.g., in accordance with a determination that the first user input meets the generative emoji criteria and/or in accordance with a determination that generative emoji criteria are met after and/or when the first user input is received) (710), the computer system displays (712), via the one or more display generation components, a first set of dynamically generated emojis (e.g., 616a-616c in FIG. 6G) (e.g., one or more dynamically generated emojis) (e.g., automatically-generated emojis, generative emojis, automatically-generated visual content, and/or generative visual content) that are generated (e.g., automatically using an AI process or a generative AI process) in response to the first user input (e.g., a first set of dynamically generated emojis that were not saved on the computer system prior to receiving the first user input and/or that are generated after receiving the first user input and based on the first user input) (e.g., in some embodiments, without displaying one or more preexisting emojis and/or without displaying any preexisting emojis) (e.g., a first set of dynamically generated emojis that are generated in response to the first user input; based on one or more terms specified by the first user input; and/or in response to one or more terms specified by the first user input). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently. Additionally, dynamically generating emojis only when certain criteria are satisfied (e.g., when preexisting emojis that match the user input are not available), conserves computing resources and power usage.

In some embodiments, the first user input (e.g., 612b and/or 612c) includes one or more user inputs providing a text input (e.g., one or more user inputs entering one or more words and/or specifying one or more words). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first user input (e.g., 612b and/or 612c) includes one or more user inputs entering text into a search field (e.g., 620d) (e.g., a text field into which a user enters search terms for performing a search (e.g., to search for emojis)). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first user input (e.g., 612b and/or 612c) includes one or more user inputs entering text into a text field (e.g., 620d) (e.g., a text document; a message entry field to enter text into a messaging session; a search field; and/or a different text field for entering text). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first user input includes one or more spoken inputs (e.g., one or more words and/or sounds spoken by a user and received by the computer system (e.g., via one or more microphones)) (e.g., in some embodiments, a user enters text into text field 620d via spoken input by using option 620f). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, while displaying the first set of dynamically generated emojis (e.g., 616a-616c), the computer system receives, via the one or more input devices, a selection input (e.g., one or more inputs) (e.g., one or more touch inputs, one or more gesture inputs, one or more air gesture inputs, one or more spoken inputs, and/or one or more hardware inputs) corresponding to selection of a first dynamically generated emoji of the first set of dynamically generated emojis (e.g., selection of emoji 616a, emoji 616b, and/or emoji 616c). In response to receiving the selection input corresponding to selection of the first dynamically generated emoji, the computer system inserts the first dynamically generated emoji in line with a first set of text (e.g., selection of an emoji 616a-616c in FIG. 6G causes insertion of the selected emoji into text field 604b (e.g., in some embodiments, as an in line text object)) (e.g., in a text entry field (e.g., a message entry field; a search entry field; and/or other text entry field) and/or in a document that includes text) (e.g., inserting the first dynamically generated emoji in a line and/or a row of text). Allowing a user to dynamically generate emojis based on user input, and enter those emojis in-line with text, allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, while displaying the first set of dynamically generated emojis (e.g., 616a-616c), the computer system receives, via the one or more input devices, a selection input (e.g., one or more inputs) (e.g., one or more touch inputs, one or more gesture inputs, one or more air gesture inputs, one or more spoken inputs, and/or one or more hardware inputs) corresponding to selection of a first dynamically generated emoji of the first set of dynamically generated emojis. In response to receiving the selection input corresponding to selection of the first dynamically generated emoji, the computer system inserts the first dynamically generated emoji as an image (e.g., as an image inserted into a document; and/or as an image inserted into a user interface) (e.g., in some embodiments, selection of an emoji 616a-616c in FIG. 6G causes insertion of the selected emoji into text field 604b as an image). Allowing a user to dynamically generate emojis based on user input, and enter those emojis as images, allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the set of preexisting emojis (and/or, optionally, the first set of preexisting emojis) includes a first emoji that was previously dynamically generated (e.g., using an AI process or a generative AI process) in response to a user input prior to receiving the first user input (e.g., in FIG. 6O, emoji 624b is added to emoji keyboard 610 and is now a preexisting emoji for future use; and/or in FIGS. 6AQ-6AR, emoji 682 is available as a preexisting emoji that is responsive to the user-entered search prompt). In some embodiments, emojis that were previously dynamically generated (e.g., using an AI process or a generative AI process) and/or emojis that were previously dynamically generated (e.g., using an AI process or a generative AI process) and are saved and/or used by the user are added to the set of preexisting emojis. Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently. Additionally, dynamically generating emojis only when certain criteria are satisfied (e.g., when preexisting emojis that match the user input are not available), as well as saving previously-generated emojis for future use by a user, conserves computing resources and power usage.

In some embodiments, displaying the first set of dynamically generated emojis comprises: in accordance with a determination that the first user input specifies a first set of terms (e.g., a first set of one or more words), displaying, via the one or more display generation components, a first respective set of dynamically generated emojis (e.g., automatically-generated emojis, generative emojis, automatically-generated visual content, and/or generative visual content) that are generated (e.g., using an AI process or a generative AI process) in response to the first set of terms (e.g., in FIG. 6G, a first set of emojis 616a-616c are generated based on a first text input); and in accordance with a determination that the first user input specifies a second set of terms different from the first set of terms (e.g., a second set of one or more words), displaying, via the one or more display generation components, a second respective set of dynamically generated emojis (e.g., automatically-generated emojis, generative emojis, automatically-generated visual content, and/or generative visual content) that are generated (e.g., using an AI process or a generative AI process) in response to the second set of terms (e.g., without displaying the first respective set of dynamically generated emojis) (e.g., in FIGS. 6R, and/or 6U-6X, different emojis are generated based on user input of a different set of terms), wherein the second respective set of dynamically generated emojis is different from the first respective set of dynamically generated emojis. In some embodiments, different sets of user-provided terms result in different dynamically generated emojis being generated. Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first set of dynamically generated emojis (e.g., 616a-616c) are generated in response to the first user input using one or more machine learning models (e.g., one or more generative AI image models) (e.g., foundation model 560). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the machine learning model (e.g., foundation model 560) (e.g., an AI process or a generative AI process) is trained based on a training set that includes at least some of the set of preexisting emojis (e.g., emojis in emoji keyboard 610). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the machine learning model (e.g., foundation model 560) (e.g., an AI process or a generative AI process) is configured to re-use one or more elements of one or more preexisting emojis of the set of preexisting emojis (e.g., emojis in emoji keyboard 610). In some embodiments, the machine learning model dynamically generates emojis by, in some instances, re-using and/or modifying preexisting elements found in the set of preexisting emojis. Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first user input (e.g., 612b and/or 612c) specifies one or more search terms (e.g., one or more words provided by and/or entered by a user); and the generative emoji criteria include a requirement that fewer than a threshold number of preexisting emojis (e.g., fewer than five preexisting emojis; fewer than three preexisting emojis; or fewer than one preexisting emoji) in the set of preexisting emojis are determined to be responsive to (e.g., are determined to match and/or are determined to meet) the one or more search terms in order for the generative emoji criteria to be met (e.g., in FIG. 6F, there are no preexisting emojis that are responsive to the user-entered search text). In some embodiments, the generative emoji criteria include a requirement that there are no preexisting emojis in the set of preexisting emojis that match and/or that are responsive to the one or more search terms in order for the generative emoji criteria to be met. Dynamically generating emojis only when certain criteria are satisfied (e.g., when preexisting emojis that match the user input are not available) conserves computing resources and power usage.

In some embodiments, the computer system receives, via the one or more input devices, a second user input (e.g., 612b and/or 612c) (e.g., one or more inputs) (e.g., one or more touch inputs, one or more gesture inputs, one or more air gesture inputs, one or more spoken inputs, and/or one or more hardware inputs) (e.g., a user input inputting text and/or specifying one or more terms). In response to receiving the second user input: in accordance with a determination that generative emoji criteria are not met (e.g., in accordance with a determination that the second user input does not meet generative emoji criteria and/or in accordance with a determination that generative emoji criteria are not met after and/or when the second user input is received), the computer system displays, via the one or more display generation components, a second set of preexisting emojis (e.g., one or more emojis) (e.g., a second set of images; and/or a second set of visual objects) selected from the set of preexisting emojis based on the second user input (e.g., in response to the second user input; based on one or more terms specified by the second user input; and/or in response to one or more terms specified by the second user input) without displaying any emojis that are generated (e.g., using an AI process or a generative AI process) based on the second user input (e.g., in FIG. 6E, only preexisting emojis are displayed in region 610f). While displaying the second set of preexisting emojis without displaying any emojis that are generated based on the second user input (e.g., 610f in FIG. 6E), the computer system receives, via the one or more input devices, a third user input (e.g., one or more inputs) (e.g., one or more touch inputs, one or more gesture inputs, one or more air gesture inputs, one or more spoken inputs, and/or one or more hardware inputs) (e.g., selection of option 610e in FIG. 6E). In response to receiving the third user input, the computer system displays, via the one or more display generation components, one or more dynamically generated emojis (e.g., automatically-generated emojis, generative emojis, automatically-generated visual content, and/or generative visual content) that are generated (e.g., using an AI process or a generative AI process) based on the second user input (e.g., one or more dynamically generated emojis that were not saved on the computer system prior to receiving the second user input and/or that are generated after receiving the second user input and based on the second user input) (e.g., one or more dynamically generated emojis that are generated in response to the second user input; based on one or more terms specified by the second user input; and/or in response to one or more terms specified by the second user input) (e.g., in some embodiments, had the user provided a user input selection option 610e in FIG. 6E, computer system 600 generates one or more dynamically generated emojis based on the user entered text "dog" (e.g., even though there are preexisting emojis that are responsive to the user-entered text)). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently. Additionally, dynamically generating emojis only when certain criteria are satisfied (e.g., when preexisting emojis that match the user input are not available and/or based on specific user input requesting generation of such emojis) conserves computing resources and power usage.

In some embodiments, the computer system receives, via the one or more input devices, a fourth user input (e.g., 612b and/or 612c) (e.g., one or more inputs) (e.g., one or more touch inputs, one or more gesture inputs, one or more air gesture inputs, one or more spoken inputs, and/or one or more hardware inputs) (e.g., a user input inputting text and/or specifying one or more terms). In response to receiving the fourth user input: in accordance with a determination that generative emoji criteria are met (e.g., in accordance with a determination that the fourth user input meets generative emoji criteria and/or in accordance with a determination that generative emoji criteria are met after and/or when the fourth user input is received), the computer system displays, via the one or more display generation components, one or more dynamically generated emojis (e.g., 616a-6161c) (e.g., automatically-generated emojis, generative emojis, automatically-generated visual content, and/or generative visual content) that are generated (e.g., using an AI process or a generative AI process) in response to the fourth user input (e.g., dynamically generated emojis that were not saved on the computer system prior to receiving the fourth user input and/or that are generated after receiving the fourth user input and based on the fourth user input) (e.g., in some embodiments, without displaying one or more preexisting emojis and/or without displaying any preexisting emojis) (e.g., one or more dynamically generated emojis that are generated in response to the fourth user input; based on one or more terms specified by the fourth user input; and/or in response to one or more terms specified by the fourth user input). While displaying the one or more dynamically generated emojis that are generated in response to the fourth user input (e.g., 616a-616c), the computer system receives, via the one or more input devices, a fifth user input (e.g., one or more inputs) (e.g., one or more touch inputs, one or more gesture inputs, one or more air gesture inputs, one or more spoken inputs, and/or one or more hardware inputs) (e.g., 618). In response to receiving the fifth user input, the computer system displays, via the one or more display generation components, a generative emoji user interface (e.g., 620). In some embodiments, the generative emoji user interface includes a second set of dynamically generated emojis (e.g., automatically-generated emojis, generative emojis, automatically-generated visual content, and/or generative visual content) that are generated (e.g., using an AI process or a generative AI process) in response to the fourth user input (e.g., a second set of dynamically generated emojis different from or the same as the one or more dynamically generated emojis that are generated in response to the fourth user input). Providing the user with a selectable option to access a generative emoji user interface for generating emojis allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the computer system displays, via the one or more display generation components, a generative emoji option (e.g., 610e) (e.g., a button, an affordance, a link, and/or a visual user interface object), wherein: the fifth user input (e.g., 618) comprises a selection input (e.g., one or more inputs) (e.g., one or more touch inputs, one or more gesture inputs, one or more air gesture inputs, one or more spoken inputs, and/or one or more hardware inputs) corresponding to selection of the generative emoji option (e.g., 610e). Providing the user with a selectable option to access a generative emoji user interface for generating emojis (e.g., using an AI process or a generative AI process) allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, while displaying the generative emoji option (e.g., 610e), the computer system receives, via the one or more input devices, a sixth user input (e.g., 618 and/or 634a) (e.g., one or more inputs) (e.g., one or more touch inputs, one or more gesture inputs, one or more air gesture inputs, one or more spoken inputs, and/or one or more hardware inputs) corresponding to selection of the generative emoji option. In response to receiving the sixth user input, the computer system displays, via the one or more display generation components, the generative emoji user interface (e.g., 620), including: in accordance with a determination that one or more search terms have been specified by a user (e.g., entered by a user and/or provided by a user) when the sixth user input is received (e.g., 618 in FIG. 6G) (in some embodiments, in accordance with a determination that one or more search terms are displayed when the sixth user input is received), displaying one or more dynamically generated emojis (e.g., 624a in FIG. 6I) (e.g., automatically-generated emojis, generative emojis, automatically-generated visual content, and/or generative visual content) that are generated (e.g., using an AI process or a generative AI process) based on the one or more search terms (e.g., that are generated to be responsive to the one or more search terms and/or are generated in response to the one or more search terms) within the generative emoji user interface (e.g., 620); and in accordance with a determination that no search terms (e.g., entered by a user and/or provided by a user) have been specified by a user when the sixth user input is received (e.g., 634a in FIG. 6O) (in some embodiments, in accordance with a determination that no search terms are displayed when the sixth user input is received), displaying the generative emoji user interface (e.g., 620 in FIG. 6P) without displaying any dynamically generated emojis within the generative emoji user interface. Providing the user with a selectable option to access a generative emoji user interface for generating emojis allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, displaying the generative emoji user interface (e.g., 620) further includes: in accordance with a determination that one or more search terms have been specified by a user (e.g., entered by a user and/or provided by a user) when the sixth user input is received (e.g., 618 in FIG. 6G) (in some embodiments, in accordance with a determination that one or more search terms are displayed when the sixth user input is received), displaying the one or more search terms within the generative emoji user interface (e.g., 620d in FIG. 6H) (e.g., within a search field that is part of the generative emoji user interface); and in accordance with a determination that no search terms (e.g., entered by a user and/or provided by a user) have been specified by a user when the sixth user input is received (e.g., 634a in FIG. 6O) (in some embodiments, in accordance with a determination that no search terms are displayed when the sixth user input is received), displaying, within the generative emoji user interface, one or more instructions prompting a user to specify one or more search terms (e.g., 620 in FIG. 6P) (e.g., prompting a user to enter text into a search field and/or prompting a user to speak one or more search terms). Providing the user with a selectable option to access a generative emoji user interface for generating emojis allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently. Additionally, displaying entered text into a search field when text has been provided; and displaying instructions to enter text when text has not been provided, provides the user with a visual indication of a state of the computer system (e.g., whether the computer system has received a text input for generation of emojis). Doing so enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, displaying the generative emoji user interface (e.g., 620) comprises: displaying, within the generative emoji user interface, a first dynamically generated emoji (e.g., an automatically-generated emoji, a generative emoji, automatically-generated visual content, and/or generative visual content) that is generated (e.g., using an AI process or a generative AI process) in response to one or more terms provided by a user; and in accordance with a determination that the first dynamically generated emoji includes a first type of content (e.g., depicts a first type of object and/or depicts a person), displaying, within the generative emoji user interface, a first option (e.g., 638, 638a, 638b, 638c, 638d, 638e, and/or 638f) that, when selected, modifies a visual appearance of the first dynamically generated emoji (e.g., changes one or more colors of the dynamically generated emoji, changes the size of one or more portions of the dynamically generated emoji, and/or changes the shape of one or more portions of the dynamically generated emoji); and in accordance with a determination that the first dynamically generated emoji does not include the first type of content, forgoing displaying the first option within the generative emoji user interface (e.g., 620 in FIG. 6I). Providing the first option only when the first dynamically generated emoji includes a first type of content enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the determination that the first dynamically generated emoji includes a first type of content comprises a determination that the first dynamically generated emoji depicts at least one person including a first person (e.g., 636); and the first option comprises a skin tone picker option (e.g., 638, 638a, 638b, 638c, 638d, 638e, and/or 638f) that, when selected, modifies a skin tone color of the first person. Providing the a skin tone picker only when the first dynamically generated emoji depicts a person enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, while concurrently displaying the first dynamically generated emoji (e.g., 636) and the skin tone picker option (e.g., 638, 638a, 638b, 638c, 638d, 638e, and/or 638f), the computer system receives, via the one or more input devices, a selection input (e.g., one or more inputs) (e.g., one or more touch inputs, one or more gesture inputs, one or more air gesture inputs, one or more spoken inputs, and/or one or more hardware inputs) corresponding to selection of the skin tone picker option (e.g., 638a, 638b, 638c, 638d, 638e, and/or 638f). In response to receiving the selection input corresponding to selection of the skin tone picker option, the computer system displays a skin tone of the first person (e.g., 636) changing from a first color to a second color different from the first color (e.g., a second color that corresponds to the first option). Subsequent to displaying the skin tone of the first person changing from the first color to the second color, the computer system receives, via the one or more input devices, a seventh user input (e.g., one or more inputs) (e.g., one or more touch inputs, one or more gesture inputs, one or more air gesture inputs, one or more spoken inputs, and/or one or more hardware inputs) specifying a second set of terms. In response to receiving the seventh user input specifying the second set of terms, the computer system displays, via the one or more display generation components and within the generative emoji user interface, a second dynamically generated emoji (e.g., an automatically-generated emoji, a generative emoji, automatically-generated visual content, and/or generative visual content) that is generated (e.g., using an AI process or a generative AI process) in response to the seventh user input and the second set of terms, wherein: the second dynamically generated emoji is different from the first dynamically generated emoji; the second dynamically generated emoji includes a second person (e.g., a second person different from the first person); and the second person has a skin tone that is the second color based on user selection of the skin tone picker option (e.g., 638a, 638b, 638c, 638d, 638e, and/or 638f) that corresponds to the second color while the first dynamically generated emoji was displayed. In some embodiments, user-selected skin tone options are applied to future dynamically generated emojis that depict people. Keeping record of the user's previous skin tone selection and applying it to future dynamically generated emojis allows the user to generate emojis with fewer user inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the computer system concurrently displays, within the generative emoji user interface (e.g., 620): a first respective dynamically generated emoji (e.g., 624a) (e.g., an automatically-generated emoji, a generative emoji, automatically-generated visual content, and/or generative visual content) that was dynamically generated (e.g., using an AI process or a generative AI process) in response to one or more terms provided by a user; and a regenerate option (e.g., 620h) (e.g., an affordance, a button, and/or a visual user interface object). While concurrently displaying the first respective dynamically generated emoji and the regenerate option, the computer system receives, via the one or more input devices, a selection input (e.g., one or more inputs) (e.g., one or more touch inputs, one or more gesture inputs, one or more air gesture inputs, one or more spoken inputs, and/or one or more hardware inputs) corresponding to selection of the regenerate option (e.g., 626). In response to receiving the selection input corresponding to selection of the regenerate option, the computer system replaces display of the first respective dynamically generated emoji (e.g., 624a) with a second respective dynamically generated emoji (e.g., 624b) (e.g., an automatically-generated emoji, a generative emoji, automatically-generated visual content, and/or generative visual content) different from the first respective dynamically generated emoji, wherein the second respective dynamically generated emoji is generated (e.g., using an AI process or a generative AI process) in response to the selection input corresponding to selection of the regenerate option and based on the one or more terms provided by the user. Providing the user with a selectable option to regenerate an emoji allows the user to generate emojis with fewer user inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the generative emoji user interface (e.g., 620) includes a text entry field (e.g., 620d) (e.g., a search field and/or other text entry field) (e.g., a field into which a user can enter text via user input). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, displaying the generative emoji user interface (e.g., 620) comprises displaying, within the generative emoji user interface, a second set of one or more dynamically generated emojis (e.g., 624a, 624b, and/or 646a-646c) (e.g., automatically-generated emojis, generative emojis, automatically-generated visual content, and/or generative visual content) that are responsive to the fourth user input (e.g., a second set of one or more dynamically generated emojis that are generated (e.g., using an AI process or a generative AI process) in response to the fourth user input and/or the fifth user input; and/or a second set of one or more dynamically generated emojis that are generated in response to and/or based on one or more terms specified by the fourth user input). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

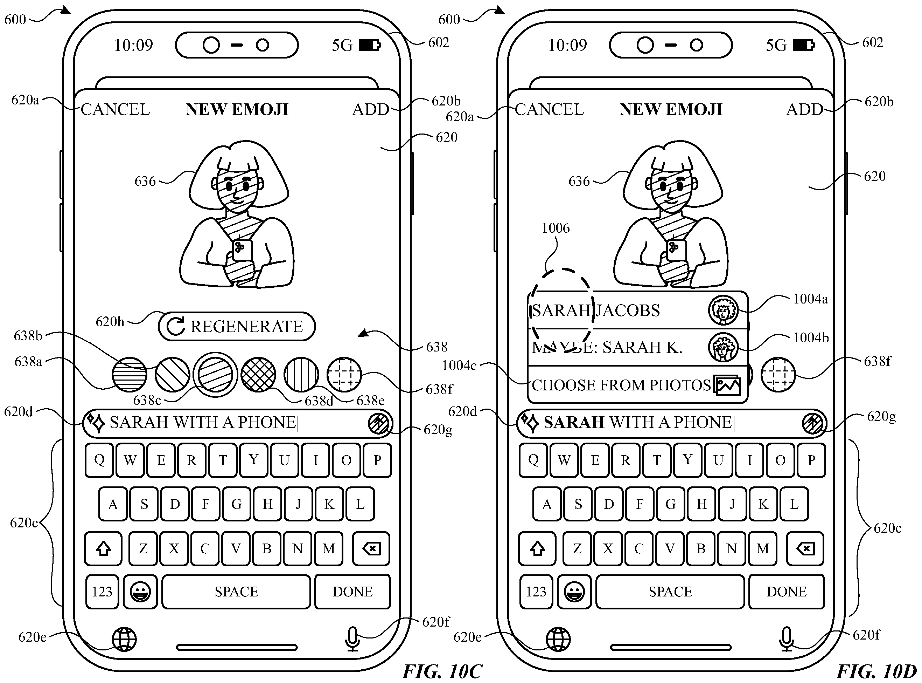

In some embodiments, the first set of dynamically generated emojis includes a third dynamically generated emoji (e.g., an automatically-generated emoji, a generative emoji, automatically-generated visual content, and/or generative visual content). In some embodiments, displaying the first set of dynamically generated emojis comprises: in accordance with a determination that the first user input specifies a first person (e.g., identifies a first person and/or includes selection of the first person) and that image data corresponding to the first person is available to the computer system (e.g., image data indicative of the physical appearance of the first person; and/or image data depicting the first person), the third dynamically generated emoji is generated (e.g., using an AI process or a generative AI process) based on the image data corresponding to the first person (e.g., FIGS. 10D-10G) (e.g., the third dynamically generated emoji is generated to depict the first person and/or depict a person that has a physical appearance that is determined based on the image data corresponding to the first person). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, in response to receiving the first user input (e.g., 612b and/or 612c): in accordance with the determination that the generative emoji criteria are met: prior to displaying the first set of dynamically generated emojis that are generated in response to the first user input, the computer system displays, via the one or more display generation components, one or more placeholder objects (e.g., 622, and/or 614a-614c) (e.g., visual objects and/or visual user interface objects) that are indicative of one or more emojis being generated (e.g., using an AI process or a generative AI process) in response to the first user input. Displaying a placeholder object indicative of one or more emojis being generated provides the user with a visual indication of a state of the computer system (e.g., that the computer system is generating emojis). Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently. Additionally, dynamically generating emojis only when certain criteria are satisfied (e.g., when preexisting emojis that match the user input are not available), conserves computing resources and power usage.

In some embodiments, the generative emoji criteria include a content safety requirement; the content safety requirement is not met when one or more terms provided by a user for dynamically generating emojis are determined to be inappropriate (e.g., determined to include profanity; determined to specify an obscene concept; determined to specify an illegal concept; determined to reference a trademarked concept; determined to reference copyrighted material; determined to reference a celebrity; and/or determined to reference a disallowed concept); and the content safety requirement is required to be met in order for the generative emoji criteria to be met. In some embodiments, the computer system is configured not to generate emojis that depict inappropriate, illegal, and/or disallowed concepts, people, and/or things. Dynamically generating emojis only when certain criteria are satisfied (e.g., when preexisting emojis that match the user input are not available and/or when content safety requirements are satisfied), conserves computing resources and power usage. Furthermore, forgoing generation of emojis when content safety requirements are not satisfied improves device security and safety by preventing generation of unwanted, undesirable, or dangerous content.

In some embodiments, the content safety requirement is not met when the one or more terms provided by the user for dynamically generating emojis are determined to reference a celebrity. In some embodiments, the computer system is configured not to generate emojis that depict celebrities. Dynamically generating emojis only when certain criteria are satisfied (e.g., when preexisting emojis that match the user input are not available and/or when content safety requirements are satisfied), conserves computing resources and power usage. Furthermore, forgoing generation of emojis when content safety requirements are not satisfied improves device security and safety by preventing generation of unwanted, undesirable, or dangerous content.

In some embodiments, the content safety requirement is not met when the one or more terms provided by the user for dynamically generating emojis are determined to reference copyrighted material (or, in some embodiments, trademarked material). In some embodiments, the computer system is configured not to generate emojis that depict copyrighted material. Dynamically generating emojis only when certain criteria are satisfied (e.g., when preexisting emojis that match the user input are not available and/or when content safety requirements are satisfied), conserves computing resources and power usage. Furthermore, forgoing generation of emojis when content safety requirements are not satisfied improves device security and safety by preventing generation of unwanted, undesirable, or dangerous content.

In some embodiments, the generative emoji criteria include a content safety requirement; the content safety requirement is not met when one or more terms provided by a user for dynamically generating emojis are determined to be inappropriate (e.g., determined to include profanity; determined to specify an obscene concept; determined to specify an illegal concept; determined to reference a trademarked concept; determined to reference copyrighted material; determined to reference a celebrity; and/or determined to reference a disallowed concept); the first user input specifies a respective set of terms; the respective set of terms is determined to include a first subset of terms that do not meet the content safety requirement and a second subset of terms that do meet the content safety requirement; the determination that the generative emoji criteria are met includes a determination that the respective set of terms includes at least some terms that meet the content safety requirement; and the first set of dynamically generated emojis are generated (e.g., using an AI process or a generative AI process) based on the second subset of terms in the respective set of terms (e.g., and, optionally, without regard for the first subset of terms and/or based on replacement of the first subset of terms with one or more related terms that satisfy the content safety requirement). In some embodiments, when a user enters terms that reference disallowed and/or inappropriate content, the computer system dynamically generates emojis based on a subset of user-entered terms that are not disallowed (e.g., by ignoring inappropriate and/or disallowed terms and/or replacing the disallowed terms with related allowable terms). Dynamically generating emojis only when certain criteria are satisfied (e.g., when preexisting emojis that match the user input are not available and/or when content safety requirements are satisfied), conserves computing resources and power usage. Furthermore, forgoing generation of emojis when content safety requirements are not satisfied and/or generating emojis after removing dangerous and/or non-approved terms improves device security and safety by preventing generation of unwanted, undesirable, or dangerous content.

Note that details of the processes described above with respect to method 700 (e.g., FIG. 7) are also applicable in an analogous manner to the methods described below. For example, method 800, method 900, and/or method 1100 optionally include one or more of the characteristics of the various methods described above with reference to method 700. For example, the dynamically generated emoji(s) (e.g., automatically-generated emojis, generative emojis, automatically-generated visual content, and/or generative visual content) recited in method 700 are the same dynamically generated emoji(s) recited in method 800, method 900, and/or method 1100. For brevity, these details are not repeated below.

FIG. 8 is a flow diagram illustrating a method for providing dynamically generated content using a computer system in accordance with some embodiments. Method 800 is performed at a computer system (e.g., 100, 300, 500, 600, 650, and/or 670) (e.g., a smart phone, a smart watch, a tablet, a laptop, a desktop, a wearable device, wrist-worn device, and/or head-mounted device) that is in communication with one or more display generation components (e.g., 602) (e.g., a display, a touch-sensitive display, and/or a display controller) and one or more input devices (e.g., 602) (e.g., a touch-sensitive surface, a touch-sensitive display, a button, a rotatable input mechanism, a depressible and rotatable input mechanism, a camera, an accelerometer, and/or an inertial measurement unit (IMU)). Some operations in method 800 are, optionally, combined, the orders of some operations are, optionally, changed, and some operations are, optionally, omitted.

As described below, method 800 provides an intuitive way for providing dynamically generated content. The method reduces the cognitive burden on a user for accessing dynamically generated content, thereby creating a more efficient human-machine interface. For battery-operated computing devices, enabling a user to access dynamically generated content faster and more efficiently conserves power and increases the time between battery charges.

The computer system receives (802), via the one or more input devices, a first user input (e.g., 612b and/or 612c) (e.g., one or more inputs) (e.g., one or more touch inputs, one or more gesture inputs, one or more air gesture inputs, one or more spoken inputs, and/or one or more hardware inputs) (e.g., a user input inputting text and/or specifying one or more terms). In response to receiving the first user input, the computer system displays (804), via the one or more display generation components, a first set of dynamically generated emojis (e.g., 616a-616c, 624a, and/or 624b) (e.g., one or more dynamically generated emojis) (e.g., automatically-generated emojis, generative emojis, automatically-generated visual content, and/or generative visual content) that are generated (e.g., using an AI process or a generative AI process) in response to the first user input (e.g., a first set of dynamically generated emojis that were not saved on the computer system prior to receiving the first user input and/or that are generated after receiving the first user input and based on the first user input) (e.g., a first set of dynamically generated emojis that are generated in response to the first user input; based on one or more terms specified by the first user input; and/or in response to one or more terms specified by the first user input), including a first dynamically generated emoji (e.g., 616a-616c, 624a, and/or 624b) (e.g., an automatically-generated emoji, a generative emojis, automatically-generated visual content, and/or generative visual content) that is generated (e.g., using an AI process or a generative AI process) in response to the first user input. While displaying the first set of dynamically generated emojis (e.g., 616a-616c, 624a, and/or 624b) including the first dynamically generated emoji, the computer system receives (806), via the one or more input devices, a second user input (e.g., one or more inputs) (e.g., one or more touch inputs, one or more gesture inputs, one or more air gesture inputs, one or more spoken inputs, and/or one or more hardware inputs) (e.g., a user input inputting text and/or specifying one or more terms) corresponding to selection of the first dynamically generated emoji (e.g., a user input selecting one of emojis 616a-616c in FIG. 6G and/or user input 628). In response to receiving the second user input corresponding to selection of the first dynamically generated emoji, the computer system causes (808) the first dynamically generated emoji to be added to an emoji selection user interface (e.g., 610) that comprises a plurality of emojis for selection by a user (e.g., an emoji keyboard user interface; and/or an emoji selection user interface that displays a plurality of emojis including a first respective emoji that, when selected, causes the first respective emoji to be entered into a text entry field and/or to be entered as in-line text) (e.g., in FIG. 6K, emoji 624b is added to emoji keyboard 610). Subsequent to receiving the second user input corresponding to selection of the first dynamically generated emoji, the computer system receives (810), via the one or more input devices, a third user input (e.g., one or more inputs) (e.g., one or more touch inputs, one or more gesture inputs, one or more air gesture inputs, one or more spoken inputs, and/or one or more hardware inputs) (e.g., a user input inputting text and/or specifying one or more terms) corresponding to a user request to display the emoji selection user interface (e.g., 610). In response to receiving the third user input, the computer system displays (812), via the one or more display generation components, the emoji selection user interface (e.g., 610), wherein: the emoji selection user interface displays a plurality of non-dynamically generated emojis (e.g., one or more emojis) (e.g., a first set of images; and/or a first set of visual objects) (e.g., emojis that were not generated in response to user input and/or emojis that were not generated in response to one or more terms input by a user) (e.g., emojis that were pre-made by an operating system developer and/or an application developer and saved to the computer system without specification and/or input of one or more terms by a user of the computer system) that were saved to the computer system and displayed in the emoji selection user interface prior to receiving the second user input in a first region of the emoji selection user interface (e.g., section 610b), including a first preexisting emoji and a second preexisting emoji different from the first preexisting emoji; and the emoji selection user interface (e.g., 610) displays one or more dynamically generated emojis (e.g., emojis that were generated in response to user input and/or in response to one or more terms input by a user) (e.g., automatically-generated emojis, generative emojis, automatically-generated visual content, and/or generative visual content), including the first dynamically generated emoji, in a second region (e.g., 610a) of the emoji selection user interface different from the first region, wherein the first dynamically generated emoji is displayed in the second region of the emoji selection user interface based on (e.g., in response to and/or as a result of) the second user input (e.g., in some embodiments, prior to receiving the second user input, the first dynamically generated emoji is not displayed in the second region of the emoji selection user interface)) (e.g., in FIG. 6K, emoji 624b is displayed within region 610a of emoji keyboard 620). Automatically saving dynamically generated emojis that have been selected and/or used by a user in an emoji selection user interface allows a user to access these dynamically generated emojis with fewer user input. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first user input (e.g., 612b and/or 612c) includes one or more user inputs providing a text input (e.g., one or more user inputs entering one or more words and/or specifying one or more words). Automatically saving dynamically generated emojis that have been selected and/or used by a user in an emoji selection user interface allows a user to access these dynamically generated emojis with fewer user input. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first user input (e.g., 612b and/or 612c) includes one or more user inputs entering text into a search field (e.g., 610d) (e.g., a text field into which a user enters search terms for performing a search (e.g., to search for emojis)). Automatically saving dynamically generated emojis that have been selected and/or used by a user in an emoji selection user interface allows a user to access these dynamically generated emojis with fewer user input. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first user input (e.g., 612b and/or 612c) includes one or more user inputs entering text into a text field (e.g., 610c) (e.g., a text document; a message entry field to enter text into a messaging session; a search field; and/or a different text field for entering text). Automatically saving dynamically generated emojis that have been selected and/or used by a user in an emoji selection user interface allows a user to access these dynamically generated emojis with fewer user input. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first user input includes one or more spoken inputs (e.g., one or more words and/or sounds spoken by a user and received by the computer system (e.g., via one or more microphones)) (e.g., entering text into text field 610d based on spoken input (e.g., via option 604f)). Automatically saving dynamically generated emojis that have been selected and/or used by a user in an emoji selection user interface allows a user to access these dynamically generated emojis with fewer user input. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, while displaying the emoji selection user interface (e.g., 610), the computer system receives, via the one or more input devices, a fourth user input (e.g., one or more inputs) (e.g., one or more touch inputs, one or more gesture inputs, one or more air gesture inputs, one or more spoken inputs, and/or one or more hardware inputs) (e.g., a user input inputting text and/or specifying one or more terms). In response to receiving the fourth user input: in accordance with a determination that the fourth user input includes movement in a first direction (e.g., the fourth user input is a swipe input with movement in the first direction) (e.g., 632a), the computer system displays scrolling of the emoji selection user interface (e.g., 610) (e.g., in the first direction or in a different direction) to display one or more additional non-dynamically generated emojis that were not displayed prior to receiving the fourth user input (e.g., FIGS. 6L-6M); and in accordance with a determination that the fourth user input includes movement in a second direction different from the first direction (e.g., the fourth user input is a swipe input with movement in the second direction) (e.g., 632b), the computer system displays scrolling of the emoji selection user interface (e.g., 610) (e.g., in the second direction or in a different direction) to display one or more additional dynamically generated emojis (e.g., 624b in FIG. 6N) (e.g., automatically-generated emojis, generative emojis, automatically-generated visual content, and/or generative visual content) that were not displayed prior to receiving the fourth user input (e.g., FIGS. 6M-6N). Allowing a user to scroll through emojis in the emoji selection user interface allows a user to access a larger number of emojis while conserving screen space. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, displaying the emoji selection user interface (e.g., 610) comprises replacing display of a keyboard user interface (e.g., 604d) (e.g., a QWERTY keyboard and/or a keyboard user interface that includes a plurality of selectable keys corresponding to text characters and/or for entering text characters) with the emoji selection user interface (e.g., 610). Replacing a virtual keyboard with the emoji selection user interface allows a user to access emojis while conserving screen space by not displaying the emoji selection user interface and/or the virtual keyboard when it is not needed. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first set of dynamically generated emojis includes a second dynamically generated emoji (e.g., an automatically-generated emoji, a generative emoji, automatically-generated visual content, and/or generative visual content) different from the first dynamically generated emoji (e.g., 616a-616c and/or 646a-646c); and the second user input corresponds to selection of the first dynamically generated emoji without selecting the second dynamically generated emoji. In some embodiments, in response to receiving the first user input, a plurality of dynamically generated emojis (e.g., automatically-generated emojis, generative emojis, automatically-generated visual content, and/or generative visual content) are generated (e.g., by the computer system and/or by an external device) (e.g., using an AI process or a generative AI process), including the first dynamically generated emoji and the second dynamically generated emoji. In some embodiments, the second user input corresponds to selection of the first dynamically generated emoji without selecting other dynamically generated emojis in the plurality of dynamically generated emojis. Automatically saving dynamically generated emojis that have been selected and/or used by a user in an emoji selection user interface allows a user to access these dynamically generated emojis with fewer user input. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, in response to receiving the second user input corresponding to selection of the first dynamically generated emoji without selecting the second dynamically generated emoji, the computer system forgoes causing the second dynamically generated emoji to be added to the emoji selection user interface (e.g., in some embodiments, in FIG. 6W, had the user selected option 620b, emoji 646b would be saved to emoji keyboard 610 but emojis 646a and 646c would not). In some embodiments, displaying the emoji selection user interface comprises displaying the first dynamically generated emoji (e.g., in the second region of the emoji selection user interface) without displaying the second dynamically generated emoji within the emoji selection user interface. In some embodiments, dynamically generated emojis that are generated based on user input but are not selected by a user are not added to the emoji selection user interface, whereas dynamically generated emojis that are selected by a user are added to the emoji selection user interface. Forgoing automatic saving of dynamically generated emojis that are not selected and/or used by the user conserves computing resources and power usage.

In some embodiments, the first set of dynamically generated emojis includes a second dynamically generated emoji (e.g., an automatically-generated emoji, a generative emoji, automatically-generated visual content, and/or generative visual content) different from the first dynamically generated emoji; and the second user input causes the first dynamically generated emoji to be transmitted into a messaging session (e.g., 630) (e.g., a messaging session that includes the computer system and/or one or more external computer systems separate from the computer system; and/or a messaging session that includes a user of the computer system and one or more other users of one or more external computer systems) without transmitting the second dynamically generated emoji into the messaging session. In some embodiments, in response to receiving the first user input, a plurality of dynamically generated emojis (e.g., automatically-generated emojis, generative emojis, automatically-generated visual content, and/or generative visual content) are generated (e.g., by the computer system and/or by an external device) (e.g., using an AI process or a generative AI process), including the first dynamically generated emoji and the second dynamically generated emoji. In some embodiments, the second user input corresponds to selection of the first dynamically generated emoji for transmission into the messaging session without selecting other dynamically generated emojis in the plurality of dynamically generated emojis for transmission into the messaging session. Automatically saving dynamically generated emojis that have been selected and/or used by a user in an emoji selection user interface allows a user to access these dynamically generated emojis with fewer user input. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, in response to receiving the second user input that causes the first dynamically generated emoji to be transmitted into a messaging session (e.g., 630) without transmitting the second dynamically generated emoji into the messaging session, the computer system forgoes causing the second dynamically generated emoji to be added to the emoji selection user interface (e.g., in some embodiments, emojis that are presented to the user but are not transmitted into the messaging session are not added to emoji keyboard 610). In some embodiments, displaying the emoji selection user interface comprises displaying the first dynamically generated emoji (e.g., in the second region of the emoji selection user interface) without displaying the second dynamically generated emoji within the emoji selection user interface. In some embodiments, dynamically generated emojis (e.g., automatically-generated emojis, generative emojis, automatically-generated visual content, and/or generative visual content) that are generated (e.g., using an AI process or a generative AI process) based on user input but are not selected by a user (e.g., for transmission into a messaging session) are not added to the emoji selection user interface, whereas dynamically generated emojis that are selected by a user (e.g., for transmission into a messaging session) are added to the emoji selection user interface. Forgoing automatic saving of dynamically generated emojis that are not selected and/or used by the user conserves computing resources and power usage.

In some embodiments, while displaying the emoji selection user interface (e.g., 610) including displaying the first dynamically generated emoji (e.g., 624b) within the second region (e.g., 610a) of the emoji selection user interface, the computer system receives, via the one or more input devices, a selection input (e.g., one or more inputs) (e.g., one or more touch inputs, one or more gesture inputs, one or more air gesture inputs, one or more spoken inputs, and/or one or more hardware inputs) corresponding to selection of the first dynamically generated emoji. In response to receiving the selection input corresponding to selection of the first dynamically generated emoji, the computer system inserts the first dynamically generated emoji in line with a first set of text (e.g., in a text entry field (e.g., a message entry field; a search entry field; and/or other text entry field) and/or in a document that includes text) (e.g., inserting the first dynamically generated emoji in a line and/or a row of text) (e.g., in some embodiments, in FIG. 6L, had the user selected emoji 624b from region 610a, emoji 624b would be inserted as an inline text object within text field 604b). Allowing a user to dynamically generate emojis based on user input, and enter those emojis in-line with text, allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first set of dynamically generated emojis (e.g., 616a-c , 624a, 624b, and/or 646a-c) are generated (e.g., using an AI process or a generative AI process) in response to the first user input using one or more machine learning models (e.g., one or more generative AI image models) (e.g., foundation model 560) (e.g., an AI process or a generative AI process). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the machine learning model (e.g., foundation model 560) (e.g., an AI process or a generative AI process) is trained based on a training set that includes at least some of the set of preexisting emojis (e.g., emojis in emoji keyboard 610). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the machine learning model (e.g., foundation model 560) (e.g., an AI process or a generative AI process) is configured to re-use one or more elements of one or more preexisting emojis of the set of preexisting emojis (e.g., emojis in emoji keyboard 610). In some embodiments, the machine learning model dynamically generates emojis by, in some instances, re-using and/or modifying preexisting elements found in the set of preexisting emojis. Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, displaying the first set of dynamically generated emojis comprises: in accordance with a determination that the first user input specifies a first person (e.g., identifies a first person and/or includes selection of the first person) and that image data corresponding to the first person is available to the computer system (e.g., image data indicative of the physical appearance of the first person; and/or image data depicting the first person), the first dynamically generated emoji (e.g., an automatically-generated emoji, a generative emoji, automatically-generated visual content, and/or generative visual content) is generated (e.g., using an AI process or a generative AI process) based on the image data corresponding to the first person (e.g., the first dynamically generated emoji is generated to depict the first person and/or depict a person that has a physical appearance that is determined based on the image data corresponding to the first person) (e.g., FIGS. 10C-10G). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

Note that details of the processes described above with respect to method 800 (e.g., FIG. 8) are also applicable in an analogous manner to the methods described above and/or below. For example, method 700, method 900, and/or method 1100 optionally include one or more of the characteristics of the various methods described above with reference to method 800. For example, the dynamically generated emoji(s) recited in method 800 are the same dynamically generated emoji(s) recited in method 700, method 900, and/or method 1100. For brevity, these details are not repeated below.

FIG. 9 is a flow diagram illustrating a method for providing dynamically generated content using a computer system in accordance with some embodiments. Method 900 is performed at a computer system (e.g., 100, 300, 500, 600, 650, and/or 670) (e.g., a smart phone, a smart watch, a tablet, a laptop, a desktop, a wearable device, wrist-worn device, and/or head-mounted device) that is in communication with one or more display generation components (e.g., 602) (e.g., a display, a touch-sensitive display, and/or a display controller) and one or more input devices (e.g., 602) (e.g., a touch-sensitive surface, a touch-sensitive display, a button, a rotatable input mechanism, a depressible and rotatable input mechanism, a camera, an accelerometer, and/or an inertial measurement unit (IMU)). Some operations in method 900 are, optionally, combined, the orders of some operations are, optionally, changed, and some operations are, optionally, omitted.

As described below, method 900 provides an intuitive way for providing dynamically generated content. The method reduces the cognitive burden on a user for accessing dynamically generated content, thereby creating a more efficient human-machine interface. For battery-operated computing devices, enabling a user to access dynamically generated content faster and more efficiently conserves power and increases the time between battery charges.

The computer system (e.g., 600) receives (900), via the one or more input devices, a first user input (e.g., 680b and/or 680c) (e.g., one or more inputs) (e.g., one or more touch inputs, one or more gesture inputs, one or more air gesture inputs, one or more spoken inputs, and/or one or more hardware inputs) (e.g., a user input inputting text and/or specifying one or more terms). In response to receiving the first user input (904): in accordance with a determination that generative emoji criteria are not met (e.g., in accordance with a determination that the first user input does not meet generative emoji criteria and/or in accordance with a determination that generative emoji criteria are not met after and/or when the first user input is received) (906), the computer system displays (908), via the one or more display generation components, a first set of preexisting emojis (e.g., 610f in FIG. 6AL) (e.g., one or more emojis) (e.g., a first set of images; and/or a first set of visual objects) selected from a set of preexisting emojis (e.g., emojis that were saved on the computer system prior to receiving the first user input; emojis that are saved and/or accessible in an emoji keyboard; and/or emojis that were generated prior to receiving the first user input) (e.g., in some embodiments, without displaying one or more dynamically generated emojis (e.g., automatically-generated emojis, generative emojis, automatically-generated visual content, and/or generative visual content); and/or without displaying any dynamically generated emojis (e.g., automatically-generated emojis, generative emojis, automatically-generated visual content, and/or generative visual content) that were generated (e.g., using an AI process or a generative AI process) in response to the first user input) based on the first user input (e.g., in response to the first user input; based on one or more terms specified by the first user input; and/or in response to one or more terms specified by the first user input); and in accordance with a determination that the generative emoji criteria are met (e.g., in accordance with a determination that the first user input meets the generative emoji criteria and/or in accordance with a determination that generative emoji criteria are met after and/or when the first user input is received) (910), the computer system outputs (912) a first prompt (e.g., FIG. 6AM) (e.g., a visual prompt and/or an audio prompt) prompting a user of the computer system to generate (e.g., using an AI process or a generative AI process) one or more dynamically generated emojis (e.g., automatically-generated emojis, generative emojis, automatically-generated visual content, and/or generative visual content) that are generated (e.g., using an AI process or a generative AI process) based on the first user input (e.g., based on text specified by the first user input; based on one or more terms specified by the first user input; using one or more terms specified by the first user input; and/or in response to one or more terms specified by the first user input) (e.g., one or more dynamically generated emojis that are generated subsequent to and/or in response to the first user input). Outputting the first prompt when generative emoji criteria are met provides the user with an indication of a state of the computer system (e.g., that generative emoji criteria are met, that the user can generate emojis, and/or that there are less than a threshold number of preexisting emojis that are responsive to the first user input). Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, prior to receiving the first user input (e.g., 680b and/or 680c), the computer system displays, via the one or more display generation components, a generative emoji option (e.g., 610e) (e.g., a button, an affordance, a link, and/or a visual user interface object) that, when selected, causes the computer system initiate a process for generating (e.g., using an AI process or a generative AI process) one or more dynamically generated emojis (e.g., emojis that are created and/or generated in response to user input (e.g., in response to one or more terms specified by and/or input by a user)) (e.g., automatically-generated emojis, generative emojis, automatically-generated visual content, and/or generative visual content) (e.g., causes the computer system to display a user interface that includes one or more options for generating one or more dynamically generated emojis and/or causes the computer system to generated one or more dynamically generated emojis). In some embodiments, outputting the first prompt (e.g., FIG. 6AM) prompting the user of the computer system to generate one or more dynamically generated emojis that are generated based on the first user input comprises displaying, via the one or more display generation components, a first visual prompt prompting the user to select the generative emoji option (e.g., 610e) (e.g., text instructing the user to select the generative emoji option; darkening other display elements while not darkening the generative emoji option; and/or visually highlighting the generative emoji option) (e.g., in FIG. 6AM, computer system displays text "Create a New Emoji" underneath option 610e, and displays a visual effect in which option 610e is visually emphasized and/or other visual elements are visually de-emphasized). Outputting the first prompt when generative emoji criteria are met provides the user with an indication of a state of the computer system (e.g., that generative emoji criteria are met, that the user can generate emojis, and/or that there are less than a threshold number of preexisting emojis that are responsive to the first user input). Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, while displaying the generative emoji option (e.g., 610e), the computer system receives, via the one or more input devices, a selection input (e.g., one or more inputs) (e.g., one or more touch inputs, one or more gesture inputs, one or more air gesture inputs, one or more spoken inputs, and/or one or more hardware inputs) corresponding to selection of the generative emoji option (e.g., user input 680d). In response to receiving the selection input corresponding to selection of the generative emoji option, the computer system displays, via the one or more display generation components, a generative emoji user interface (e.g., 620). Providing the user with a selection option to dynamically generate emojis allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, prior to receiving the selection input corresponding to selection of the generative emoji option, the computer system receives, via the one or more input devices, one or more user inputs (e.g., 680b and/or 680c) specifying a first set of terms (e.g., a first set of words and/or phrases) (e.g., in some embodiments, the first user input includes the one or more user inputs specifying the first set of terms; and/or the first user input specifies the first set of terms). In some embodiments, displaying the generative emoji user interface (e.g., 620) comprises displaying, within the generative emoji user interface, a first set of one or more dynamically generated emojis (e.g., 679) (e.g., automatically-generated emojis, generative emojis, automatically-generated visual content, and/or generative visual content) that are generated (e.g., using an AI process or a generative AI process) based on the first set of terms (and, in some embodiments, based on and/or in response to the selection input corresponding to selection of the generative emoji option) (e.g., a first set of one or more dynamically generated emojis that were not saved on the computer system and/or that were not generated prior to receiving the first set of terms and/or prior to receiving the selection input corresponding to selection of the generative emoji option; and/or are generated in response to and/or subsequent to receiving the first set of terms and/or receiving the selection input corresponding to selection of the generative emoji option), including a first dynamically generated emoji (e.g., an automatically-generated emoji, a generative emojis, automatically-generated visual content, and/or generative visual content) that is generated (e.g., using an AI process or a generative AI process) based on the first set of terms (and, in some embodiments, based on and/or in response to the receiving the selection input corresponding to selection of the generative emoji option). Providing the user with a selection option to dynamically generate emojis allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, in response to receiving the selection input corresponding to selection of the generative emoji option (e.g., user input 680d): prior to displaying the first set of one or more dynamically generated emojis that are generated based on the first set of terms (e.g., 679), the computer system displays, via the one or more display generation components and within the generative emoji user interface, one or more placeholder objects (e.g., 622) (e.g., visual objects and/or visual user interface objects) that are indicative of one or more emojis being dynamically generated (e.g., using an AI process or a generative AI process) (e.g., one or more emojis being dynamically generated in response to the selection input corresponding to selection of the generative emoji option) (e.g., in some embodiments, prior to displaying emoji 679 in user interface 620, computer system 600 displays placeholder object 622). Displaying a placeholder object indicative of one or more emojis being generated provides the user with a visual indication of a state of the computer system (e.g., that the computer system is generating emojis). Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently. Additionally, dynamically generating emojis only when certain criteria are satisfied (e.g., when preexisting emojis that match the user input are not available and/or in response to user input selecting the generative emoji option), conserves computing resources and power usage.

In some embodiments, while displaying the first set of one or more dynamically generated emojis (e.g., 682), the computer system receives, via the one or more input devices, a selection input (e.g., one or more inputs) (e.g., one or more touch inputs, one or more gesture inputs, one or more air gesture inputs, one or more spoken inputs, and/or one or more hardware inputs) corresponding to selection of the first dynamically generated emoji (e.g., user input 684). In response to receiving the selection input corresponding to selection of the first dynamically generated emoji, the computer system inserts the first dynamically generated emoji in line with a first set of text (e.g., in a text entry field (e.g., a message entry field; a search entry field; and/or other text entry field) and/or in a document that includes text) (e.g., inserting the first dynamically generated emoji in a line and/or a row of text) (e.g., in some embodiments, in FIG. 6AP, in response to user input 684, computer system 600 inserts emoji 682 into text field 604b)

(e.g., FIGS. 6J-6K). Allowing a user to dynamically generate emojis based on user input, and enter those emojis in-line with text, allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, while displaying the first set of one or more dynamically generated emojis (e.g., 682), the computer system receives, via the one or more input devices, a selection input (e.g., one or more inputs) (e.g., one or more touch inputs, one or more gesture inputs, one or more air gesture inputs, one or more spoken inputs, and/or one or more hardware inputs) corresponding to selection of the first dynamically generated emoji (e.g., user input 684). In response to receiving the selection input corresponding to selection of the first dynamically generated emoji, the computer system inserts the first dynamically generated emoji as an image (e.g., as an image inserted into a document; and/or as an image inserted into a user interface) (e.g., in some embodiments, in FIG. 6AP, in response to user input 684, computer system 600 inserts emoji 682 into text field 604b as an image) (e.g., FIGS. 6J-6K). Allowing a user to dynamically generate emojis based on user input, and enter those emojis as images, allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, displaying the first set of one or more dynamically generated emojis comprises: in accordance with a determination that the one or more user inputs specifying the first set of terms specifies a first respective set of terms, displaying, via the one or more display generation components, a first respective set of dynamically generated emojis (e.g., automatically-generated emojis, generative emojis, automatically-generated visual content, and/or generative visual content) that are generated (e.g., using an AI process or a generative AI process) in response to the first respective set of terms (e.g., in FIG. 6I, a first set of terms results in generation of a first set of emojis); and in accordance with a determination that the one or more user inputs specifying the first set of terms specifies a second respective set of terms different from the first respective set of terms, displaying, via the one or more display generation components, a second respective set of dynamically generated emojis (e.g., automatically-generated emojis, generative emojis, automatically-generated visual content, and/or generative visual content) that are generated (e.g., using an AI process or a generative AI process) in response to the second respective set of terms (e.g., without displaying the first respective set of dynamically generated emojis), wherein the second respective set of dynamically generated emojis is different from the first respective set of dynamically generated emojis (e.g., in FIG. 6R, a second set of terms results in generation of a second set of emojis). In some embodiments, different sets of user-provided terms result in different dynamically generated emojis being generated. Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, displaying the generative emoji user interface (e.g., 620) comprises: in accordance with a determination that the first dynamically generated emoji includes a first type of content (e.g., depicts a first type of object and/or depicts a person), displaying, within the generative emoji user interface, a first option (e.g., 638a-638f) that, when selected, modifies a visual appearance of the first dynamically generated emoji (e.g., changes one or more colors of the dynamically generated emoji, changes the size of one or more portions of the dynamically generated emoji, and/or changes the shape of one or more portions of the dynamically generated emoji); and in accordance with a determination that the first dynamically generated emoji does not include the first type of content, forgoing displaying the first option within the generative emoji user interface (e.g., in FIG. 6J, user interface 620 does not include skin tone options 638a-638f). Providing the first option only when the first dynamically generated emoji includes a first type of content enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the determination that the first dynamically generated emoji includes a first type of content comprises a determination that the first dynamically generated emoji depicts at least one person including a first person (e.g., FIG. 6R); and the first option comprises a skin tone picker option that, when selected, modifies a skin tone color of the first person (e.g., 638a-638f). Providing the a skin tone picker only when the first dynamically generated emoji depicts a person enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, while concurrently displaying the first dynamically generated emoji (e.g., 636) and the skin tone picker option (e.g., 638a-638f), the computer system receives, via the one or more input devices, a selection input (e.g., one or more inputs) (e.g., one or more touch inputs, one or more gesture inputs, one or more air gesture inputs, one or more spoken inputs, and/or one or more hardware inputs) corresponding to selection of the skin tone picker option. In response to receiving the selection input corresponding to selection of the skin tone picker option: the computer system displays a skin tone of the first person (e.g., 636) changing from a first color to a second color different from the first color (e.g., a second color that corresponds to the first option). Subsequent to displaying the skin tone of the first person changing from the first color to the second color, the computer system receives, via the one or more input devices, one or more user inputs (e.g., one or more touch inputs, one or more gesture inputs, one or more air gesture inputs, one or more spoken inputs, and/or one or more hardware inputs) specifying a second set of terms (e.g., in some embodiments, a second set of terms different from the first set of terms). In response to receiving the one or more user inputs specifying the second set of terms, the computer system displays, via the one or more display generation components and within the generative emoji user interface (e.g., 620), a second dynamically generated emoji (e.g., an automatically-generated emoji, a generative emoji, automatically-generated visual content, and/or generative visual content) that is generated (e.g., using an AI process or a generative AI process) in response to the one or more user inputs specifying the second set of terms, wherein: the second dynamically generated emoji is different from the first dynamically generated emoji; the second dynamically generated emoji includes a second person (e.g., a second person different from the first person); and the second person has a skin tone that is the second color based on user selection of the skin tone picker option that corresponds to the second color while the first dynamically generated emoji was displayed. In some embodiments, user-selected skin tone options are applied to future dynamically generated emojis that depict people. Keeping record of the user's previous skin tone selection and applying it to future dynamically generated emojis allows the user to generate emojis with fewer user inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

**In** some embodiments, the computer system displays, within the generative emoji user interface (e.g., 620) and concurrently with the first dynamically generated emoji, a regenerate option (e.g., 620h) (e.g., an affordance, a button, and/or a visual user interface object). While concurrently displaying the first dynamically generated emoji and the regenerate option, the computer system receives, via the one or more input devices, a selection input (e.g., one or more inputs) (e.g., one or more touch inputs, one or more gesture inputs, one or more air gesture inputs, one or more spoken inputs, and/or one or more hardware inputs) corresponding to selection of the regenerate option (e.g., user input 626). In response to receiving the selection input corresponding to selection of the regenerate option, the computer system replaces display of the first dynamically generated emoji (e.g., 624a) with a third dynamically generated emoji (e.g., 624b) (e.g., an automatically-generated emoji, a generative emoji, automatically-generated visual content, and/or generative visual content) different from the first dynamically generated emoji, wherein the third dynamically generated emoji is generated (e.g., using an AI process or a generative AI process) in response to the selection input corresponding to selection of the regenerate option and based on the first set of terms specified by the user. Providing the user with a selectable option to regenerate an emoji allows the user to generate emojis with fewer user inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first set of dynamically generated emojis (e.g., 624a, 624b, 636, 679, and/or 682) are generated using one or more machine learning models (e.g., one or more generative AI image models) (e.g., foundation model 560) (e.g., an AI process or a generative AI process). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the machine learning model (e.g., foundation model 560) (e.g., an AI process or a generative AI process) is trained based on a training set that includes at least some of the set of preexisting emojis (e.g., emojis in emoji keyboard 610). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the machine learning model (e.g., foundation model 560) (e.g., an AI process or a generative AI process) is configured to re-use one or more elements of one or more preexisting emojis of the set of preexisting emojis (e.g., emojis in emoji keyboard 610). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, displaying the first set of dynamically generated emojis comprises: in accordance with a determination that the one or more user inputs specifying the first set of terms specifies (and/or, optionally, in accordance with a determination that the first set of terms specifies) a first person (e.g., identifies a first person and/or includes selection of the first person) and that image data corresponding to the first person is available to the computer system (e.g., image data indicative of the physical appearance of the first person; and/or image data depicting the first person), the first dynamically generated emoji is generated (e.g., using an AI process or a generative AI process) based on the image data corresponding to the first person (e.g., the first dynamically generated emoji is generated to depict the first person and/or depict a person that has a physical appearance that is determined based on the image data corresponding to the first person) (e.g., FIGS. 10C-10G). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the generative emoji user interface (e.g., 620) includes a text entry field (e.g., 620d) (e.g., a search field and/or other text entry field) (e.g., a field into which a user can enter text via user input). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first user input (e.g., 680b and/or 680c) specifies one or more terms (e.g., one or more words and/or phrases). In some embodiments, displaying the generative emoji user interface (e.g., 620) comprises: in accordance with a determination that a first set of criteria are met (e.g., the first set of criteria are met by the first user input and/or the one or more terms specified by the first user input), wherein the first set of criteria include a content safety requirement that is not met when one or more terms provided by a user for dynamically generating emojis are determined to be inappropriate (e.g., determined to include profanity; determined to specify an obscene concept; determined to specify an illegal concept; determined to reference a trademarked concept; determined to reference copyrighted material; determined to reference a celebrity; and/or determined to reference a disallowed concept) and the content safety requirement is required to be met in order for the first set of criteria to be met, displaying, within the generative emoji user interface, a set of one or more dynamically generated emojis (e.g., automatically-generated emojis, generative emojis, automatically-generated visual content, and/or generative visual content) that are generated (e.g., using an AI process or a generative AI process) based on the one or more terms specified by the first user input (e.g., FIG. 6AN) (and, in some embodiments, based on and/or in response to the selection input corresponding to selection of the generative emoji option) (e.g., a set of one or more dynamically generated emojis that were not saved on the computer system and/or that were not generated prior to receiving the one or more terms; prior to receiving the first user input; and/or prior to receiving the selection input corresponding to selection of the generative emoji option; and/or are generated in response to and/or subsequent to receiving the first set of terms; in response to and/or subsequent to receiving the first user input; and/or in response to and/or subsequent to receiving the selection input corresponding to selection of the generative emoji option), including a third dynamically generated emoji (e.g., an automatically-generated emoji, a generative emoji, automatically-generated visual content, and/or generative visual content) that is generated (e.g., using an AI process or a generative AI process) based on the one or more terms specified by the first user input (and, in some embodiments, based on and/or in response to the receiving the selection input corresponding to selection of the generative emoji option); and in accordance with a determination that the content safety requirement is not met (e.g., the first set of criteria are not met by the first user input and/or the one or more terms specified by the first user input), forgoing displaying the set of one or more dynamically generated emojis that are generated based on the one or more terms specified by the first user input (e.g., in some embodiments, forgoing displaying any dynamically generated emojis and/or forgoing displaying any emojis). In some embodiments, the computer system is configured not to generate emojis that depict inappropriate, illegal, and/or disallowed concepts, people, and/or things. Dynamically generating emojis only when certain criteria are satisfied (e.g., when preexisting emojis that match the user input are not available and/or when content safety requirements are satisfied), conserves computing resources and power usage. Furthermore, forgoing generation of emojis when content safety requirements are not satisfied improves device security and safety by preventing generation of unwanted, undesirable, or dangerous content.

In some embodiments, the content safety requirement is not met when the one or more terms provided by the user for dynamically generating emojis are determined to reference a celebrity. In some embodiments, the computer system is configured not to generate emojis that depict celebrities. Dynamically generating emojis only when certain criteria are satisfied (e.g., when preexisting emojis that match the user input are not available and/or when content safety requirements are satisfied), conserves computing resources and power usage. Furthermore, forgoing generation of emojis when content safety requirements are not satisfied improves device security and safety by preventing generation of unwanted, undesirable, or dangerous content.

In some embodiments, the content safety requirement is not met when the one or more terms provided by the user for dynamically generating emojis are determined to reference copyrighted material (or, in some embodiments, trademarked material). In some embodiments, the computer system is configured not to generate emojis that depict copyrighted material. Dynamically generating emojis only when certain criteria are satisfied (e.g., when preexisting emojis that match the user input are not available and/or when content safety requirements are satisfied), conserves computing resources and power usage. Furthermore, forgoing generation of emojis when content safety requirements are not satisfied improves device security and safety by preventing generation of unwanted, undesirable, or dangerous content.

In some embodiments, the first user input (e.g., 680b and/or 680c) specifies one or more terms (e.g., one or more words and/or phrases). In some embodiments, displaying the generative emoji user interface (e.g., 620) comprises: in accordance with a determination that a first set of criteria are met (e.g., the first set of criteria are met by the first user input and/or the one or more terms specified by the first user input), wherein the first set of criteria include a content safety requirement that is not met when one or more terms provided by a user for dynamically generating emojis are determined to be inappropriate (e.g., determined to include profanity; determined to specify an obscene concept; determined to specify an illegal concept; determined to reference a trademarked concept; determined to reference copyrighted material; determined to reference a celebrity; and/or determined to reference a disallowed concept) and the content safety requirement is required to be met in order for the first set of criteria to be met, displaying, within the generative emoji user interface, a set of one or more dynamically generated emojis (e.g., automatically-generated emojis, generative emojis, automatically-generated visual content, and/or generative visual content) that are generated (e.g., using an AI process or a generative AI process) based on the one or more terms specified by the first user input (and, in some embodiments, based on and/or in response to the selection input corresponding to selection of the generative emoji option) (e.g., a set of one or more dynamically generated emojis that were not saved on the computer system and/or that were not generated prior to receiving the one or more terms; prior to receiving the first user input; and/or prior to receiving the selection input corresponding to selection of the generative emoji option; and/or are generated in response to and/or subsequent to receiving the first set of terms; in response to and/or subsequent to receiving the first user input; and/or in response to and/or subsequent to receiving the selection input corresponding to selection of the generative emoji option), including a third dynamically generated emoji (e.g., an automatically-generated emoji, a generative emoji, automatically-generated visual content, and/or generative visual content) that is generated (e.g., using an AI process or a generative AI process) based on the one or more terms specified by the first user input (and, in some embodiments, based on and/or in response to the receiving the selection input corresponding to selection of the generative emoji option); and in accordance with a determination that a first subset of terms in the one or more terms specified by the first user input do not meet the content safety requirement and a second subset of terms in the one or more terms specified by the first user input do meet the content safety requirement, displaying, within the generative emoji user interface, an alternative set of one or more dynamically generated emojis (e.g., automatically-generated emojis, generative emojis, automatically-generated visual content, and/or generative visual content) that are different from the set of one or more dynamically generated emojis and are generated (e.g., using an AI process or a generative AI process) based on the second subset of terms in the one or more terms specified by the first user input (e.g., and, optionally, without regard for the first subset of terms and/or based on replacement of the first subset of terms with one or more related terms that satisfy the content safety requirement), including a fourth dynamically generated emoji (e.g., an automatically-generated emoji, a generative emojis, automatically-generated visual content, and/or generative visual content) that is generated (e.g., using an AI process or a generative AI process) based on the second subset of terms (e.g., and, optionally, without regard for the first subset of terms and/or based on replacement of the first subset of terms with one or more related terms that satisfy the content safety requirement). In some embodiments, when a user enters terms that reference disallowed and/or inappropriate content, the computer system dynamically generates emojis based on a subset of user-entered terms that are not disallowed (e.g., by ignoring inappropriate and/or disallowed terms and/or replacing the disallowed terms with related allowable terms). Dynamically generating emojis only when certain criteria are satisfied (e.g., when preexisting emojis that match the user input are not available and/or when content safety requirements are satisfied), conserves computing resources and power usage. Furthermore, forgoing generation of emojis when content safety requirements are not satisfied and/or generating emojis after removing dangerous and/or non-approved terms improves device security and safety by preventing generation of unwanted, undesirable, or dangerous content.

In some embodiments, displaying the generative emoji user interface (e.g., 620) includes: in accordance with a determination that one or more search terms have been specified by a user (e.g., entered by a user and/or provided by a user) when the selection input corresponding to selection of the generative emoji option is received (in some embodiments, in accordance with a determination that one or more search terms are displayed when the selection input corresponding to selection of the generative emoji option is received is received) (e.g., FIG. 6AM and user input 680d), displaying one or more dynamically generated emojis (e.g., automatically-generated emojis, generative emojis, automatically-generated visual content, and/or generative visual content) that are generated (e.g., using an AI process or a generative AI process) based on the one or more search terms (e.g., that are generated to be responsive to the one or more search terms and/or are generated in response to the one or more search terms) within the generative emoji user interface (e.g., 679 in FIG. 6AN); and in accordance with a determination that no search terms (e.g., entered by a user and/or provided by a user) have been specified by a user when the selection input corresponding to selection of the generative emoji option is received (in some embodiments, in accordance with a determination that no search terms are displayed when the selection input corresponding to selection of the generative emoji option is received) (e.g., FIG. 6O and user input 634a), displaying the generative emoji user interface without displaying any dynamically generated emojis (e.g., automatically-generated emojis, generative emojis, automatically-generated visual content, and/or generative visual content) within the generative emoji user interface (e.g., FIG. 6P). Providing the user with a selectable option to access a generative emoji user interface for generating emojis allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, displaying the generative emoji user interface further includes: in accordance with a determination that one or more search terms have been specified by a user (e.g., entered by a user and/or provided by a user) when the selection input corresponding to selection of the generative emoji option is received (in some embodiments, in accordance with a determination that one or more search terms are displayed when the selection input corresponding to selection of the generative emoji option is received) (e.g., FIG. 6AM and user input 680d), displaying the one or more search terms within the generative emoji user interface (e.g., within a search field that is part of the generative emoji user interface) (e.g., 620d in FIG. 6AN); and in accordance with a determination that no search terms (e.g., entered by a user and/or provided by a user) have been specified by a user when the selection input corresponding to selection of the generative emoji option is received (in some embodiments, in accordance with a determination that no search terms are displayed when the selection input corresponding to selection of the generative emoji option is received) (e.g., FIG. 6O and user input 634a), displaying, within the generative emoji user interface, one or more instructions prompting a user to specify one or more search terms (e.g., prompting a user to enter text into a search field and/or prompting a user to speak one or more search terms) (e.g., FIG. 6P). Providing the user with a selectable option to access a generative emoji user interface for generating emojis allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first user input (e.g., 680b and/or 680c) includes one or more user inputs providing a text input (e.g., one or more user inputs entering one or more words and/or specifying one or more words). Outputting the first prompt when generative emoji criteria are met provides the user with an indication of a state of the computer system (e.g., that generative emoji criteria are met, that the user can generate emojis, and/or that there are less than a threshold number of preexisting emojis that are responsive to the first user input). Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first user input includes one or more user inputs entering text into a search field (e.g., 610d) (e.g., a text field into which a user enters search terms for performing a search (e.g., to search for emojis)). Outputting the first prompt when generative emoji criteria are met provides the user with an indication of a state of the computer system (e.g., that generative emoji criteria are met, that the user can generate emojis, and/or that there are less than a threshold number of preexisting emojis that are responsive to the first user input). Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first user input includes one or more user inputs entering text into a text field (e.g., 610d) (e.g., a text document; a message entry field to enter text into a messaging session; a search field; and/or a different text field for entering text). Outputting the first prompt when generative emoji criteria are met provides the user with an indication of a state of the computer system (e.g., that generative emoji criteria are met, that the user can generate emojis, and/or that there are less than a threshold number of preexisting emojis that are responsive to the first user input). Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first user input includes one or more spoken inputs (e.g., one or more words and/or sounds spoken by a user and received by the computer system (e.g., via one or more microphones)) (e.g., one or more spoken inputs to input text into text field 610d (e.g., via option 604f). Outputting the first prompt when generative emoji criteria are met provides the user with an indication of a state of the computer system (e.g., that generative emoji criteria are met, that the user can generate emojis, and/or that there are less than a threshold number of preexisting emojis that are responsive to the first user input). Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the set of preexisting emojis (and/or, optionally, the first set of preexisting emojis) includes a first emoji that was previously dynamically generated (e.g., using an AI process or a generative AI process) in response to a user input prior to receiving the first user input (e.g., in FIG. 6AQ and FIG. 6AR, previously-dynamically generated emoji 682 is included in search results). In some embodiments, emojis that were previously dynamically generated (e.g., using an AI process or a generative AI process) and/or emojis that were previously dynamically generated (e.g., using an AI process or a generative AI process) and are saved and/or used by the user are added to the set of preexisting emojis. Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently. Additionally, saving previously-generated emojis for future use by a user, conserves computing resources and power usage.

In some embodiments, the first user input (e.g., 680b and/or 680c) specifies one or more search terms (e.g., one or more words provided by and/or entered by a user); and the generative emoji criteria include a requirement that fewer than a threshold number of preexisting emojis (e.g., fewer than five preexisting emojis; fewer than three preexisting emojis; or fewer than one preexisting emoji) in the set of preexisting emojis are determined to be responsive to (e.g., are determined to match and/or are determined to meet) the one or more search terms in order for the generative emoji criteria to be met (e.g., FIG. 6AM). In some embodiments, the generative emoji criteria include a requirement that there are no preexisting emojis in the set of preexisting emojis that match and/or that are responsive to the one or more search terms in order for the generative emoji criteria to be met. Dynamically generating emojis only when certain criteria are satisfied (e.g., when preexisting emojis that match the user input are not available) conserves computing resources and power usage.

Note that details of the processes described above with respect to method 900 (e.g., FIG. 9) are also applicable in an analogous manner to the methods described above and/or below. For example, method 700, method 800, and/or method 1100 optionally include one or more of the characteristics of the various methods described above with reference to method 900. For example, the dynamically generated emoji(s) recited in method 900 are the same dynamically generated emoji(s) recited in method 700, method 800, and/or method 1100. For brevity, these details are not repeated below.

FIGS. 10A-10R illustrate exemplary user interfaces for generating content and/or providing dynamically generated content, in accordance with some embodiments. The user interfaces in these figures are used to illustrate the processes described below, including the processes in FIG. 11.

FIG. 10A illustrates computer system 600, which is a smart phone with touch-sensitive display 602. Although the depicted embodiments show an example in which computer system 600 is a smart phone, in other embodiments, computer system 600 is a different type of computer system (e.g., a tablet, a laptop computer, a desktop computer, a wearable device, and/or a headset). At FIG. 10A, computer system 600 displays emoji generation user interface 620, various features and/or characteristics of which were described above in accordance with various embodiments. At FIG. 10A, computer system 600 detects user input 1002, which includes one or more user inputs interacting with keyboard 620c. At FIG. 10B, in response to user input 1002, computer system 600 displays user-entered text within text field 620d. Furthermore, in response to user input 1002, computer system 600 initiates generation of one or more emojis based on the user-entered text, and displays placeholder 622 to indicate that one or more emojis are being generated based on the user-entered text. At FIG. 10C, emoji 636 has been generated based on the user-entered text "Sarah with a phone." Furthermore, based on a determination that emoji 636 depicts a person, emoji 636 is displayed with skin tone options 638a-638f. In some embodiments, at FIG. 10C, emoji 636 is generated to depict a generic and/or non-specific woman based on the user-entered text prompt. However, at FIG. 10C computer system 600 determines that the term "Sarah" may correspond to one or more individuals that are recognized by and/or known to computer system 600. For example, in some embodiments, there are one or more individuals named "Sarah" saved to a contacts list; and/or there are one or more individuals named "Sarah" that have been identified in one or more media items (e.g., by the user of computer system).

At FIG. 10D, based on the determination that the term "Sarah" may correspond to one or more individuals that are known to computer system 600, computer system 600 displays disambiguation options 1004a, 1004b, 1004c. Disambiguation option 1004a corresponds to a first individual named Sarah Jacobs. In some embodiments, computer system 600 has physical appearance information pertaining to the individual Sarah Jacobs, for example, based on the user of computer system 600 previously identifying Sarah Jacobs in one or more photos and/or videos in the user's media library and/or based on one or more photos and/or videos shared by Sarah Jacobs. Disambiguation option 1004b corresponds to a second individual named Sarah K. In some embodiments, computer system 600 has physical appearance information pertaining to the individual Sarah K., for example, based on the user of computer system 600 previously identifying Sarah K. in one or more photos and/or videos in the user's media library and/or based on one or more photos and/or videos shared by Sarah K. Disambiguation option 1004c, when selected, causes computer system 600 to display a user interface that includes images of a plurality of individuals (e.g., media items and/or images from the user's media library) for the user to identify the specific individual the user meant with the term "Sarah."

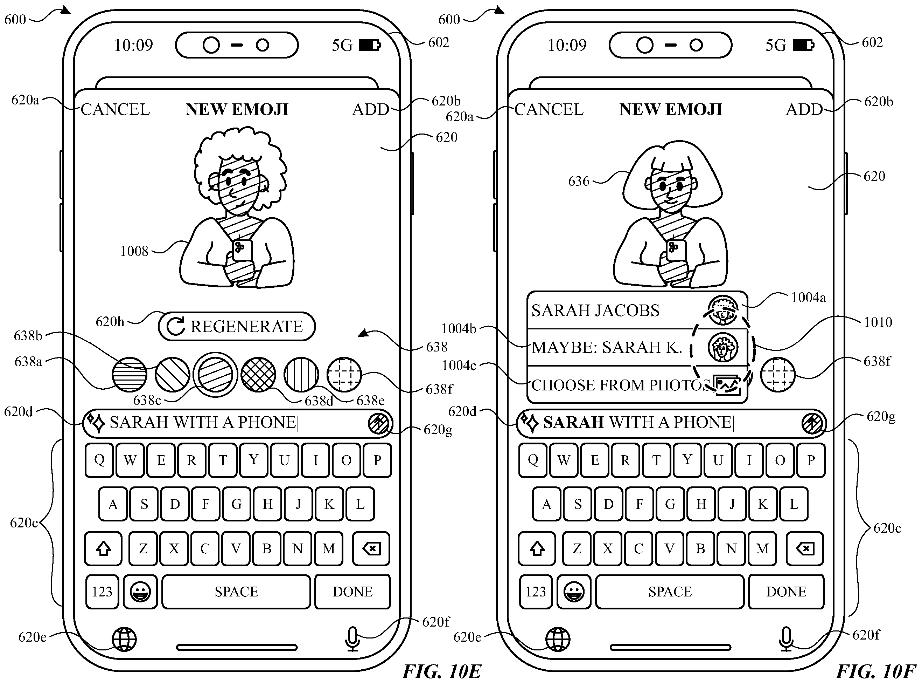

At FIG. 10D, computer system 600 detects user input 1006 corresponding to selection of disambiguation option 1004a. At FIG. 10E, in response to user input 1006, computer system 600 uses physical appearance information corresponding to the individual Sarah Jacobs (e.g., based on one or more media items and/or images that depict Sarah Jacobs), and generates a new emoji 1008 that has a physical appearance that is generated based on the physical appearance information corresponding to Sarah Jacobs (e.g., such that emoji 1008 looks like Sarah Jacobs).

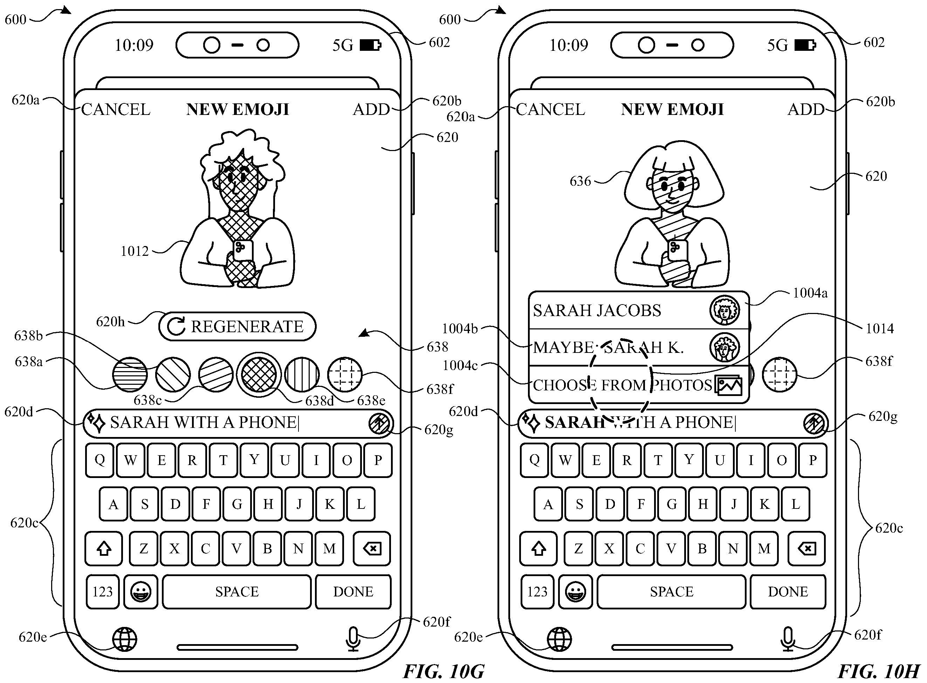

FIG. 10F depicts a different scenario, in which computer system 600 detects user input 1010 corresponding to selection of disambiguation option 1004b (rather than selection of disambiguation option 1004a shown in FIG. 10D). At FIG. 10G, in response to user input 1010, computer system 600 uses physical appearance information corresponding to the individual Sarah K. (e.g., based on one or more media items and/or images that depict Sarah K.), and generates a new emoji 1012 that has a physical appearance that is generated based on the physical appearance information corresponding to Sarah K. (e.g., such that emoji 1012 looks like Sarah K.).

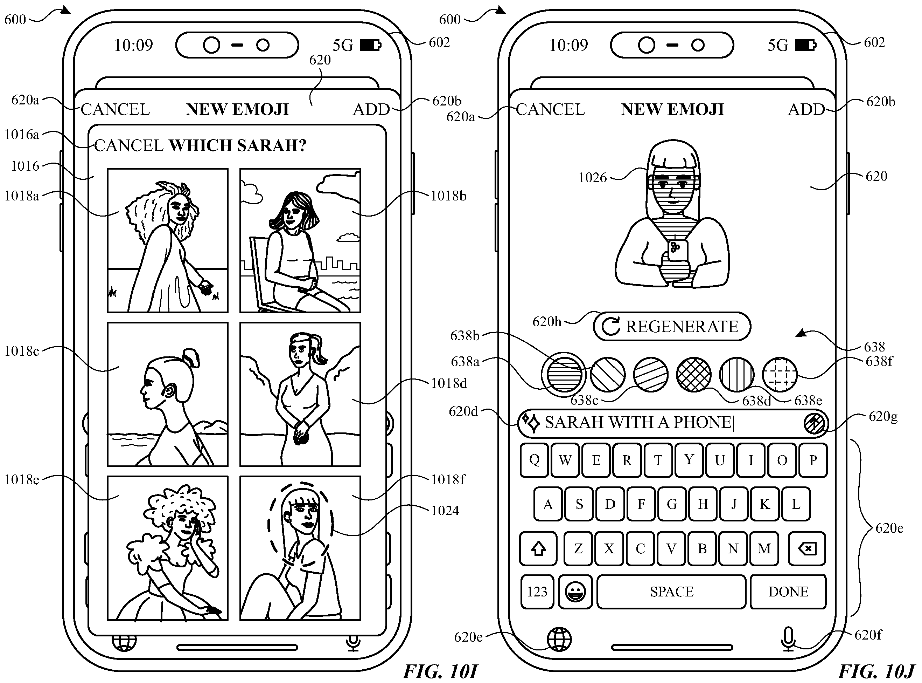

FIG. 10H depicts a third scenario, in which computer system 600 detects user input 1014 corresponding to selection of disambiguation option 1004c. At FIG. 10I, in response to user input 1014, computer system 600 displays user interface 1016. User interface 1016 includes option 1016a and images 1018a-1018f. Option 1016a, when selected, causes computer system 600 to cease display of user interface 1016 (and, optionally, re-display user interface 620 in FIG. 10H). Images 1018a-1018f are selectable by a user for the user to indicate which person the user meant to identify with the term "Sarah." In some embodiments, images 1018a-1018f are selected from a media library corresponding to the user of computer system 600. In some embodiments, at least some of images 1018a-1018f are selected from the media library for inclusion in user interface 1016 based on a determination that metadata associated with at least some of the images 1018a-1018f indicate that those images depict an individual named Sarah. In some embodiments, images 1018a-1018f are selected for inclusion in user interface 1016 based on a determination that each image 1018a-1018f depicts an individual that is named Sarah (e.g., based on metadata associated with each image and/or based on image recognition and/or visual appearance information stored on computer system 600). Accordingly, in some embodiments, images in the user's media library that are determined not to depict an individual named Sarah are not selected for inclusion in user interface 1016 and are not displayed within user interface 1016.

At FIG. 10I, while displaying user interface 1016, computer system 600 detects user input 1024 corresponding to selection of image 1018f. At FIG. 10J, in response to user input 1024, computer system 600 uses physical appearance information corresponding to the individual depicted in image 1018f (e.g., based on image 1018f and/or one or more media items that depict the individual shown in image 1018f), and generates a new emoji 1026 that has a physical appearance that is generated based on the physical appearance information corresponding to the individual depicted in image 1018f (e.g., such that emoji 1026 resembles the individual depicted in image 1018f).

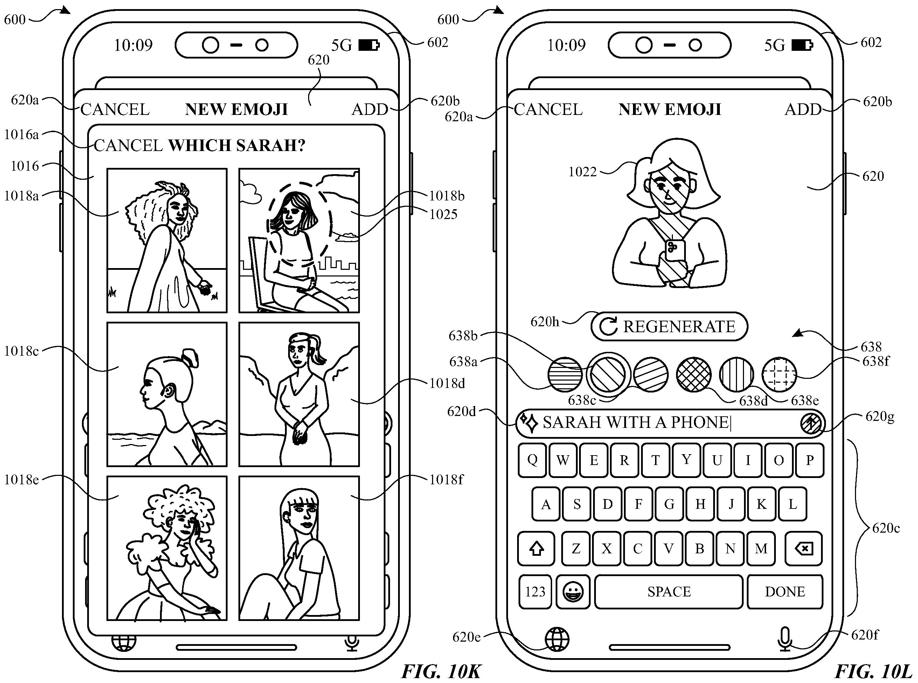

FIG. 10K depicts a scenario different from that shown in FIG. 10I in which, while displaying user interface 1016, computer system 600 detects user input 1025 corresponding to selection of image 1018b. At FIG. 10L, in response to user input 1025, computer system 600 uses physical appearance information corresponding to the individual depicted in image 1018b (e.g., based on image 1018b and/or one or more media items that depict the individual shown in image 1018b), and generates a new emoji 1022 that has a physical appearance that is generated based on the physical appearance information corresponding to the individual depicted in image 1018b (e.g., such that emoji 1022 resembles the individual depicted in image 1018b).

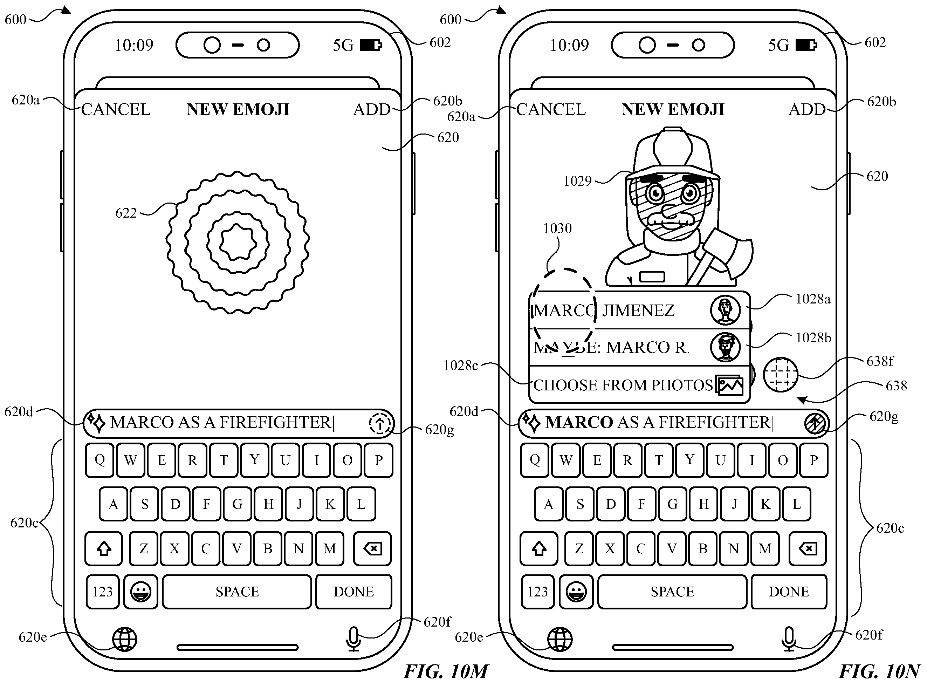

At FIG. 10M, computer system 600 displays emoji generation user interface 620. In FIG. 10M, the user has entered the terms "Marco as a firefighter" into text field 620d. At FIG. 10M, computer system 600 has initiated generation of one or more emojis based on the user-entered text, and displays placeholder 622 to indicate that one or more emojis are being generated based on the user-entered text.

At FIG. 10N, emoji 1029 has been generated based on the user-entered text "Marco as a firefighter." Furthermore, based on a determination that emoji 1029 depicts a person, emoji 1029 is displayed with skin tone options 638a-638f. In some embodiments, at FIG. 10N, emoji 1029 is generated to depict a generic and/or non-specific man based on the user-entered text prompt. However, at FIG. 10N computer system 600 determines that the term "Marco" may correspond to one or more individuals that are recognized by and/or known to computer system 600. For example, in some embodiments, there are one or more individuals named "Marco" saved to a contacts list; and/or there are one or more individuals named "Marco" that have been identified and/or tagged in one or more media items (e.g., by the user of computer system).

At FIG. 10N, based on the determination that the term "Marco" may correspond to one or more individuals that are known to computer system 600, computer system 600 displays disambiguation options 1028a, 1028b, 1028c. Disambiguation option 1028a corresponds to a first individual named Marco Jimenez. In some embodiments, computer system 600 has physical appearance information pertaining to the individual Marco Jimenez, for example, based on the user of computer system 600 previously identifying Marco Jimenez in one or more photos and/or videos in the user's media library and/or based on one or more photos and/or videos shared by Marco Jimenez. Disambiguation option 1028b corresponds to a second individual named Marco R. In some embodiments, computer system 600 has physical appearance information pertaining to the individual Marco R., for example, based on the user of computer system 600 previously identifying Marco R. in one or more photos and/or videos in the user's media library and/or based on one or more photos and/or videos shared by Marco R. Disambiguation option 1028c, when selected, causes computer system 600 to display a user interface that includes images of a plurality of individuals (e.g., media items and/or images from the user's media library) for the user to identify the specific individual the user meant with the term "Marco."

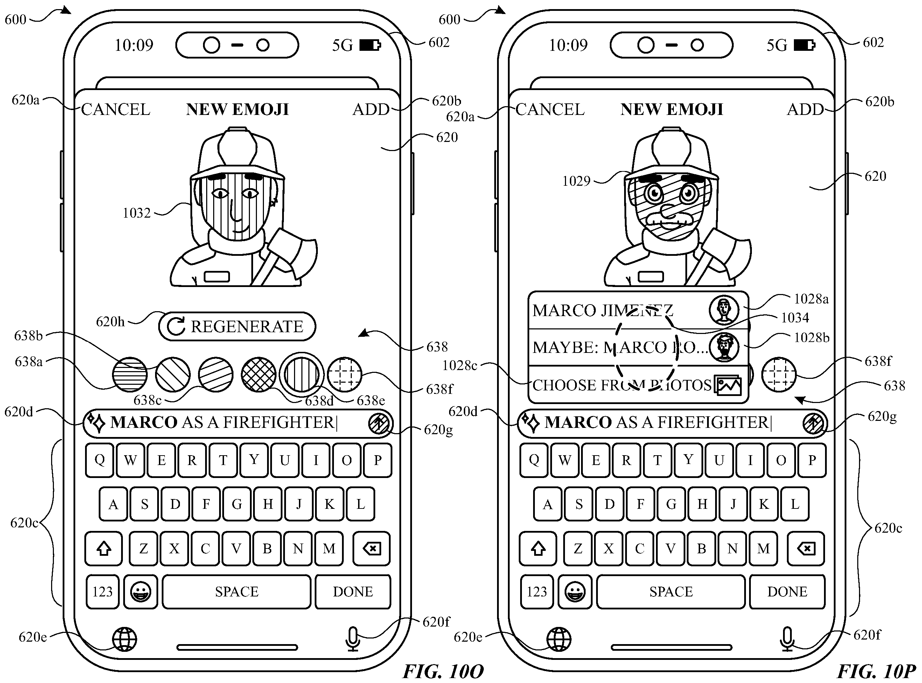

At FIG. 10N, computer system 600 detects user input 1030 corresponding to selection of disambiguation option 1028a. At FIG. 10O, in response to user input 1030, computer system 600 uses physical appearance information corresponding to the individual Marco Jimenez (e.g., based on one or more media items and/or images that depict Marco Jimenez), and generates a new emoji 1032 that has a physical appearance that is generated based on the physical appearance information corresponding to Marco Jimenez (e.g., such that emoji 1032 looks like Marco Jimenez).

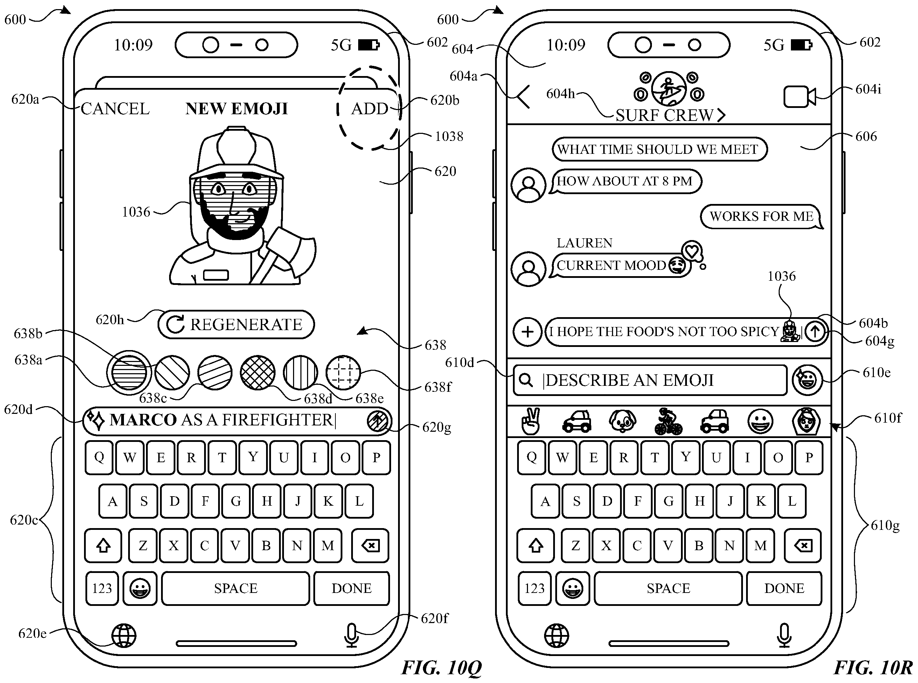

FIG. 10P depicts a different scenario, in which computer system 600 detects user input 1034 corresponding to selection of disambiguation option 1028b (rather than selection of disambiguation option 1028a shown in FIG. 10N). At FIG. 10Q, in response to user input 1034, computer system 600 uses physical appearance information corresponding to the individual Marco R. (e.g., based on one or more media items and/or images that depict Marco R.), and generates a new emoji 1036 that has a physical appearance that is generated based on the physical appearance information corresponding to Marco R. (e.g., such that emoji 1036 looks like Marco R.). At FIG. 10Q, computer system 600 detects user input 1038 corresponding to selection of option 620b. At FIG. 10R, in response to user input 1038, computer system 600 ceases display of emoji generation user interface 620, and displays emoji 1036 within text field 604b in line with other text that has been entered into text field 604b.

FIG. 11 is a flow diagram illustrating a method for providing dynamically generated content using a computer system in accordance with some embodiments. Method 1100 is performed at a computer system (e.g., 100, 300, 500, 600, 650, and/or 670) (e.g., a smart phone, a smart watch, a tablet, a laptop, a desktop, a wearable device, wrist-worn device, and/or head-mounted device) that is in communication with one or more display generation components (e.g., 602) (e.g., a display, a touch-sensitive display, and/or a display controller) and one or more input devices (e.g., 602) (e.g., a touch-sensitive surface, a touch-sensitive display, a button, a rotatable input mechanism, a depressible and rotatable input mechanism, a camera, an accelerometer, and/or an inertial measurement unit (IMU)). Some operations in method 1100 are, optionally, combined, the orders of some operations are, optionally, changed, and some operations are, optionally, omitted.

As described below, method 1100 provides an intuitive way for providing dynamically generated content. The method reduces the cognitive burden on a user for accessing dynamically generated content, thereby creating a more efficient human-machine interface. For battery-operated computing devices, enabling a user to access dynamically generated content faster and more efficiently conserves power and increases the time between battery charges.

The computer system (e.g., 600) receives (1102), via the one or more input devices, a first user input (e.g., 1002, 1006, 1010, 1014, 1024, and/or 1025) (e.g., one or more inputs) (e.g., one or more touch inputs, one or more gesture inputs, one or more air gesture inputs, one or more spoken inputs, and/or one or more hardware inputs) (e.g., a user input inputting text and/or specifying one or more terms), wherein the first user input includes a first description (e.g., a text description, a spoken description, and/or one or more words describing an image and/or emoji to be generated) and identification of a first person (e.g., the name of the person, selection of a person, selection of a contact from a set of contacts, and/or selection of one or more images depicting the first person). In response to receiving the first user input (1104): in accordance with a determination that first criteria are met (1106) (e.g., in some embodiments, including a determination that image data corresponding to the first person and/or other description of the physical appearance of the first person is available (e.g., is accessible by the computer system and/or the computer system is permitted to access such information)), the computer system displays (1108), via the one or more display generation components, a first dynamically generated emoji (e.g., 1008, 1012, 1026, and/or 1022) (e.g., an automatically-generated emoji, a generative emoji, automatically-generated visual content, and/or generative visual content) that is generated (e.g., using an AI process or a generative AI process) in response to the first user input (e.g., in some embodiments, the first dynamically generated emoji is created in response to the first user input and is not created prior to receiving the first user input) and based on the first description and the identification of the first person. In some embodiments, the first dynamically generated emoji is generated (e.g., using an AI process or a generative AI process) and/or created to depict visual content that is responsive to and/or consistent with the first description. In some embodiments, the first dynamically generated emoji is generated (e.g., using an AI process or a generative AI process) and/or created to depict visual content based on a description of visual content provided via the first user input. In some embodiments, the first dynamically generated emoji is generated (e.g., using an AI process or a generative AI process) and/or created to depict a person that has a physical appearance that resembles the first person. In some embodiments, the first dynamically generated emoji is generated (e.g., using an AI process or a generative AI process) and/or created to depict a person that has a physical appearance that is determined based on image data corresponding to the first person (e.g., image data corresponding to the first person that is indicative of and/or descriptive of a physical appearance of the first person). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first user input (e.g., 1002, 1006, 1010, 1014, 1024, and/or 1025) comprises one or more user inputs via a keyboard (e.g., a physical keyboard and/or a virtual keyboard) (e.g., in some embodiments, the first user input includes user selection and/or entry of one or more text characters and/or user selection and/or entry of one of more terms via the keyboard) (e.g., one or more user inputs via keyboard that specify the first description and or that provide identification of the first person). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first user input comprises one or more spoken inputs (e.g., one or more spoken inputs to insert text into text field 620d) (e.g., one or more spoken inputs received by the computer system via one or more microphones) (e.g., in some embodiments, the first user input includes user entry of one or more terms (e.g., words and/or phrases) and/or commands via spoken input) (e.g., one or more spoken inputs that specify the first description and or that provide identification of the first person). Allowing a user to dynamically generate emojis based on user input allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, in response to receiving the first user input (e.g., 1002, 1006, 1010, 1014, 1024, and/or 1025) (and, in some embodiments in accordance with a determination that the first criteria are met), and prior to displaying the first dynamically generated emoji (e.g., 1008, 1012, 1026, and/or 1022) that is generated in response to the first user input, the computer system displays, via the one or more display generation components, one or more placeholder objects (e.g., 622) (e.g., visual objects and/or visual user interface objects) that are indicative of one or more emojis being generated (e.g., using an AI process or a generative AI process) in response to the first user input. Displaying a placeholder object indicative of one or more emojis being generated provides the user with a visual indication of a state of the computer system (e.g., that the computer system is generating emojis). Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, in response to receiving the first user input (e.g., 1002, 1006, 1010, 1014, 1024, and/or 1025) (and, in some embodiments in accordance with a determination that the first criteria are met), the computer system displays, via the one or more display generation components, a visual representation of the first description (e.g., text and/or one or more words specifying the first description) (e.g., text in text field 620d). Displaying a visual representation of the first description provides the user with a visual indication of a state of the computer system (e.g., that the computer system is generating emojis based on the first description). Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the computer system receives, via the one or more input devices, a second user input (e.g., 1002, 1006, 1010, 1014, 1024, and/or 1025) (e.g., one or more inputs) (e.g., one or more touch inputs, one or more gesture inputs, one or more air gesture inputs, one or more spoken inputs, and/or one or more hardware inputs) (e.g., a user input inputting text and/or specifying one or more terms), wherein the second user input includes a second description (e.g., a text description, a spoken description, and/or one or more words describing an image and/or emoji to be generated). In response to receiving the second user input that includes the second description: in accordance with a determination that the second description (and/or, optionally, the second user input) satisfies person identification criteria, wherein the person identification criteria include a requirement that a received user input (e.g., the received description that is part of the user input) includes description of a respective person (e.g., a name and/or a relationship descriptor (e.g., friends, family, coworkers, boss, grandma, mom, dad, sister, brother, son, daughter, nephew, and/or niece)) in order for the person identification criteria to be satisfied, the computer system displays, via the one or more display generation components, one or more disambiguation options (e.g., 1004a, 1004b, 1004c, 1028a, 1028b, and/or 1028c) including a first disambiguation option that, when selected, initiates a process for identifying the respective person. In some embodiments, the person identification criteria include a requirement that the received user input and/or the received description that is part of the received user input includes a description of a person and the description of the person could apply to more than one person and/or the description of the person does not specifically identify a single known person in order for the person identification criteria to be satisfied. Automatically displaying disambiguation options when person identification criteria are satisfied allows a user to access these features with fewer user inputs. Additionally, displaying disambiguation options only when certain criteria are satisfied conserves computer resources and battery life and display space. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the second user input is part of the first user input (e.g., 1002, 1006, 1010, 1014, 1024, and/or 1025) (e.g., the second user input is a subset and/or a portion of the first user input); the second description is the first description; and the first user input further comprises a third user input corresponding to selection of the first disambiguation option (e.g., user input 1006 selecting disambiguation option 1004a and/or user input 1010 selecting disambiguation option 1004b) (e.g., a third user input identifying a specific induvial and/or identifying a specific person that is described by the first description). In some embodiments, the first user input includes a description (e.g., a description of an emoji to be generated) (e.g., text input and/or spoken input including a description), a description of a respective person (e.g., a text and/or spoken input that includes a description of a respective person (e.g., a person to be depicted in the emoji to be generated)), and a disambiguation user input identifying and/or specifying the respective person. Automatically displaying disambiguation options when person identification criteria are satisfied allows a user to access these features with fewer user inputs. Additionally, displaying disambiguation options only when certain criteria are satisfied conserves computer resources and battery life and display space. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, in response to receiving the second user input (e.g., 1002, 1006, 1010, 1014, 1024, and/or 1025) (and, in some embodiments in accordance with a determination that the first criteria are met), the computer system displays, via the one or more display generation components, a visual representation of the second description (e.g., text and/or one or more words specifying the second description) (e.g., text in text field 620d), including: in accordance with a determination that a first portion of the second description is descriptive of a respective person (e.g., the first portion of the second description includes a name and/or a relationship descriptor and/or a person descriptor), displaying the first portion of the second description in a first manner (e.g., a first manner that highlights, accentuates, and/or visually emphasizes the first portion of the second description) (e.g., with a first color, a first size, a first font, a first saturation, and/or a first brightness) (e.g., in FIG. 10F, the term "Sarah" is highlighted); and in accordance with a determination that a second portion of the second description is not descriptive of a respective person (e.g., the second portion does not include a name and/or a relationship descriptor), displaying the second portion of the second description in a second manner different from the first manner (e.g., with a second color, a second size, a second font, a second saturation, and/or a second brightness) (e.g., in FIG. 10F, the terms "with a phone" are not highlighted). Automatically displaying disambiguation options when person identification criteria are satisfied allows a user to access these features with fewer user inputs. Additionally, displaying disambiguation options only when certain criteria are satisfied conserves computer resources and battery life and display space. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first disambiguation option (e.g., 1004a and/or 1004b) includes a name of a first person (e.g., the name of a first contact and/or a first person that matches and/or is responsive to the second description). Automatically displaying disambiguation options when person identification criteria are satisfied allows a user to access these features with fewer user inputs. Additionally, displaying disambiguation options only when certain criteria are satisfied conserves computer resources and battery life and display space. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first disambiguation option (e.g., 1004 and/or 1004b) further includes a first photograph of the first person (e.g., a photograph and/or an image depicting the first person). Automatically displaying disambiguation options when person identification criteria are satisfied allows a user to access these features with fewer user inputs. Additionally, displaying disambiguation options only when certain criteria are satisfied conserves computer resources and battery life and display space. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the one or more disambiguation options (e.g., 1004a-1004c) further include a second disambiguation option (e.g., 1004b) different from the first disambiguation option (e.g., 1004a); and the second disambiguation option includes a name of a second person different from the first person (e.g., the name of a second contact and/or a second person that matches and/or is responsive to the second description). Automatically displaying disambiguation options when person identification criteria are satisfied allows a user to access these features with fewer user inputs. Additionally, displaying disambiguation options only when certain criteria are satisfied conserves computer resources and battery life and display space. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the second disambiguation option (e.g., 1004a and/or 1004b) further includes a second photograph of the second person (e.g., a photograph and/or an image depicting the second person). Automatically displaying disambiguation options when person identification criteria are satisfied allows a user to access these features with fewer user inputs. Additionally, displaying disambiguation options only when certain criteria are satisfied conserves computer resources and battery life and display space. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, while displaying the one or more disambiguation options (e.g., 1004-1004c), including the first disambiguation option and the second disambiguation option, the computer system receives, via the one or more input devices, a selection input (e.g., one or more inputs) (e.g., one or more touch inputs, one or more gesture inputs, one or more air gesture inputs, one or more spoken inputs, and/or one or more hardware inputs) (e.g., a user input inputting text and/or specifying one or more terms). In response to receiving the selection input: in accordance with a determination that the selection input corresponds to selection of the first disambiguation option (and, in some embodiments, does not correspond to selection of the second disambiguation option) (e.g., user input 1006 selecting option 1004a), the computer system displays, via the one or more display generation components, a second dynamically generated emoji (e.g., 1008) (e.g., an automatically-generated emoji, a generative emoji, automatically-generated visual content, and/or generative visual content) that is generated (e.g., using an AI process or a generative AI process) in response to the selection input and is generated (e.g., using an AI process or a generative AI process) based on the second description and image data corresponding to the first person (e.g., image data corresponding to the first person and/or that is indicative and/or descriptive of a physical appearance of the first person) (e.g., without using image data corresponding to the second person); and in accordance with a determination that the selection input corresponds to selection of the second disambiguation option (and, in some embodiments, does not correspond to selection of the first disambiguation option) (e.g., user input 1010 selecting option 1004b), the computer system displays, via the one or more display generation components, a third dynamically generated emoji (e.g., 1012) (e.g., an automatically-generated emoji, a generative emoji, automatically-generated visual content, and/or generative visual content) that is different from the second dynamically generated emoji, is generated (e.g., using an AI process or a generative AI process) in response to the selection input, and is generated (e.g., using an AI process or a generative AI process) based on the second description and image data corresponding to the second person (e.g., image data corresponding to the second person and/or that is indicative and/or descriptive of a physical appearance of the second person) (e.g., without using image data corresponding to the first person). Automatically displaying disambiguation options when person identification criteria are satisfied allows a user to access these features with fewer user inputs. Additionally, displaying disambiguation options only when certain criteria are satisfied conserves computer resources and battery life and display space. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, the first disambiguation option (e.g., 1004c), when selected, initiates a process for identifying a person to be depicted in a dynamically generated emoji (e.g., an automatically-generated emoji, a generative emoji, automatically-generated visual content, and/or generative visual content) based on user selection of one or more photographs. Automatically displaying disambiguation options when person identification criteria are satisfied allows a user to access these features with fewer user inputs. Additionally, displaying disambiguation options only when certain criteria are satisfied conserves computer resources and battery life and display space. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, while displaying the one or more disambiguation options (e.g., 1004a-1004c), including the first disambiguation option, the computer system receives, via the one or more input devices, a selection input (e.g., one or more inputs) (e.g., one or more touch inputs, one or more gesture inputs, one or more air gesture inputs, one or more spoken inputs, and/or one or more hardware inputs) (e.g., a user input inputting text and/or specifying one or more terms) corresponding to selection of the first disambiguation option (e.g., user input 1014 selecting option 1004c). In response to receiving the selection input corresponding to selection of the first disambiguation option, the computer system displays, via the one or more display generation components, a photo selection user interface (e.g., 1016) that includes a plurality of images (e.g., 1018a-1018f) (e.g., photographs and/or pictures) depicting a plurality of different people, including: a first image depicting a first respective person (e.g., 1018a); and a second image depicting a second respective person different from the first respective person (e.g., 1018b). Automatically displaying disambiguation options when person identification criteria are satisfied allows a user to access these features with fewer user inputs. Additionally, displaying disambiguation options only when certain criteria are satisfied conserves computer resources and battery life and display space. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, while displaying the photo selection user interface (e.g., 1016), the computer system receives, via the one or more input devices, a second selection input (e.g., 1024 and/or 1025)(e.g., one or more inputs) (e.g., one or more touch inputs, one or more gesture inputs, one or more air gesture inputs, one or more spoken inputs, and/or one or more hardware inputs) (e.g., a user input inputting text and/or specifying one or more terms). In response to receiving the second selection input: in accordance with a determination that the second selection input corresponds to selection of the first image (and, in some embodiments, does not correspond to selection of the second image) (e.g., user input 1024 selecting image 1018f), the computer system displays, via the one or more display generation components, a fourth dynamically generated emoji (e.g., 1026) (e.g., an automatically-generated emoji, a generative emoji, automatically-generated visual content, and/or generative visual content) that is generated (e.g., using an AI process or a generative AI process) in response to the second selection input and is generated (e.g., using an AI process or a generative AI process) based on the second description and image data corresponding to the first respective person (e.g., image data corresponding to the first respective person and/or that is indicative and/or descriptive of a physical appearance of the first respective person) (e.g., without using image data corresponding to the second respective person); and in accordance with a determination that the selection input corresponds to selection of the second image (and, in some embodiments, does not correspond to selection of the first image) (e.g., user input 1025 selecting image 1018b), the computer system displays, via the one or more display generation components, a fifth dynamically generated emoji (e.g., 1022) (e.g., an automatically-generated emoji, a generative emoji, automatically-generated visual content, and/or generative visual content) that is different from the fourth dynamically generated emoji (e.g., 1026), is generated (e.g., using an AI process or a generative AI process) in response to the second selection input, and is generated (e.g., using an AI process or a generative AI process) based on the second description and image data corresponding to the second respective person (e.g., image data corresponding to the second respective person and/or that is indicative and/or descriptive of a physical appearance of the second respective person) (e.g., without using image data corresponding to the first respective person). Automatically displaying disambiguation options when person identification criteria are satisfied allows a user to access these features with fewer user inputs. Additionally, displaying disambiguation options only when certain criteria are satisfied conserves computer resources and battery life and display space. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

In some embodiments, while displaying the first dynamically generated emoji (e.g., 1036), the computer system receives, via the one or more input devices, a selection input (e.g., 1038) (e.g., one or more inputs) (e.g., one or more touch inputs, one or more gesture inputs, one or more air gesture inputs, one or more spoken inputs, and/or one or more hardware inputs) corresponding to selection of the first dynamically generated emoji (e.g., user input 1038 selecting add option 1038 which, in some embodiments, corresponds to selection of emoji 1036). In response to receiving the selection input corresponding to selection of the first dynamically generated emoji, the computer system inserts the first dynamically generated emoji (e.g., 1036) in line with a first set of text (e.g., in a text entry field (e.g., a message entry field; a search entry field; and/or other text entry field) and/or in a document that includes text) (e.g., inserting the first dynamically generated emoji in a line and/or a row of text) (e.g., FIG. 10R, emoji 1036 is inserted in line with text in text field 604b). Allowing a user to dynamically generate emojis based on user input, and enter those emojis in-line with text, allows the user to perform these operations with fewer inputs. Furthermore, doing so also enhances the operability of the system and makes the user-system interface more efficient (e.g., by preventing erroneous inputs and helping the user to provide proper inputs and reducing errors) which, additionally, reduces power usage and improves the battery life of the device by enabling the user to use the system more quickly and efficiently.

Note that details of the processes described above with respect to method 1100 (e.g., FIG. 11) are also applicable in an analogous manner to the methods described above. For example, method 700, method 800, and/or method 900 optionally include one or more of the characteristics of the various methods described above with reference to method 1100. For example, the dynamically generated emoji(s) recited in method 1100 are the same dynamically generated emoji(s) recited in method 700, method 800, and/or method 900. For brevity, these details are not repeated below.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

Some embodiments described herein can include use of artificial intelligence and/or machine learning systems (sometimes referred to herein as the AI/ML systems). The use can include collecting, processing, labeling, organizing, analyzing, recommending and/or generating data. Entities that collect, share, and/or otherwise utilize user data should provide transparency and/or obtain user consent when collecting such data. The present disclosure recognizes that the use of the data in the AI/ML systems can be used to benefit users. For example, the data can be used to train models that can be deployed to improve performance, accuracy, and/or functionality of applications and/or services. Accordingly, the use of the data enables the AI/ML systems to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the AI/ML systems are also contemplated by the present disclosure.

The present disclosure contemplates that, in some embodiments, data used by AI/ML systems includes publicly available data. To protect user privacy, data may be anonymized, aggregated, and/or otherwise processed to remove or to the degree possible limit any individual identification. As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with AI/ML systems, should attempt to comply with well-established privacy policies and/or privacy practices.

For example, such entities may implement and consistently follow policies and practices recognized as meeting or exceeding industry standards and regulatory requirements for developing and/or training AI/ML systems. In doing so, attempts should be made to ensure all intellectual property rights and privacy considerations are maintained. Training should include practices safeguarding training data, such as personal information, through sufficient protections against misuse or exploitation. Such policies and practices should cover all stages of the AI/ML systems development, training, and use, including data collection, data preparation, model training, model evaluation, model deployment, and ongoing monitoring and maintenance. Transparency and accountability should be maintained throughout. Such policies should be easily accessible by users and should be updated as the collection and/or use of data changes. User data should be collected for legitimate and reasonable uses of the entity and not shared or sold outside of those legitimate uses. Further, such collection and sharing should occur through transparency with users and/or after receiving the informed consent of the users. Additionally, such entities should consider taking any needed steps for safeguarding and securing access to such data and ensuring that others with access to the data adhere to their privacy policies and procedures. Further, such entities should subject themselves to evaluation by third parties to certify, as appropriate for transparency purposes, their adherence to widely accepted privacy policies and practices. In addition, policies and/or practices should be adapted to the particular type of data being collected and/or accessed and tailored to a specific use case and applicable laws and standards, including jurisdiction-specific considerations.

In some embodiments, AI/ML systems may utilize models that may be trained (e.g., supervised learning or unsupervised learning) using various training data, including data collected using a user device. Such use of user-collected data may be limited to operations on the user device. For example, the training of the model can be done locally on the user device so no part of the data is sent to another device. In other implementations, the training of the model can be performed using one or more other devices (e.g., server(s)) in addition to the user device but done in a privacy preserving manner, e.g., via multi-party computation as may be done cryptographically by secret sharing data or other means so that the user data is not leaked to the other devices.

In some embodiments, the trained model can be centrally stored on the user device or stored on multiple devices, e.g., as in federated learning. Such decentralized storage can similarly be done in a privacy preserving manner, e.g., via cryptographic operations where each piece of data is broken into shards such that no device alone (i.e., only collectively with another device(s)) or only the user device can reassemble or use the data. In this manner, a pattern of behavior of the user or the device may not be leaked, while taking advantage of increased computational resources of the other devices to train and execute the ML model. Accordingly, user-collected data can be protected. In some implementations, data from multiple devices can be combined in a privacy-preserving manner to train an ML model.

In some embodiments, the present disclosure contemplates that data used for AI/ML systems may be kept strictly separated from platforms where the AI/ML systems are deployed and/or used to interact with users and/or process data. In such embodiments, data used for offline training of the AI/ML systems may be maintained in secured datastores with restricted access and/or not be retained beyond the duration necessary for training purposes. In some embodiments, the AI/ML systems may utilize a local memory cache to store data temporarily during a user session. The local memory cache may be used to improve performance of the AI/ML systems. However, to protect user privacy, data stored in the local memory cache may be erased after the user session is completed. Any temporary caches of data used for online learning or inference may be promptly erased after processing. All data collection, transfer, and/or storage should use industry-standard encryption and/or secure communication.

**In** some embodiments, as noted above, techniques such as federated learning, differential privacy, secure hardware components, homomorphic encryption, and/or multi-party computation among other techniques may be utilized to further protect personal information data during training and/or use of the AI/ML systems. The AI/ML systems should be monitored for changes in underlying data distribution such as concept drift or data skew that can degrade performance of the AI/ML systems over time.

**In** some embodiments, the AI/ML systems are trained using a combination of offline and online training. Offline training can use curated datasets to establish baseline model performance, while online training can allow the AI/ML systems to continually adapt and/or improve. The present disclosure recognizes the importance of maintaining strict data governance practices throughout this process to ensure user privacy is protected.

**In** some embodiments, the AI/ML systems may be designed with safeguards to maintain adherence to originally intended purposes, even as the AI/ML systems adapt based on new data. Any significant changes in data collection and/or applications of an AI/ML system use may (and in some cases should) be transparently communicated to affected stakeholders and/or include obtaining user consent with respect to changes in how user data is collected and/or utilized.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the AI/ML systems and/or for use as input during the inference stage of such systems. In yet another example, the present technology should be configured to allow users to be able to select to limit the length of time data is maintained or entirely prohibit the use of their data for use by the AI/ML systems. In addition to providing "opt in" and "opt out" options, the present disclosure contemplates providing notifications relating to the access or use of personal information. For instance, a user can be notified when their data is being input into the AI/ML systems for training or inference purposes, and/or reminded when the AI/ML systems generate outputs or make decisions based on their data.

The present disclosure recognizes AI/ML systems should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to third-party products and/or services in the outputs should not be construed as endorsements or affiliations by the entities providing the AI/ML systems. Generated content can be filtered for potentially inappropriate or dangerous material prior to being presented to users, while human oversight and/or ability to override or correct erroneous or undesirable outputs can be maintained as a failsafe.

The present disclosure further contemplates that users of the AI/ML systems should refrain from using the services in any manner that infringes upon, misappropriates, or violates the rights of any party. Furthermore, the AI/ML systems should not be used for any unlawful or illegal activity, nor to develop any application or use case that would commit or facilitate the commission of a crime, or other tortious, unlawful, or illegal act. The AI/ML systems should not violate, misappropriate, or infringe any copyrights, trademarks, rights of privacy and publicity, trade secrets, patents, or other proprietary or legal rights of any party, and appropriately attribute content as required. Further, the AI/ML systems should not interfere with any security, digital signing, digital rights management, content protection, verification, or authentication mechanisms. The AI/ML systems should not misrepresent machine-generated outputs as being human-generated.

As described above, one aspect of the present technology is the gathering and use of data available from various sources to improve the delivery to users of dynamically generated content or any other content that may be of interest to them, such as personalized emojis that resemble actual individuals. The present disclosure contemplates that in some instances, this gathered data may include personal information data that uniquely identifies or can be used to contact or locate a specific person. Such personal information data can include demographic data, location-based data, telephone numbers, email addresses, social network IDs, home addresses, data or records relating to a user's health or level of fitness (e.g., vital signs measurements, medication information, exercise information), date of birth, physical likeness information, or any other identifying or personal information.

The present disclosure recognizes that the use of such personal information data, in the present technology, can be used to the benefit of users. For example, the personal information data can be used to deliver targeted content and/or dynamically generated content that is of greater interest to the user. Accordingly, use of such personal information data enables users to have calculated control of the delivered content. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of dynamically generated content, the present technology can be configured to allow users to select to "opt in" or "opt out" of participation in the collection of personal information data, including physical likeness information, during registration for services or anytime thereafter. In another example, users can select not to provide personal information for dynamically generated content. In yet another example, users can select to limit the length of personal data is maintained or entirely prohibit the collection and/or maintenance of personal data. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users and/or content can be dynamically generated for users by inferring preferences based on non-personal information data or a bare minimum amount of personal information, such as the content being requested by the device associated with a user, other non-personal information available to the content delivery services, or publicly available information.

### NUMBERED STATEMENTS OF THE INVENTION

1. A method, comprising:
   at a computer system that is in communication with one or more display generation components and one or more input devices:
   receiving, via the one or more input devices, a first user input; and
   in response to receiving the first user input:
      in accordance with a determination that generative emoji criteria are not met, displaying, via the one or more display generation components, a first set of preexisting emojis selected from a set of preexisting emojis based on the first user input; and
      in accordance with a determination that the generative emoji criteria are met, displaying, via the one or more display generation components, a first set of dynamically generated emojis that are generated in response to the first user input.
2. The method of statement 1, wherein the first user input includes one or more user inputs providing a text input.
3. The method of statement 2, wherein the first user input includes one or more user inputs entering text into a search field.
4. The method of statement 2, wherein the first user input includes one or more user inputs entering text into a text field.
5. The method of any of statements 1-4, wherein the first user input includes one or more spoken inputs.
6. The method of any of statements 1-5, further comprising:
   while displaying the first set of dynamically generated emojis, receiving, via the one or more input devices, a selection input corresponding to selection of a first dynamically generated emoji of the first set of dynamically generated emojis; and
   in response to receiving the selection input corresponding to selection of the first dynamically generated emoji, inserting the first dynamically generated emoji in line with a first set of text.
7. The method of any of statements 1-5, further comprising:
   while displaying the first set of dynamically generated emojis, receiving, via the one or more input devices, a selection input corresponding to selection of a first dynamically generated emoji of the first set of dynamically generated emojis; and
   in response to receiving the selection input corresponding to selection of the first dynamically generated emoji, inserting the first dynamically generated emoji as an image.
8. The method of any of statements 1-7, wherein the set of preexisting emojis includes a first emoji that was previously dynamically generated in response to a user input prior to receiving the first user input.
9. The method of any of statements 1-8, wherein displaying the first set of dynamically generated emojis comprises:
   in accordance with a determination that the first user input specifies a first set of terms, displaying, via the one or more display generation components, a first respective set of dynamically generated emojis that are generated in response to the first set of terms; and
   in accordance with a determination that the first user input specifies a second set of terms different from the first set of terms, displaying, via the one or more display generation components, a second respective set of dynamically generated emojis that are generated in response to the second set of terms, wherein the second respective set of dynamically generated emojis is different from the first respective set of dynamically generated emojis.
10. The method of any of statements 1-9, wherein the first set of dynamically generated emojis are generated in response to the first user input using one or more machine learning models.
11. The method of statement 10, wherein the machine learning model is trained based on a training set that includes at least some of the set of preexisting emojis.
12. The method of statement 11, wherein the machine learning model is configured to re-use one or more elements of one or more preexisting emojis of the set of preexisting emojis.
13. The method of any of statements 1-12, wherein:
   the first user input specifies one or more search terms; and
   the generative emoji criteria include a requirement that fewer than a threshold number of preexisting emojis in the set of preexisting emojis are determined to be responsive to the one or more search terms in order for the generative emoji criteria to be met.
14. The method of any of statements 1-13, further comprising:
   receiving, via the one or more input devices, a second user input;
   in response to receiving the second user input:
      in accordance with a determination that generative emoji criteria are not met, displaying, via the one or more display generation components, a second set of preexisting emojis selected from the set of preexisting emojis based on the second user input without displaying any emojis that are generated based on the second user input;
   while displaying the second set of preexisting emojis without displaying any emojis that are generated based on the second user input, receiving, via the one or more input devices, a third user input; and
   in response to receiving the third user input, displaying, via the one or more display generation components, one or more dynamically generated emojis that are generated based on the second user input.
15. The method of any of statements 1-14, further comprising:
   receiving, via the one or more input devices, a fourth user input;
   in response to receiving the fourth user input:
      in accordance with a determination that generative emoji criteria are met, displaying, via the one or more display generation components, one or more dynamically generated emojis that are generated in response to the fourth user input;
   while displaying the one or more dynamically generated emojis that are generated in response to the fourth user input, receiving, via the one or more input devices, a fifth user input; and
   in response to receiving the fifth user input, displaying, via the one or more display generation components, a generative emoji user interface.
16. The method of statement 15, further comprising:
   displaying, via the one or more display generation components, a generative emoji option, wherein:
   the fifth user input comprises a selection input corresponding to selection of the generative emoji option.
17. The method of statement 16, further comprising:
   while displaying the generative emoji option, receiving, via the one or more input devices, a sixth user input corresponding to selection of the generative emoji option; and
   in response to receiving the sixth user input, displaying, via the one or more display generation components, the generative emoji user interface, including:
      in accordance with a determination that one or more search terms have been specified by a user when the sixth user input is received, displaying one or more dynamically generated emojis that are generated based on the one or more search terms within the generative emoji user interface; and
      in accordance with a determination that no search terms have been specified by a user when the sixth user input is received, displaying the generative emoji user interface without displaying any dynamically generated emojis within the generative emoji user interface.
18. The method of statement 17, wherein displaying the generative emoji user interface further includes:
   in accordance with a determination that one or more search terms have been specified by a user when the sixth user input is received, displaying the one or more search terms within the generative emoji user interface; and
   in accordance with a determination that no search terms have been specified by a user when the sixth user input is received, displaying, within the generative emoji user interface, one or more instructions prompting a user to specify one or more search terms.
19. The method of any of statements 15-18, wherein displaying the generative emoji user interface comprises:
   displaying, within the generative emoji user interface, a first dynamically generated emoji that is generated in response to one or more terms provided by a user;
   in accordance with a determination that the first dynamically generated emoji includes a first type of content, displaying, within the generative emoji user interface, a first option that, when selected, modifies a visual appearance of the first dynamically generated emoji; and
   in accordance with a determination that the first dynamically generated emoji does not include the first type of content, forgoing displaying the first option within the generative emoji user interface.
20. The method of statement 19, wherein:
   the determination that the first dynamically generated emoji includes a first type of content comprises a determination that the first dynamically generated emoji depicts at least one person including a first person; and
   the first option comprises a skin tone picker option that, when selected, modifies a skin tone color of the first person.
21. The method of statement 20, further comprising:
   while concurrently displaying the first dynamically generated emoji and the skin tone picker option, receiving, via the one or more input devices, a selection input corresponding to selection of the skin tone picker option;
   in response to receiving the selection input corresponding to selection of the skin tone picker option:
      displaying a skin tone of the first person changing from a first color to a second color different from the first color;
   subsequent to displaying the skin tone of the first person changing from the first color to the second color, receiving, via the one or more input devices, a seventh user input specifying a second set of terms; and
   in response to receiving the seventh user input specifying the second set of terms, displaying, via the one or more display generation components and within the generative emoji user interface, a second dynamically generated emoji that is generated in response to the seventh user input and the second set of terms, wherein:
      the second dynamically generated emoji is different from the first dynamically generated emoji;
      the second dynamically generated emoji includes a second person; and
      the second person has a skin tone that is the second color based on user selection of the skin tone picker option that corresponds to the second color while the first dynamically generated emoji was displayed.
22. The method of any of statements 15-21, further comprising:
   concurrently displaying, within the generative emoji user interface:
      a first respective dynamically generated emoji that was dynamically generated in response to one or more terms provided by a user; and
      a regenerate option;
   while concurrently displaying the first respective dynamically generated emoji and the regenerate option, receiving, via the one or more input devices, a selection input corresponding to selection of the regenerate option; and
   in response to receiving the selection input corresponding to selection of the regenerate option, replacing display of the first respective dynamically generated emoji with a second respective dynamically generated emoji different from the first respective dynamically generated emoji, wherein the second respective dynamically generated emoji is generated in response to the selection input corresponding to selection of the regenerate option and based on the one or more terms provided by the user.
23. The method of any of statements 15-22, wherein the generative emoji user interface includes a text entry field.
24. The method of any of statements 15-23, wherein displaying the generative emoji user interface comprises displaying, within the generative emoji user interface, a second set of one or more dynamically generated emojis that are responsive to the fourth user input.
25. The method of any of statements 1-24, wherein:
   the first set of dynamically generated emojis includes a third dynamically generated emoji; and
   displaying the first set of dynamically generated emojis comprises:
      in accordance with a determination that the first user input specifies a first person and that image data corresponding to the first person is available to the computer system, the third dynamically generated emoji is generated based on the image data corresponding to the first person.
26. The method of any of statements 1-25, further comprising:
   in response to receiving the first user input:
   in accordance with the determination that the generative emoji criteria are met:
   prior to displaying the first set of dynamically generated emojis that are generated in response to the first user input, displaying, via the one or more display generation components, one or more placeholder objects that are indicative of one or more emojis being generated in response to the first user input.
27. The method of any of statements 1-26, wherein:
   the generative emoji criteria include a content safety requirement;
   the content safety requirement is not met when one or more terms provided by a user for dynamically generating emojis are determined to be inappropriate; and
   the content safety requirement is required to be met in order for the generative emoji criteria to be met.
28. The method of statement 27, wherein the content safety requirement is not met when the one or more terms provided by the user for dynamically generating emojis are determined to reference a celebrity.
29. The method of any of statements 27-28, wherein the content safety requirement is not met when the one or more terms provided by the user for dynamically generating emojis are determined to reference copyrighted material.
30. The method of any of statements 1-26, wherein:
   the generative emoji criteria include a content safety requirement;
   the content safety requirement is not met when one or more terms provided by a user for dynamically generating emojis are determined to be inappropriate;
   the first user input specifies a respective set of terms;
   the respective set of terms is determined to include a first subset of terms that do not meet the content safety requirement and a second subset of terms that do meet the content safety requirement;
   the determination that the generative emoji criteria are met includes a determination that the respective set of terms includes at least some terms that meet the content safety requirement; and
   the first set of dynamically generated emojis are generated based on the second subset of terms in the respective set of terms.
31. A non-transitory computer-readable storage medium storing one or more programs configured to be executed by one or more processors of a computer system that is in communication with one or more display generation components and one or more input devices, the one or more programs including instructions for performing the method of any of statements 1-30.
32. A computer system that is configured to communicate with one or more display generation components and one or more input devices, the computer system comprising:
   one or more processors; and
   memory storing one or more programs configured to be executed by the one or more processors, the one or more programs including instructions for performing the method of any of statements 1-30.
33. A computer system that is configured to communicate with one or more display generation components and one or more input devices, comprising:
   means for performing the method of any of statements 1-30.
34. A computer program product, comprising one or more programs configured to be executed by one or more processors of a computer system that is in communication with one or more display generation components and one or more input devices, the one or more programs including instructions for performing the method of any of statements 1-30.
35. A non-transitory computer-readable storage medium storing one or more programs configured to be executed by one or more processors of a computer system that is in communication with one or more display generation components and one or more input devices, the one or more programs including instructions for:
   receiving, via the one or more input devices, a first user input; and
   in response to receiving the first user input:
      in accordance with a determination that generative emoji criteria are not met, displaying, via the one or more display generation components, a first set of preexisting emojis selected from a set of preexisting emojis based on the first user input; and
      in accordance with a determination that the generative emoji criteria are met, displaying, via the one or more display generation components, a first set of dynamically generated emojis that are generated in response to the first user input.
36. A computer system configured to communicate with one or more display generation components and one or more input devices, comprising:
   one or more processors; and
   memory storing one or more programs configured to be executed by the one or more processors, the one or more programs including instructions for:
      receiving, via the one or more input devices, a first user input; and
      in response to receiving the first user input:
         in accordance with a determination that generative emoji criteria are not met, displaying, via the one or more display generation components, a first set of preexisting emojis selected from a set of preexisting emojis based on the first user input; and
         in accordance with a determination that the generative emoji criteria are met, displaying, via the one or more display generation components, a first set of dynamically generated emojis that are generated in response to the first user input.
37. A computer system configured to communicate with one or more display generation components and one or more input devices, comprising:
   means for receiving, via the one or more input devices, a first user input; and
   means for, in response to receiving the first user input:
      in accordance with a determination that generative emoji criteria are not met, displaying, via the one or more display generation components, a first set of preexisting emojis selected from a set of preexisting emojis based on the first user input; and
      in accordance with a determination that the generative emoji criteria are met, displaying, via the one or more display generation components, a first set of dynamically generated emojis that are generated in response to the first user input.
38. A computer program product, comprising one or more programs configured to be executed by one or more processors of a computer system that is in communication with one or more display generation components and one or more input devices, the one or more programs including instructions for:
   receiving, via the one or more input devices, a first user input; and
   in response to receiving the first user input:
      in accordance with a determination that generative emoji criteria are not met, displaying, via the one or more display generation components, a first set of preexisting emojis selected from a set of preexisting emojis based on the first user input; and
      in accordance with a determination that the generative emoji criteria are met, displaying, via the one or more display generation components, a first set of dynamically generated emojis that are generated in response to the first user input.
39. A method, comprising:
   at a computer system that is in communication with one or more display generation components and one or more input devices:
   receiving, via the one or more input devices, a first user input;
   in response to receiving the first user input, displaying, via the one or more display generation components, a first set of dynamically generated emojis that are generated in response to the first user input, including a first dynamically generated emoji that is generated in response to the first user input;
   while displaying the first set of dynamically generated emojis including the first dynamically generated emoji, receiving, via the one or more input devices, a second user input corresponding to selection of the first dynamically generated emoji;
   in response to receiving the second user input corresponding to selection of the first dynamically generated emoji, causing the first dynamically generated emoji to be added to an emoji selection user interface that comprises a plurality of emojis for selection by a user;
   subsequent to receiving the second user input corresponding to selection of the first dynamically generated emoji, receiving, via the one or more input devices, a third user input corresponding to a user request to display the emoji selection user interface; and
   in response to receiving the third user input, displaying, via the one or more display generation components, the emoji selection user interface, wherein:
      the emoji selection user interface displays a plurality of non-dynamically generated emojis that were saved to the computer system and displayed in the emoji selection user interface prior to receiving the second user input in a first region of the emoji selection user interface, including a first preexisting emoji and a second preexisting emoji different from the first preexisting emoji; and
      the emoji selection user interface displays one or more dynamically generated emojis, including the first dynamically generated emoji, in a second region of the emoji selection user interface different from the first region, wherein the first dynamically generated emoji is displayed in the second region of the emoji selection user interface based on the second user input.
40. The method of statement 39, wherein the first user input includes one or more user inputs providing a text input.
41. The method of statement 40, wherein the first user input includes one or more user inputs entering text into a search field.
42. The method of statement 40, wherein the first user input includes one or more user inputs entering text into a text field.
43. The method of any of statements 39-42, wherein the first user input includes one or more spoken inputs.
44. The method of any of statements 39-43, further comprising:
   while displaying the emoji selection user interface, receiving, via the one or more input devices, a fourth user input; and
   in response to receiving the fourth user input:
      in accordance with a determination that the fourth user input includes movement in a first direction, displaying scrolling of the emoji selection user interface to display one or more additional non-dynamically generated emojis that were not displayed prior to receiving the fourth user input; and
      in accordance with a determination that the fourth user input includes movement in a second direction different from the first direction, displaying scrolling of the emoji selection user interface to display one or more additional dynamically generated emojis that were not displayed prior to receiving the fourth user input.
45. The method of any of statements 39-44, wherein displaying the emoji selection user interface comprises replacing display of a keyboard user interface with the emoji selection user interface.
46. The method of any of statements 39-45, wherein:
   the first set of dynamically generated emojis includes a second dynamically generated emoji different from the first dynamically generated emoji; and
   the second user input corresponds to selection of the first dynamically generated emoji without selecting the second dynamically generated emoji.
47. The method of statement 46, further comprising:
   in response to receiving the second user input corresponding to selection of the first dynamically generated emoji without selecting the second dynamically generated emoji, forgoing causing the second dynamically generated emoji to be added to the emoji selection user interface.
48. The method of any of statements 39-45, wherein:
   the first set of dynamically generated emojis includes a second dynamically generated emoji different from the first dynamically generated emoji; and
   the second user input causes the first dynamically generated emoji to be transmitted into a messaging session without transmitting the second dynamically generated emoji into the messaging session.
49. The method of statement 48, further comprising:
   in response to receiving the second user input that causes the first dynamically generated emoji to be transmitted into a messaging session without transmitting the second dynamically generated emoji into the messaging session, forgoing causing the second dynamically generated emoji to be added to the emoji selection user interface.
50. The method of any of statements 39-49, further comprising:
   while displaying the emoji selection user interface including displaying the first dynamically generated emoji within the second region of the emoji selection user interface, receiving, via the one or more input devices, a selection input corresponding to selection of the first dynamically generated emoji; and
   in response to receiving the selection input corresponding to selection of the first dynamically generated emoji, inserting the first dynamically generated emoji in line with a first set of text.
51. The method of any of statements 39-50, wherein the first set of dynamically generated emojis are generated in response to the first user input using one or more machine learning models.
52. The method of statement 51, wherein the machine learning model is trained based on a training set that includes at least some of the set of preexisting emojis.
53. The method of any of statements 51-52, wherein the machine learning model is configured to re-use one or more elements of one or more preexisting emojis of the set of preexisting emojis.
54. The method of any of statements 39-53, wherein displaying the first set of dynamically generated emojis comprises:
   in accordance with a determination that the first user input specifies a first person and that image data corresponding to the first person is available to the computer system, the first dynamically generated emoji is generated based on the image data corresponding to the first person.
55. A non-transitory computer-readable storage medium storing one or more programs configured to be executed by one or more processors of a computer system that is in communication with one or more display generation components and one or more input devices, the one or more programs including instructions for performing the method of any of statements 39-54.
56. A computer system that is configured to communicate with one or more display generation components and one or more input devices, the computer system comprising:
   one or more processors; and
   memory storing one or more programs configured to be executed by the one or more processors, the one or more programs including instructions for performing the method of any of statements 39-54.
57. A computer system that is configured to communicate with one or more display generation components and one or more input devices, comprising:
   means for performing the method of any of statements 39-54.
58. A computer program product, comprising one or more programs configured to be executed by one or more processors of a computer system that is in communication with one or more display generation components and one or more input devices, the one or more programs including instructions for performing the method of any of statements 39-54.
59. A non-transitory computer-readable storage medium storing one or more programs configured to be executed by one or more processors of a computer system that is in communication with one or more display generation components and one or more input devices, the one or more programs including instructions for:
   receiving, via the one or more input devices, a first user input;
   in response to receiving the first user input, displaying, via the one or more display generation components, a first set of dynamically generated emojis that are generated in response to the first user input, including a first dynamically generated emoji that is generated in response to the first user input;
   while displaying the first set of dynamically generated emojis including the first dynamically generated emoji, receiving, via the one or more input devices, a second user input corresponding to selection of the first dynamically generated emoji;
   in response to receiving the second user input corresponding to selection of the first dynamically generated emoji, causing the first dynamically generated emoji to be added to an emoji selection user interface that comprises a plurality of emojis for selection by a user;
   subsequent to receiving the second user input corresponding to selection of the first dynamically generated emoji, receiving, via the one or more input devices, a third user input corresponding to a user request to display the emoji selection user interface; and
   in response to receiving the third user input, displaying, via the one or more display generation components, the emoji selection user interface, wherein:
      the emoji selection user interface displays a plurality of non-dynamically generated emojis that were saved to the computer system and displayed in the emoji selection user interface prior to receiving the second user input in a first region of the emoji selection user interface, including a first preexisting emoji and a second preexisting emoji different from the first preexisting emoji; and
      the emoji selection user interface displays one or more dynamically generated emojis, including the first dynamically generated emoji, in a second region of the emoji selection user interface different from the first region, wherein the first dynamically generated emoji is displayed in the second region of the emoji selection user interface based on the second user input.
60. A computer system configured to communicate with one or more display generation components and one or more input devices, comprising:
   one or more processors; and
   memory storing one or more programs configured to be executed by the one or more processors, the one or more programs including instructions for:
      receiving, via the one or more input devices, a first user input;
      in response to receiving the first user input, displaying, via the one or more display generation components, a first set of dynamically generated emojis that are generated in response to the first user input, including a first dynamically generated emoji that is generated in response to the first user input;
      while displaying the first set of dynamically generated emojis including the first dynamically generated emoji, receiving, via the one or more input devices, a second user input corresponding to selection of the first dynamically generated emoji;
      in response to receiving the second user input corresponding to selection of the first dynamically generated emoji, causing the first dynamically generated emoji to be added to an emoji selection user interface that comprises a plurality of emojis for selection by a user;
      subsequent to receiving the second user input corresponding to selection of the first dynamically generated emoji, receiving, via the one or more input devices, a third user input corresponding to a user request to display the emoji selection user interface; and
      in response to receiving the third user input, displaying, via the one or more display generation components, the emoji selection user interface, wherein:
         the emoji selection user interface displays a plurality of non-dynamically generated emojis that were saved to the computer system and displayed in the emoji selection user interface prior to receiving the second user input in a first region of the emoji selection user interface, including a first preexisting emoji and a second preexisting emoji different from the first preexisting emoji; and
         the emoji selection user interface displays one or more dynamically generated emojis, including the first dynamically generated emoji, in a second region of the emoji selection user interface different from the first region, wherein the first dynamically generated emoji is displayed in the second region of the emoji selection user interface based on the second user input.
61. A computer system configured to communicate with one or more display generation components and one or more input devices, comprising:
   means for receiving, via the one or more input devices, a first user input;
   means for, in response to receiving the first user input, displaying, via the one or more display generation components, a first set of dynamically generated emojis that are generated in response to the first user input, including a first dynamically generated emoji that is generated in response to the first user input;
   means for, while displaying the first set of dynamically generated emojis including the first dynamically generated emoji, receiving, via the one or more input devices, a second user input corresponding to selection of the first dynamically generated emoji;
   means for, in response to receiving the second user input corresponding to selection of the first dynamically generated emoji, causing the first dynamically generated emoji to be added to an emoji selection user interface that comprises a plurality of emojis for selection by a user;
   means for, subsequent to receiving the second user input corresponding to selection of the first dynamically generated emoji, receiving, via the one or more input devices, a third user input corresponding to a user request to display the emoji selection user interface; and
   means for, in response to receiving the third user input, displaying, via the one or more display generation components, the emoji selection user interface, wherein:
      the emoji selection user interface displays a plurality of non-dynamically generated emojis that were saved to the computer system and displayed in the emoji selection user interface prior to receiving the second user input in a first region of the emoji selection user interface, including a first preexisting emoji and a second preexisting emoji different from the first preexisting emoji; and
      the emoji selection user interface displays one or more dynamically generated emojis, including the first dynamically generated emoji, in a second region of the emoji selection user interface different from the first region, wherein the first dynamically generated emoji is displayed in the second region of the emoji selection user interface based on the second user input.
62. A computer program product, comprising one or more programs configured to be executed by one or more processors of a computer system that is in communication with one or more display generation components and one or more input devices, the one or more programs including instructions for:
   receiving, via the one or more input devices, a first user input;
   in response to receiving the first user input, displaying, via the one or more display generation components, a first set of dynamically generated emojis that are generated in response to the first user input, including a first dynamically generated emoji that is generated in response to the first user input;
   while displaying the first set of dynamically generated emojis including the first dynamically generated emoji, receiving, via the one or more input devices, a second user input corresponding to selection of the first dynamically generated emoji;
   in response to receiving the second user input corresponding to selection of the first dynamically generated emoji, causing the first dynamically generated emoji to be added to an emoji selection user interface that comprises a plurality of emojis for selection by a user;
   subsequent to receiving the second user input corresponding to selection of the first dynamically generated emoji, receiving, via the one or more input devices, a third user input corresponding to a user request to display the emoji selection user interface; and
   in response to receiving the third user input, displaying, via the one or more display generation components, the emoji selection user interface, wherein:
      the emoji selection user interface displays a plurality of non-dynamically generated emojis that were saved to the computer system and displayed in the emoji selection user interface prior to receiving the second user input in a first region of the emoji selection user interface, including a first preexisting emoji and a second preexisting emoji different from the first preexisting emoji; and
      the emoji selection user interface displays one or more dynamically generated emojis, including the first dynamically generated emoji, in a second region of the emoji selection user interface different from the first region, wherein the first dynamically generated emoji is displayed in the second region of the emoji selection user interface based on the second user input.
63. A method, comprising:
   at a computer system that is in communication with one or more display generation components and one or more input devices:
   receiving, via the one or more input devices, a first user input, wherein the first user input includes a first description and identification of a first person; and
   in response to receiving the first user input:
      in accordance with a determination that first criteria are met, displaying, via the one or more display generation components, a first dynamically generated emoji that is generated in response to the first user input and based on the first description and the identification of the first person.
64. The method of statement 63, wherein the first user input comprises one or more user inputs via a keyboard.
65. The method of any of statements 63-64, wherein the first user input comprises one or more spoken inputs.
66. The method of any of statements 63-65, further comprising:
   in response to receiving the first user input:
   prior to displaying the first dynamically generated emoji that is generated in response to the first user input, displaying, via the one or more display generation components, one or more placeholder objects that are indicative of one or more emojis being generated in response to the first user input.
67. The method of any of statements 63-66, further comprising:
   in response to receiving the first user input, displaying, via the one or more display generation components, a visual representation of the first description.
68. The method of any of statements 63-67, further comprising:
   receiving, via the one or more input devices, a second user input, wherein the second user input includes a second description; and
   in response to receiving the second user input that includes the second description:
      in accordance with a determination that the second description satisfies person identification criteria, wherein the person identification criteria include a requirement that a received user input includes description of a respective person in order for the person identification criteria to be satisfied, displaying, via the one or more display generation components, one or more disambiguation options including a first disambiguation option that, when selected, initiates a process for identifying the respective person.
69. The method of statement 68, wherein:
   the second user input is part of the first user input;
   the second description is the first description; and
   the first user input further comprises a third user input corresponding to selection of the first disambiguation option.
70. The method of any of statements 68-69, further comprising:
   in response to receiving the second user input, displaying, via the one or more display generation components, a visual representation of the second description, including:
   in accordance with a determination that a first portion of the second description is descriptive of a respective person, displaying the first portion of the second description in a first manner; and
   in accordance with a determination that a second portion of the second description is not descriptive of a respective person, displaying the second portion of the second description in a second manner different from the first manner.
71. The method of any of statements 68-70, wherein the first disambiguation option includes a name of a first person.
72. The method of statement 71, wherein the first disambiguation option further includes a first photograph of the first person.
73. The method of any of statements 71-72, wherein:
   the one or more disambiguation options further include a second disambiguation option different from the first disambiguation option; and
   the second disambiguation option includes a name of a second person different from the first person.
74. The method of statement 73, wherein the second disambiguation option further includes a second photograph of the second person.
75. The method of any of statements 73-74, further comprising:
   while displaying the one or more disambiguation options, including the first disambiguation option and the second disambiguation option, receiving, via the one or more input devices, a selection input; and
   in response to receiving the selection input:
      in accordance with a determination that the selection input corresponds to selection of the first disambiguation option, displaying, via the one or more display generation components, a second dynamically generated emoji that is generated in response to the selection input and is generated based on the second description and image data corresponding to the first person; and
      in accordance with a determination that the selection input corresponds to selection of the second disambiguation option, displaying, via the one or more display generation components, a third dynamically generated emoji that is different from the second dynamically generated emoji, is generated in response to the selection input, and is generated based on the second description and image data corresponding to the second person.
76. The method of any of statements 68-75, wherein the first disambiguation option, when selected, initiates a process for identifying a person to be depicted in a dynamically generated emoji based on user selection of one or more photographs.
77. The method of statement 76, further comprising:
   while displaying the one or more disambiguation options, including the first disambiguation option, receiving, via the one or more input devices, a selection input corresponding to selection of the first disambiguation option; and
   in response to receiving the selection input corresponding to selection of the first disambiguation option:
      displaying, via the one or more display generation components, a photo selection user interface that includes a plurality of images depicting a plurality of different people, including:
      a first image depicting a first respective person; and
      a second image depicting a second respective person different from the first respective person.
78. The method of statement 77, further comprising:
   while displaying the photo selection user interface, receiving, via the one or more input devices, a second selection input; and
   in response to receiving the second selection input:
      in accordance with a determination that the second selection input corresponds to selection of the first image, displaying, via the one or more display generation components, a fourth dynamically generated emoji that is generated in response to the second selection input and is generated based on the second description and image data corresponding to the first respective person; and
      in accordance with a determination that the selection input corresponds to selection of the second image, displaying, via the one or more display generation components, a fifth dynamically generated emoji that is different from the fourth dynamically generated emoji, is generated in response to the second selection input, and is generated based on the second description and image data corresponding to the second respective person.
79. The method of any of statements 63-78, further comprising:
   while displaying the first dynamically generated emoji, receiving, via the one or more input devices, a selection input corresponding to selection of the first dynamically generated emoji; and
   in response to receiving the selection input corresponding to selection of the first dynamically generated emoji, inserting the first dynamically generated emoji in line with a first set of text.
80. A non-transitory computer-readable storage medium storing one or more programs configured to be executed by one or more processors of a computer system that is in communication with one or more display generation components and one or more input devices, the one or more programs including instructions for performing the method of any of statements 63-79.
81. A computer system that is configured to communicate with one or more display generation components and one or more input devices, the computer system comprising:
   one or more processors; and
   memory storing one or more programs configured to be executed by the one or more processors, the one or more programs including instructions for performing the method of any of statements 63-79.
82. A computer system that is configured to communicate with one or more display generation components and one or more input devices, comprising:
   means for performing the method of any of statements 63-79.
83. A computer program product, comprising one or more programs configured to be executed by one or more processors of a computer system that is in communication with one or more display generation components and one or more input devices, the one or more programs including instructions for performing the method of any of statements 63-79.
84. A non-transitory computer-readable storage medium storing one or more programs configured to be executed by one or more processors of a computer system that is in communication with one or more display generation components and one or more input devices, the one or more programs including instructions for:
   receiving, via the one or more input devices, a first user input, wherein the first user input includes a first description and identification of a first person; and
   in response to receiving the first user input:
      in accordance with a determination that first criteria are met, displaying, via the one or more display generation components, a first dynamically generated emoji that is generated in response to the first user input and based on the first description and the identification of the first person.
85. A computer system configured to communicate with one or more display generation components and one or more input devices, comprising:
   one or more processors; and
   memory storing one or more programs configured to be executed by the one or more processors, the one or more programs including instructions for:
      receiving, via the one or more input devices, a first user input, wherein the first user input includes a first description and identification of a first person; and
      in response to receiving the first user input:
         in accordance with a determination that first criteria are met, displaying, via the one or more display generation components, a first dynamically generated emoji that is generated in response to the first user input and based on the first description and the identification of the first person.
86. A computer system configured to communicate with one or more display generation components and one or more input devices, comprising:
   means for receiving, via the one or more input devices, a first user input, wherein the first user input includes a first description and identification of a first person; and
   means for, in response to receiving the first user input:
      in accordance with a determination that first criteria are met, displaying, via the one or more display generation components, a first dynamically generated emoji that is generated in response to the first user input and based on the first description and the identification of the first person.
87. A computer program product, comprising one or more programs configured to be executed by one or more processors of a computer system that is in communication with one or more display generation components and one or more input devices, the one or more programs including instructions for:
   receiving, via the one or more input devices, a first user input, wherein the first user input includes a first description and identification of a first person; and
   in response to receiving the first user input:
      in accordance with a determination that first criteria are met, displaying, via the one or more display generation components, a first dynamically generated emoji that is generated in response to the first user input and based on the first description and the identification of the first person.
88. A method, comprising:
   at a computer system that is in communication with one or more display generation components and one or more input devices:
   receiving, via the one or more input devices, a first user input; and
   in response to receiving the first user input:
      in accordance with a determination that generative emoji criteria are not met, displaying, via the one or more display generation components, a first set of preexisting emojis selected from a set of preexisting emojis based on the first user input; and
      in accordance with a determination that the generative emoji criteria are met, outputting a first prompt prompting a user of the computer system to generate one or more dynamically generated emojis that are generated based on the first user input.
89. The method of statement 88, further comprising:
   prior to receiving the first user input, displaying, via the one or more display generation components, a generative emoji option that, when selected, causes the computer system initiate a process for generating one or more dynamically generated emojis, wherein:
   outputting the first prompt prompting the user of the computer system to generate one or more dynamically generated emojis that are generated based on the first user input comprises displaying, via the one or more display generation components, a first visual prompt prompting the user to select the generative emoji option.
90. The method of statement 89, further comprising:
   while displaying the generative emoji option, receiving, via the one or more input devices, a selection input corresponding to selection of the generative emoji option; and
   in response to receiving the selection input corresponding to selection of the generative emoji option, displaying, via the one or more display generation components, a generative emoji user interface.
91. The method of statement 90, further comprising:
   prior to receiving the selection input corresponding to selection of the generative emoji option, receiving, via the one or more input devices, one or more user inputs specifying a first set of terms, wherein:
   displaying the generative emoji user interface comprises displaying, within the generative emoji user interface, a first set of one or more dynamically generated emojis that are generated based on the first set of terms, including a first dynamically generated emoji that is generated based on the first set of terms.
92. The method of statement 91, further comprising:
   in response to receiving the selection input corresponding to selection of the generative emoji option:
   prior to displaying the first set of one or more dynamically generated emojis that are generated based on the first set of terms, displaying, via the one or more display generation components and within the generative emoji user interface, one or more placeholder objects that are indicative of one or more emojis being dynamically generated.
93. The method of any of statements 91-92, further comprising:
   while displaying the first set of one or more dynamically generated emojis, receiving, via the one or more input devices, a selection input corresponding to selection of the first dynamically generated emoji; and
   in response to receiving the selection input corresponding to selection of the first dynamically generated emoji, inserting the first dynamically generated emoji in line with a first set of text.
94. The method of any of statements 91-92, further comprising:
   while displaying the first set of one or more dynamically generated emojis, receiving, via the one or more input devices, a selection input corresponding to selection of the first dynamically generated emoji; and
   in response to receiving the selection input corresponding to selection of the first dynamically generated emoji, inserting the first dynamically generated emoji as an image.
95. The method of any of statements 91-94, wherein displaying the first set of one or more dynamically generated emojis comprises:
   in accordance with a determination that the one or more user inputs specifying the first set of terms specifies a first respective set of terms, displaying, via the one or more display generation components, a first respective set of dynamically generated emojis that are generated in response to the first respective set of terms; and
   in accordance with a determination that the one or more user inputs specifying the first set of terms specifies a second respective set of terms different from the first respective set of terms, displaying, via the one or more display generation components, a second respective set of dynamically generated emojis that are generated in response to the second respective set of terms, wherein the second respective set of dynamically generated emojis is different from the first respective set of dynamically generated emojis.
96. The method of any of statements 91-95, wherein displaying the generative emoji user interface comprises:
   in accordance with a determination that the first dynamically generated emoji includes a first type of content, displaying, within the generative emoji user interface, a first option that, when selected, modifies a visual appearance of the first dynamically generated emoji; and
   in accordance with a determination that the first dynamically generated emoji does not include the first type of content, forgoing displaying the first option within the generative emoji user interface.
97. The method of statement 96, wherein:
   the determination that the first dynamically generated emoji includes a first type of content comprises a determination that the first dynamically generated emoji depicts at least one person including a first person; and
   the first option comprises a skin tone picker option that, when selected, modifies a skin tone color of the first person.
98. The method of statement 97, further comprising:
   while concurrently displaying the first dynamically generated emoji and the skin tone picker option, receiving, via the one or more input devices, a selection input corresponding to selection of the skin tone picker option;
   in response to receiving the selection input corresponding to selection of the skin tone picker option:
      displaying a skin tone of the first person changing from a first color to a second color different from the first color;
   subsequent to displaying the skin tone of the first person changing from the first color to the second color, receiving, via the one or more input devices, one or more user inputs specifying a second set of terms; and
   in response to receiving the one or more user inputs specifying the second set of terms, displaying, via the one or more display generation components and within the generative emoji user interface, a second dynamically generated emoji that is generated in response to the one or more user inputs specifying the second set of terms, wherein:
      the second dynamically generated emoji is different from the first dynamically generated emoji;
      the second dynamically generated emoji includes a second person; and
      the second person has a skin tone that is the second color based on user selection of the skin tone picker option that corresponds to the second color while the first dynamically generated emoji was displayed.
99. The method of any of statements 91-98, further comprising:
   displaying, within the generative emoji user interface and concurrently with the first dynamically generated emoji, a regenerate option;
   while concurrently displaying the first dynamically generated emoji and the regenerate option, receiving, via the one or more input devices, a selection input corresponding to selection of the regenerate option; and
   in response to receiving the selection input corresponding to selection of the regenerate option, replacing display of the first dynamically generated emoji with a third dynamically generated emoji different from the first dynamically generated emoji, wherein the third dynamically generated emoji is generated in response to the selection input corresponding to selection of the regenerate option and based on the first set of terms specified by the user.
100. The method of any of statements 91-99, wherein the first set of dynamically generated emojis are generated using one or more machine learning models.
101. The method of statement 100, wherein the machine learning model is trained based on a training set that includes at least some of the set of preexisting emojis.
102. The method of any of statements 100-101, wherein the machine learning model is configured to re-use one or more elements of one or more preexisting emojis of the set of preexisting emojis.
103. The method of any of statements 88-102, wherein:
   displaying the first set of dynamically generated emojis comprises:
   in accordance with a determination that the one or more user inputs specifying the first set of terms specifies a first person and that image data corresponding to the first person is available to the computer system, the first dynamically generated emoji is generated based on the image data corresponding to the first person.
104. The method of any of statements 90-103, wherein the generative emoji user interface includes a text entry field.
105. The method of any of statements 90-104, wherein:
   the first user input specifies one or more terms; and
   displaying the generative emoji user interface comprises:
      in accordance with a determination that a first set of criteria are met, wherein the first set of criteria include a content safety requirement that is not met when one or more terms provided by a user for dynamically generating emojis are determined to be inappropriate and the content safety requirement is required to be met in order for the first set of criteria to be met, displaying, within the generative emoji user interface, a set of one or more dynamically generated emojis that are generated based on the one or more terms specified by the first user input, including a third dynamically generated emoji that is generated based on the one or more terms specified by the first user input; and
      in accordance with a determination that the content safety requirement is not met, forgoing displaying the set of one or more dynamically generated emojis that are generated based on the one or more terms specified by the first user input.
106. The method of statement 105, wherein the content safety requirement is not met when the one or more terms provided by the user for dynamically generating emojis are determined to reference a celebrity.
107. The method of any of statements 105-106, wherein the content safety requirement is not met when the one or more terms provided by the user for dynamically generating emojis are determined to reference copyrighted material.
108. The method of any of statements 90-104, wherein:
   the first user input specifies one or more terms; and
   displaying the generative emoji user interface comprises:
      in accordance with a determination that a first set of criteria are met, wherein the first set of criteria include a content safety requirement that is not met when one or more terms provided by a user for dynamically generating emojis are determined to be inappropriate and the content safety requirement is required to be met in order for the first set of criteria to be met, displaying, within the generative emoji user interface, a set of one or more dynamically generated emojis that are generated based on the one or more terms specified by the first user input, including a third dynamically generated emoji that is generated based on the one or more terms specified by the first user input; and
      in accordance with a determination that a first subset of terms in the one or more terms specified by the first user input do not meet the content safety requirement and a second subset of terms in the one or more terms specified by the first user input do meet the content safety requirement, displaying, within the generative emoji user interface, an alternative set of one or more dynamically generated emojis that are different from the set of one or more dynamically generated emojis and are generated based on the second subset of terms in the one or more terms specified by the first user input, including a fourth dynamically generated emoji that is generated based on the second subset of terms.
109. The method of any of statements 90-108, wherein displaying the generative emoji user interface includes:
   in accordance with a determination that one or more search terms have been specified by a user when the selection input corresponding to selection of the generative emoji option is received, displaying one or more dynamically generated emojis that are generated based on the one or more search terms within the generative emoji user interface; and
   in accordance with a determination that no search terms have been specified by a user when the selection input corresponding to selection of the generative emoji option is received, displaying the generative emoji user interface without displaying any dynamically generated emojis within the generative emoji user interface.
110. The method of statement 109, wherein displaying the generative emoji user interface further includes:
   in accordance with a determination that one or more search terms have been specified by a user when the selection input corresponding to selection of the generative emoji option is received, displaying the one or more search terms within the generative emoji user interface; and
   in accordance with a determination that no search terms have been specified by a user when the selection input corresponding to selection of the generative emoji option is received, displaying, within the generative emoji user interface, one or more instructions prompting a user to specify one or more search terms.
111. The method of any of statements 88-110, wherein the first user input includes one or more user inputs providing a text input.
112. The method of statement 111**,** wherein the first user input includes one or more user inputs entering text into a search field.
113. The method of statement 111, wherein the first user input includes one or more user inputs entering text into a text field.
114. The method of any of statements 88-113, wherein the first user input includes one or more spoken inputs.
115. The method of any of statements 88-114, wherein the set of preexisting emojis includes a first emoji that was previously dynamically generated in response to a user input prior to receiving the first user input.
116. The method of any of statements 88-115, wherein:
   the first user input specifies one or more search terms; and
   the generative emoji criteria include a requirement that fewer than a threshold number of preexisting emojis in the set of preexisting emojis are determined to be responsive to the one or more search terms in order for the generative emoji criteria to be met.
117. A non-transitory computer-readable storage medium storing one or more programs configured to be executed by one or more processors of a computer system that is in communication with one or more display generation components and one or more input devices, the one or more programs including instructions for performing the method of any of statements 88-116.
118. A computer system that is configured to communicate with one or more display generation components and one or more input devices, the computer system comprising:
   one or more processors; and
   memory storing one or more programs configured to be executed by the one or more processors, the one or more programs including instructions for performing the method of any of statements 88-116.
119. A computer system that is configured to communicate with one or more display generation components and one or more input devices, comprising:
   means for performing the method of any of statements 88-116.
120. A computer program product, comprising one or more programs configured to be executed by one or more processors of a computer system that is in communication with one or more display generation components and one or more input devices, the one or more programs including instructions for performing the method of any of statements 88-116.
121. A non-transitory computer-readable storage medium storing one or more programs configured to be executed by one or more processors of a computer system that is in communication with one or more display generation components and one or more input devices, the one or more programs including instructions for:
   receiving, via the one or more input devices, a first user input; and
   in response to receiving the first user input:
      in accordance with a determination that generative emoji criteria are not met, displaying, via the one or more display generation components, a first set of preexisting emojis selected from a set of preexisting emojis based on the first user input; and
      in accordance with a determination that the generative emoji criteria are met, outputting a first prompt prompting a user of the computer system to generate one or more dynamically generated emojis that are generated based on the first user input.
122. A computer system configured to communicate with one or more display generation components and one or more input devices, comprising:
   one or more processors; and
   memory storing one or more programs configured to be executed by the one or more processors, the one or more programs including instructions for:
      receiving, via the one or more input devices, a first user input; and
      in response to receiving the first user input:
         in accordance with a determination that generative emoji criteria are not met, displaying, via the one or more display generation components, a first set of preexisting emojis selected from a set of preexisting emojis based on the first user input; and
         in accordance with a determination that the generative emoji criteria are met, outputting a first prompt prompting a user of the computer system to generate one or more dynamically generated emojis that are generated based on the first user input.
123. A computer system configured to communicate with one or more display generation components and one or more input devices, comprising:
   means for receiving, via the one or more input devices, a first user input; and
   means for, in response to receiving the first user input:
      in accordance with a determination that generative emoji criteria are not met, displaying, via the one or more display generation components, a first set of preexisting emojis selected from a set of preexisting emojis based on the first user input; and
      in accordance with a determination that the generative emoji criteria are met, outputting a first prompt prompting a user of the computer system to generate one or more dynamically generated emojis that are generated based on the first user input.
124. A computer program product, comprising one or more programs configured to be executed by one or more processors of a computer system that is in communication with one or more display generation components and one or more input devices, the one or more programs including instructions for:
   receiving, via the one or more input devices, a first user input; and
   in response to receiving the first user input:
      in accordance with a determination that generative emoji criteria are not met, displaying, via the one or more display generation components, a first set of preexisting emojis selected from a set of preexisting emojis based on the first user input; and
      in accordance with a determination that the generative emoji criteria are met, outputting a first prompt prompting a user of the computer system to generate one or more dynamically generated emojis that are generated based on the first user input.

## Claims

1. A method, comprising:
at a computer system that is in communication with one or more display generation components and one or more input devices:
receiving, via the one or more input devices, a first user input; and
in response to receiving the first user input:
in accordance with a determination that generative emoji criteria are not met, displaying, via the one or more display generation components, a first set of preexisting emojis selected from a set of preexisting emojis based on the first user input; and
in accordance with a determination that the generative emoji criteria are met, outputting a first prompt prompting a user of the computer system to generate one or more dynamically generated emojis that are generated based on the first user input.

2. The method of claim 1, further comprising:
prior to receiving the first user input, displaying, via the one or more display generation components, a generative emoji option that, when selected, causes the computer system initiate a process for generating one or more dynamically generated emojis, wherein:
outputting the first prompt prompting the user of the computer system to generate one or more dynamically generated emojis that are generated based on the first user input comprises displaying, via the one or more display generation components, a first visual prompt prompting the user to select the generative emoji option.

3. The method of claim 2, further comprising:
while displaying the generative emoji option, receiving, via the one or more input devices, a selection input corresponding to selection of the generative emoji option; and
in response to receiving the selection input corresponding to selection of the generative emoji option, displaying, via the one or more display generation components, a generative emoji user interface.

4. The method of claim 3, further comprising:
prior to receiving the selection input corresponding to selection of the generative emoji option, receiving, via the one or more input devices, one or more user inputs specifying a first set of terms, wherein:
displaying the generative emoji user interface comprises displaying, within the generative emoji user interface, a first set of one or more dynamically generated emojis that are generated based on the first set of terms, including a first dynamically generated emoji that is generated based on the first set of terms.

5. The method of claim 4, wherein displaying the first set of one or more dynamically generated emojis comprises:
in accordance with a determination that the one or more user inputs specifying the first set of terms specifies a first respective set of terms, displaying, via the one or more display generation components, a first respective set of dynamically generated emojis that are generated in response to the first respective set of terms; and
in accordance with a determination that the one or more user inputs specifying the first set of terms specifies a second respective set of terms different from the first respective set of terms, displaying, via the one or more display generation components, a second respective set of dynamically generated emojis that are generated in response to the second respective set of terms, wherein the second respective set of dynamically generated emojis is different from the first respective set of dynamically generated emojis.

6. The method of any of claim 4 or 5, further comprising:
displaying, within the generative emoji user interface and concurrently with the first dynamically generated emoji, a regenerate option;
while concurrently displaying the first dynamically generated emoji and the regenerate option, receiving, via the one or more input devices, a selection input corresponding to selection of the regenerate option; and
in response to receiving the selection input corresponding to selection of the regenerate option, replacing display of the first dynamically generated emoji with a third dynamically generated emoji different from the first dynamically generated emoji, wherein the third dynamically generated emoji is generated in response to the selection input corresponding to selection of the regenerate option and based on the first set of terms specified by the user.

7. The method of any of claims 4 to 6, wherein the first set of dynamically generated emojis are generated using one or more machine learning models.

8. The method of any of claims 3 to 7, wherein:
the first user input specifies one or more terms; and
displaying the generative emoji user interface comprises:
in accordance with a determination that a first set of criteria are met, wherein the first set of criteria include a content safety requirement that is not met when one or more terms provided by a user for dynamically generating emojis are determined to be inappropriate and the content safety requirement is required to be met in order for the first set of criteria to be met, displaying, within the generative emoji user interface, a set of one or more dynamically generated emojis that are generated based on the one or more terms specified by the first user input, including a third dynamically generated emoji that is generated based on the one or more terms specified by the first user input; and
in accordance with a determination that the content safety requirement is not met, forgoing displaying the set of one or more dynamically generated emojis that are generated based on the one or more terms specified by the first user input.

9. The method of any of any preceding claim, wherein:
displaying the first set of dynamically generated emojis comprises:
in accordance with a determination that the one or more user inputs specifying the first set of terms specifies a first person and that image data corresponding to the first person is available to the computer system, the first dynamically generated emoji is generated based on the image data corresponding to the first person.

10. The method of any of any preceding claim, wherein the first user input includes one or more user inputs providing a text input.

11. The method of any of any preceding claim, wherein the first user input includes one or more spoken inputs.

12. The method of any of any preceding claim, wherein the set of preexisting emojis includes a first emoji that was previously dynamically generated in response to a user input prior to receiving the first user input.

13. The method of any of any preceding claim, wherein:
the first user input specifies one or more search terms; and
the generative emoji criteria include a requirement that fewer than a threshold number of preexisting emojis in the set of preexisting emojis are determined to be responsive to the one or more search terms in order for the generative emoji criteria to be met.

14. A computer-readable medium comprising one or more programs configured to be executed by one or more processors of a computer system that is in communication with one or more display generation components and one or more input devices, the one or more programs including instructions for performing the method of any preceding claim.

15. A computer system that is configured to communicate with one or more display generation components and one or more input devices, the computer system comprising:
one or more processors; and
memory storing one or more programs configured to be executed by the one or more processors, the one or more programs including instructions for performing the method of any of claims 1 to 14.
